# EUROPEAN PATENT APPLICATION

(11) **EP 4 498 091 A1**
(43) Date of publication of application: **29.01.2025**
(21) Application number: 24190597.5
(22) Date of filing: 24.07.2024
(51) Int. Cl.: G01N 35/00, G01N 1/28

(54) **SAMPLE MEASUREMENT SYSTEM AND REAGENT SUPPLY APPARATUS**

(30) Priority: 25.07.2023 JP 2023121060
(71) Applicant: SYSMEX CORPORATION, Kobe-shi Hyogo 651-0073 (JP)
(72) Inventor: SHIOMI, Taro, Kobe-shi, Hyogo, 651-0073 (JP); SUGANUMA, Toshikuni, Kobe-shi, Hyogo, 651-0073 (JP); HAMADA, Yuuichi, Kobe-shi, Hyogo, 651-0073 (JP)
(74) Representative: Hoffmann Eitle

(57) **Abstract**

A sample measurement system includes sample measurement devices that measures samples using a first reagent and a second reagent, and a reagent supply apparatus, which includes a first piping connected to reagent containers of a first reagent container group, a first reagent reservoir that stores the first reagent transferred through the first piping, a second piping connected to reagent containers of a second reagent container group, and a second reagent reservoir that stores the second reagent transferred through the second piping. The first reagent stored in the first reagent reservoir is supplied to each of the sample measurement devices. The second reagent stored in the second reagent reservoir is supplied to each of the sample measurement devices.

## Description

### TECHNICAL FIELD

This invention relates to a sample measurement system and a reagent supply apparatus.

In the measurement of blood, urine, and other samples, reagents are used to measure samples. If the reagent runs out during sample measurement, the sample measurement cannot be continued. Therefore, when the reagent runs out, the user replaces the empty reagent container with a new reagent container. For example, Japanese translation of PCT International publication (Kohyo) No. 2009-511818 (Patent Document 1) discloses a reagent station including a plurality of liquid containers, a buffer chamber connected to the plurality of liquid containers, and a supply chamber connected to the buffer chamber and vented.

The system disclosed in Patent Document 1 uses a reagent station including a plurality of liquid containers of a single type, making it hardly run out of reagents during measurement. However, the system disclosed in Patent Document 1 does not consider the user burden of reagent replacement in large-scale facilities (e.g., hospitals with specific functions and laboratory centers) where large quantities of multiple types of reagents are consumed.

The object of this invention is to provide a sample measurement system and reagent supply apparatus that may reduce the user burden of reagent replacement in a large-scale facility.

### SUMMARY

A sample measurement system (1) includes a reagent supply apparatus (50) including a plurality of sample measurement devices (32-L, 32-R) for measuring samples using a first reagent and a second reagent of a different type from the first reagent, a first piping (210) connected to each of a plurality of first reagent containers (60) in which the first reagent is stored, a first reagent reservoir (201) for storing the first reagent transferred via the first piping (210), and a second piping (210) connected to each of a plurality of second reagent containers (60) in which the second reagent is stored, a second reagent reservoir (201) for storing the second reagent transferred via the second piping (210). The first reagent stored in the first reagent reservoir (201) is supplied to each of the plurality of sample measurement devices (32-L, 32-R), and the second reagent stored in the second reagent reservoir (201) is supplied to each of the plurality of sample measurement devices (32-L, 32-R).

According to the sample measurement system, when each type of reagent container runs out of reagent, the reagent may be supplied from the first or second reagent reservoir for a while, and the user does not have to immediately replace the reagent, and the reagent container that has run out may be replaced with a new one at a time convenient to the user. This reduces the user's monitoring burden for reagent replacement and the frequency of reagent replacement. Thus, the user's burden of reagent replacement in large facilities may be reduced.

The sample measurement system (1) of the present invention comprises a sample measurement device (32-L, 32-R) for measuring samples using reagents, a piping (210) with a plurality of flow paths (211-218, 214a, 214b) connected to each of a plurality of reagent containers (60) in which reagents are contained, a reagent reservoir (201) for storing reagents transferred through the piping (210) and contained in each of a plurality of reagent containers (60), the reagent transfer section (241, 242, 251, 252, 253) which is used to transfer reagent from one reagent container (60) that has been emptied in a plurality of flow paths (211-218, 214a, 214b), and to store reagent in a flow path that is not used to transfer reagent from another reagent container (60) that has not been emptied. The reagent stored in the reagent reservoir (201) is supplied to the sample measurement devices (32-L, 32-R).

According to the sample measurement system, reagents are stored in the flow path leading to the empty reagent container, which prevents precipitation and clogging of the composition in the piping.

The reagent supply apparatus (50) of the present invention comprises a first piping (210) connected to each of a plurality of first reagent containers (60) in which a first reagent is contained, a first reagent reservoir (201) storing a first reagent transferred via the first piping (210) and stored in each of a plurality of first reagent containers (60), a second piping (210) connected to each of a plurality of second reagent containers (60) in which a second reagent of a different type from the first reagent is contained, and a second reagent reservoir (201) to store the second reagent transferred via the second piping (210) and contained in each of the plurality of second reagent containers (60). The first reagent stored in the first reagent reservoir (201) is supplied to each of the plurality of sample measurement devices (32-L, 32-R), and the second reagent stored in the second reagent reservoir (201) is supplied to each of the plurality of sample measurement devices (32-L, 32-R).

The reagent supply apparatus includes a first reagent reservoir that stores first reagents from a plurality of first reagent containers and a second reagent reservoir that stores second reagents from a plurality of second reagent containers, and the first reagents from the first reagent reservoir and the second reagents from the second reagent reservoir are supplied to the plurality of sample measurement devices. This allows the user to replace the reagent containers that have run out of reagent with new reagent containers at a time convenient to the user, without having to immediately replace the reagent when each type of reagent container runs out of reagent. This reduces the user's monitoring burden for reagent replacement and the frequency of reagent replacement. Thus, the user's burden of reagent replacement in large facilities may be reduced.

The reagent supply apparatus (50) of the present invention comprises a piping (210) with a plurality of flow paths (211-218, 214a, 214b) connected to each of a plurality of reagent containers (60) in which reagents are contained, a reagent reservoir (201) for storing reagents transferred through the piping (210) and contained in each of a plurality of reagent containers (60), the reagent transfer section (241, 242, 251, 252, 253) which is used to transfer reagent from one reagent container (60) that has been emptied in a plurality of flow paths (211-218, 214a, 214b), and to store reagent in a flow path that is not used to transfer reagent from another reagent container (60) that has not been emptied. The reagent stored in the reagent reservoir (201) is supplied to the sample measurement devices (32-L, 32-R).

According to the reagent supply apparatus, the reagent is stored in the flow path leading to the empty reagent container, which prevents precipitation and clogging of the composition in the piping.

The present invention reduces the user burden of reagent replacement in large facilities.

### BRIEF DESCRIPTION OF DRAWINGS

FIG. 1 is a schematic diagram illustrating a first embodiment of the sample measurement system according to a first embodiment.
FIG. 2 is a diagram illustrating a rack and container according to a first embodiment.
FIG. 3 is a diagram illustrating a schematic plan view of a configuration of a communication connections of each device in a sample measurement system and a transfer path of a racks, according to a first embodiment.
FIG. 4 is a diagram illustrating a schematic front view of a first embodiment, showing four sample analyzers, four storage compartments, and configurations located in storage compartments.
FIG. 5 is a fluid circuit diagram schematically illustrating a transfer paths of reagents and pure water according to a first embodiment.
FIG. 6 is a diagram schematically illustrating a front view of a configuration of a reagent supply apparatus according to a first embodiment.
FIG. 7 is a diagram schematically illustrating a fluid circuit of a reagent supply and relay device, according to a first embodiment.
FIG. 8 is a diagram illustrating a transfer operation of reagent from reagent container RC1 to a reagent reservoir according to a first embodiment.
FIG. 9 is a diagram illustrating a transfer operation of reagent from reagent container RC2 to a reagent reservoir according to a first embodiment.
FIG. 10 is a diagram illustrating a storage operation of a first embodiment when a reagent container RC1 runs out of reagent.
FIG. 11 is a diagram illustrating a storage operation of a first embodiment when a reagent container RC2 runs out of reagent.
FIG. 12 is a diagram illustrating a storage operation performed for an entire piping system according to a first embodiment.
FIG. 13 is a diagram illustrating a transfer operation of reagents by a relay configuration of a relay device, according to a first embodiment.
FIG. 14 is a diagram schematically illustrating a screen displayed on an input display of a control device C1 according to a first embodiment.
FIG. 15 is a diagram schematically illustrating a contents of a display in a reagent information area during a replacement of reagent containers, according to a first embodiment.
FIG. 16 is a diagram schematically illustrating a screen displayed in an input display of a control device C2 according to a first embodiment.
FIG. 17 is a diagram schematically illustrating a screen displayed on an input display of control device C1 when one of a two pairs of reagent containers runs out of reagent, according to a first embodiment.
FIG. 18 is a diagram schematically illustrating a screen displayed in a input display of control device C1 when both of two paired reagent containers run out of reagent, according to a first embodiment.
FIG. 19 is a diagram schematically illustrating a screen displayed in an input display of controller C2 when both of two paired reagent containers run out of reagent, according to a first embodiment.
FIG. 20 is a diagram schematically illustrating a contents of a screen displayed in a input display of control device C1 when a remaining reagent level in two paired reagent containers is low, according to a first embodiment.
FIG. 21 is a block diagram illustrating a functional configuration of a sample analyzer and reagent supply apparatus according to a first embodiment.
FIG. 22 is a block diagram illustrating a functional configuration of a smear preparing device and a feeding device in a first embodiment.
FIG. 23 is a flowchart illustrating a process related to an activation and termination by a control device of A feeding device, according to the first embodiment.
FIG. 24 is a flowchart illustrating a process related to activation by controllers of control device C1 and C2 according to a first embodiment.
FIG. 25 is a flowchart illustrating a process related to termination by controllers of control device C1 and C2 according to a first embodiment.
FIG. 26 is a flowchart illustrating a process related to measurement by controllers of control device C1 and C2 according to a first embodiment.
FIG. 27 is a flowchart illustrating a process related to a reagent supply apparatus by a controller of control device C1 according to a first embodiment.
FIG. 28 is a flowchart illustrating a process of stopping process based on running out of reagent by a controller of control device C2, according to a first embodiment.
FIG. 29 is a flowchart illustrating a display process for reagent replacement by a controller of a control device C1 according to a first embodiment.
FIG. 30 is a flowchart of a warning display process for reagent replacement by a controller of control device C1 according to a first embodiment.
FIG. 31 is a flowchart illustrating a process of start-up and shutdown operations of a reagent supply apparatus by a controller of a control device C1, according to a first embodiment.
FIG. 32 is a diagram schematically illustrating a fluid circuit of a reagent supply apparatus, according to a second embodiment.
FIG. 33 is a diagram illustrating a storage operation when a reagent container RC1 runs out of reagent, according to a second embodiment.
FIG. 34 is a diagram schematically illustrating a front view of a configuration of a sample measurement system, according to a third embodiment.
FIG. 35 is a flowchart illustrating a process of turning on a warning light by a controller of a control device C1, according to a third embodiment.
FIG. 36 is a diagram schematically illustrating a front view of a configuration of a sample measurement system when a warning light is controlled to turn on in a first notification example, according to a third embodiment.
FIG. 37 is a diagram schematically illustrating a front view of a configuration of a sample measurement system when a warning light is controlled to turn on in a second notification example, according to a third embodiment.
FIG. 38 is a diagram schematically illustrating a front view of a configuration of a reagent supply apparatus, according to a fourth embodiment.
FIG. 39 is a schematic diagram illustrating a sample processing system, according to a fifth embodiment.
FIG. 40 is a fluid circuit diagram schematically illustrating a transfer paths of reagents and pure water, according to a fifth embodiment.

### DETAILED DESCRIPTION

### <First embodiment>

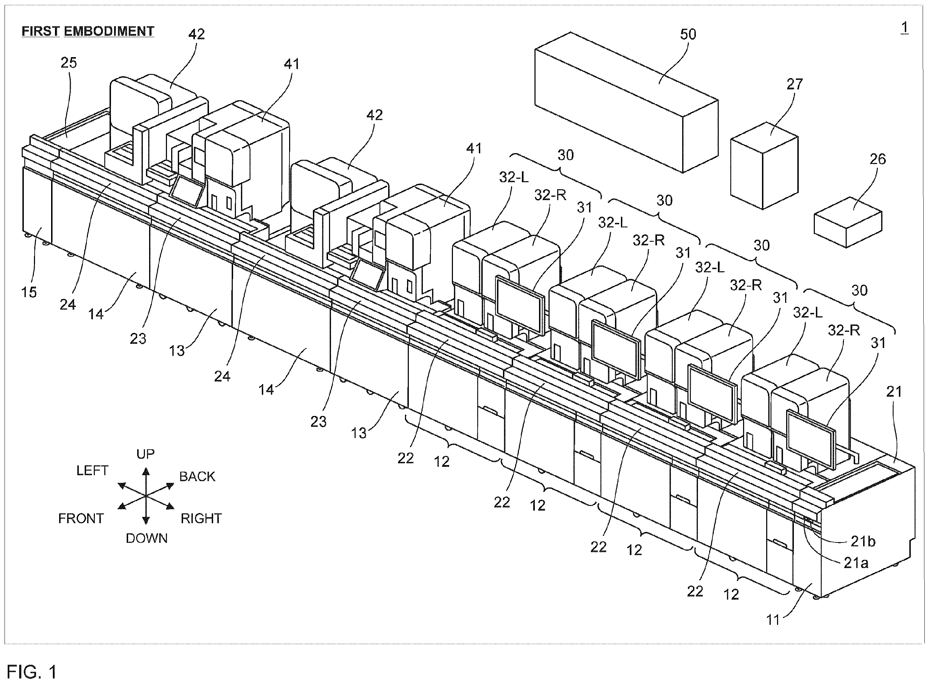

FIG. 1 is a schematic diagram of the sample measurement system 1.

FIG. 1 shows the front, back, left, right, up, and down directions. The left direction is the downstream direction of the sample measurement system 1, and the right direction is the upstream direction of the sample measurement system 1. The user accesses the sample measurement system 1 from the front side.

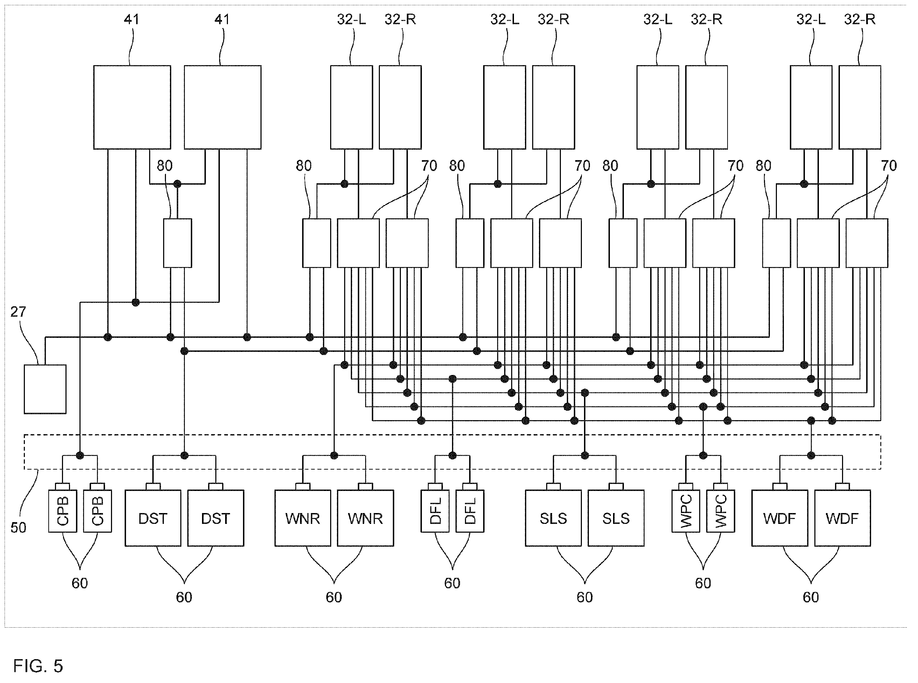

The sample measurement system 1 is a system for measuring and processing samples. The samples may include whole blood collected from an examinee. The sample measurement system 1 includes a storage 11, four storages 12, two storages 13, two storages 14, a storage 15, a feeding device 21, four transport devices 22, two transport devices 23, two transport devices 24, a collection device 25, a transport controller 26, a pure water device 27, four sample analyzers 30, two smear preparing devices 41, two imaging device 42, and a reagent supply apparatus 50. In addition, the sample measurement system 1 may also include ten relay devices 70 and five dilution devices 80, as described below with reference to FIG. 5.

A storage 11, four storages 12, two storages 13, two storages 14, and storage 15 are wagons that may store items inside. Each storage is arranged in a straight line adjacent to each other in the left and right directions. The feeding device 21 is located above the storage 11, the transport devices 22, 23, and 24 are located above the storages 12, 13, and 14, respectively, the collection device 25 is located above the storage 15, sample analyzer 30 is located above the storage 12, smear preparing device 41 and imaging device 42 are located in the upper part of the storages 13 and 14, respectively. Transport controller 26, the pure water device 27, and reagent supply apparatus 50 are located behind the storages 11-15.

Feeding device 21, transport devices 22, 23, 24, and collection device 25 are devices that transport racks 100 holding sample containers 110.

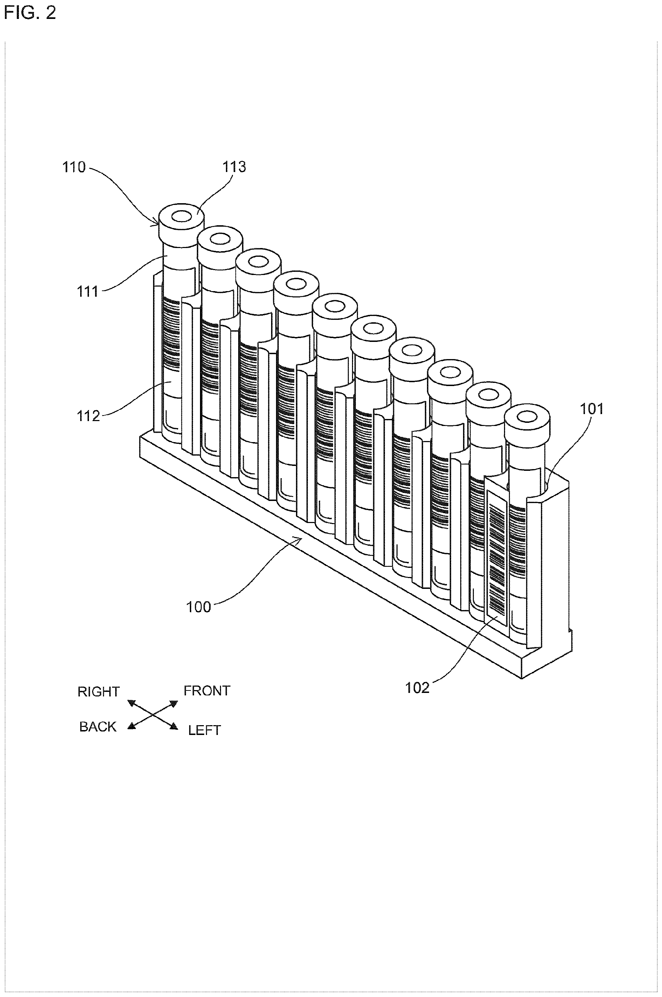

FIG. 2 shows a diagram of the rack 100 and sample container 110.

The rack 100 includes ten holes 101 that may hold sample containers 110 and a barcode label 102. The barcode label 102 is affixed to the rear side of the rack 100. The barcode label 102 is printed with a barcode indicating a rack ID as identification information that may identify the rack 100 individually.

Sample container 110 includes a body 111, a barcode label 112, and a lid 113. The body 111 is a tubular container with an open top end and contains samples inside. The body 111 is a tubular container with an open upper end and stores a sample inside. The barcode label 112 is attached to the side of the body 111. The barcode label 112 is printed with a barcode indicating a sample ID as identification information that may be used to identify individual samples inside. The lid 113 is placed at the top end of the body 111 to seal the inside of the body 111.

In FIG. 1, the rack 100 placed on the feeding device 21 by the user is transported by the transport devices 22-24 to the sample measurement device 32-L, 32-R and smear preparing device 41, and finally collected by the collection device 25.

Sample analyzer 30 includes control device 31, sample measurement device 32-L, and sample measurement device 32-R. The sample measurement devices 32-L and 32-R are arranged side by side on the left and right and have the same configuration as each other. The sample measurement devices 32-L and 32-R are blood cell measurement devices that measure blood cell components in samples and generate measurement data. The control device 31 is a blood cell counter that counts blood cells in the sample based on the measurement data obtained by the sample measurement devices 32-L and 32-R.

Smear preparing device 41 is a device for preparing smears from samples. A mechanism for transferring smears is provided between smear preparing device 41 and imaging device 42, and the smears prepared by smear preparing device 41 are transferred to imaging device 42 via the mechanism. The imaging device 42 is a device for imaging the smear prepared by the smear preparing device 41.

The feeding device 21 has an activation button 21a to start the sample measurement system 1 and an end button 21b to end the sample measurement system 1.

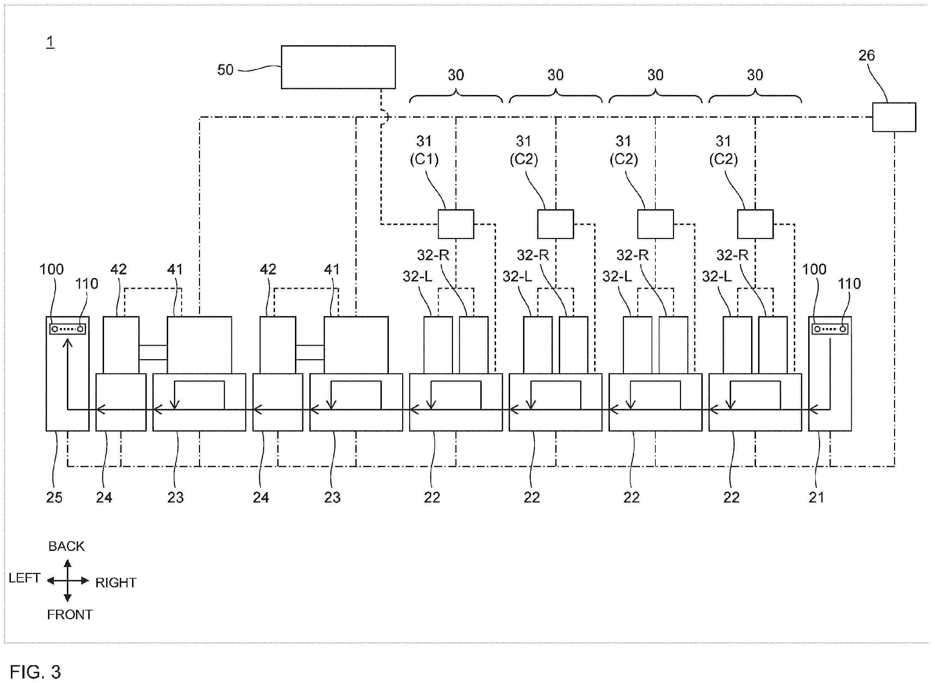

FIG. 3 is a schematic plan view of the configuration of the communication connections of each device in the sample measurement system 1 and the transfer path of the rack 100.

In FIG. 3, communication cables for communication connections are shown as single-dotted and dashed lines for convenience. The single-dotted line may be a communication cable based on the Ethernet standard, and the dashed line may be a communication cable based on the USB standard.

Control device 31, smear preparing device 41 and the transport controller 26 are connected to each other communicatively based on the Ethernet standard. The feeding device 21 and the transport device 22-24 and the collection device 25 are connected so as to communicate with each other based on an Ethernet standard. One control device 31 is connected to two corresponding sample measurement devices 32-L, 32-R and one transport device 22 so as to communicate based on the USB standard.

Of the four sample analyzers 30, the control device 31 of the sample analyzer 30 located on the leftmost side and the reagent supply apparatus 50 are connected to communicate with each other based on the USB standard. For convenience, the control device 31 to which the reagent supply apparatus 50 is connected is hereinafter referred to as "control device C1," and the three control devices other than control device C1 are referred to as "control devices C2" respectively.

The transfer route of the rack 100 placed on the feeding device 21 (solid arrows in FIG. 3) is selected based on the measurement orders set for the samples. As a result, the rack 100 holding the sample container 110 is transported to the sample measurement device 32-L and 32-R by the transport device 22, to the smear preparing device 41 by the transport device 23, and finally to the collection device 25.

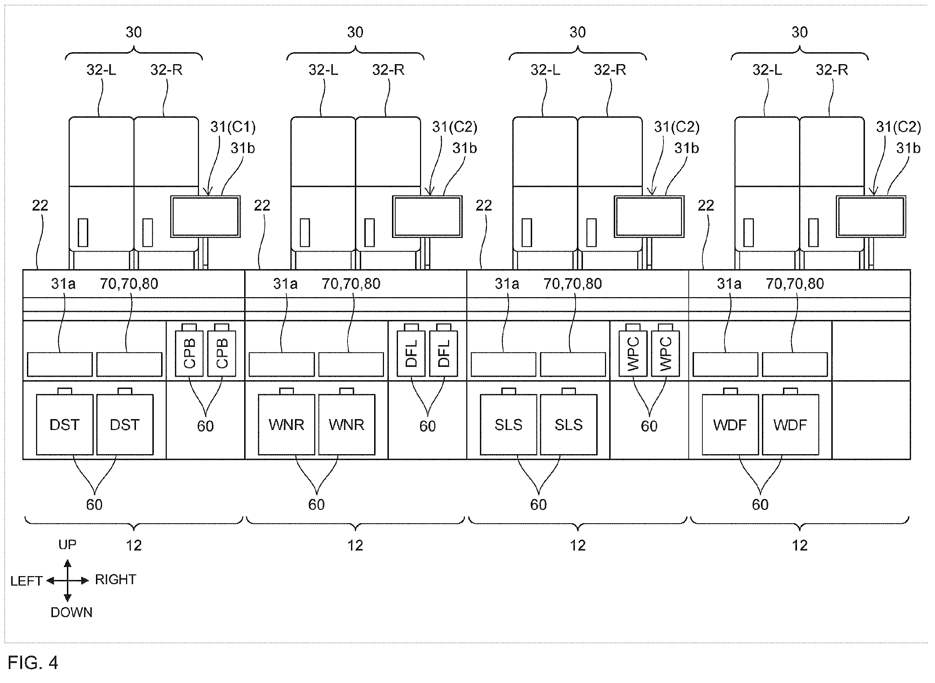

FIG. 4 is a schematic front view of the four sample analyzers 30, the four storages 12, and the configurations located within the storage 12. In FIG. 4, the inside of the storage 12 is shown in perspective for convenience.

The control device 31 includes a main unit 31a and an input display 31b. The main unit 31a is located in the storage 12, and the input display 31b is located above the transport device 22. The input display 31b may be, for example, a touch panel display.

Each storage 12 internally houses one main unit 31a, a plurality of reagent containers 60, two relay device 70, and one dilution device 80. The storage 12 is configured to open and close forward, allowing the user to open the front of the storage 12 and replace the reagent containers 60 inside. In the first embodiment, a total of 14 reagent containers 60 of seven different types are arranged in the four storages 12 for use in the sample measurement devices 32-L and 32-R and the smear preparing device 41 for processing.

Specifically, within the four storages 12, there are two reagent containers 60 containing concentrated phosphate buffer (hereinafter referred to as "DPB reagent"), two reagent containers 60 containing Cellpack (registered trademark) DST (hereinafter referred to as "DST reagent"), two reagent containers 60 containing Lysercell (registered trademark) WNR (hereinafter referred to as "WNR reagent"), two reagent containers 60 containing Cellpack (registered trademark) DFL (hereinafter referred to as "DFL reagent"), two reagent containers 60 containing Sulfolyser (registered trademark) (hereinafter referred to as "SLS reagent"), two reagent containers 60 containing Lysercell (registered trademark) WPC (hereinafter referred to as "WPC reagent"), and two reagent containers 60 containing Lysercell (registered trademark) WDF II (hereinafter referred to as "WDF reagent") are arranged.

The 14 reagent containers 60 are connected to the reagent supply apparatus 50 so that the reagents inside may be pumped to and from the reagent supply apparatus 50 (see FIG. 1). In addition, each relay device 70 is connected to the reagent supply apparatus 50 and the sample measurement devices 32-L and 32-R so that the relay device 70 may receive reagents from the reagent supply apparatus 50 and transfer the received reagents to the corresponding sample measurement devices 32-L and 32-R. Each dilution device 80 accepts reagents from the reagent supply apparatus 50 and pure water from the pure water device 27, and is connected to the reagent supply apparatus 50, the sample measurement devices 32-L, 32-R, and the pure water device 27 so that the accepted reagents and pure water may be transferred to the corresponding sample measurement devices 32-L, 32-R.

The two storages 13 (see FIG. 1), where the two smear preparing devices 41 are installed, contain one dilution device 80 inside. The sample measurement devices 32-L and 32-R contain five reagent containers inside, each containing five different staining solutions.

The sample measurement devices 32-L and 32-R measure samples using the WNR reagent, the DFL reagent, the SLS reagent, the WPC reagent, the WDF reagent, the DST reagent diluted in pure water, and five different staining solutions as appropriate. The smear preparing device 41 uses The DPB reagent, the DST reagent diluted in pure water, pure water, and staining solutions to prepare smears.

FIG. 5 is a fluid circuit diagram schematically showing the routes for transferring reagents and pure water.

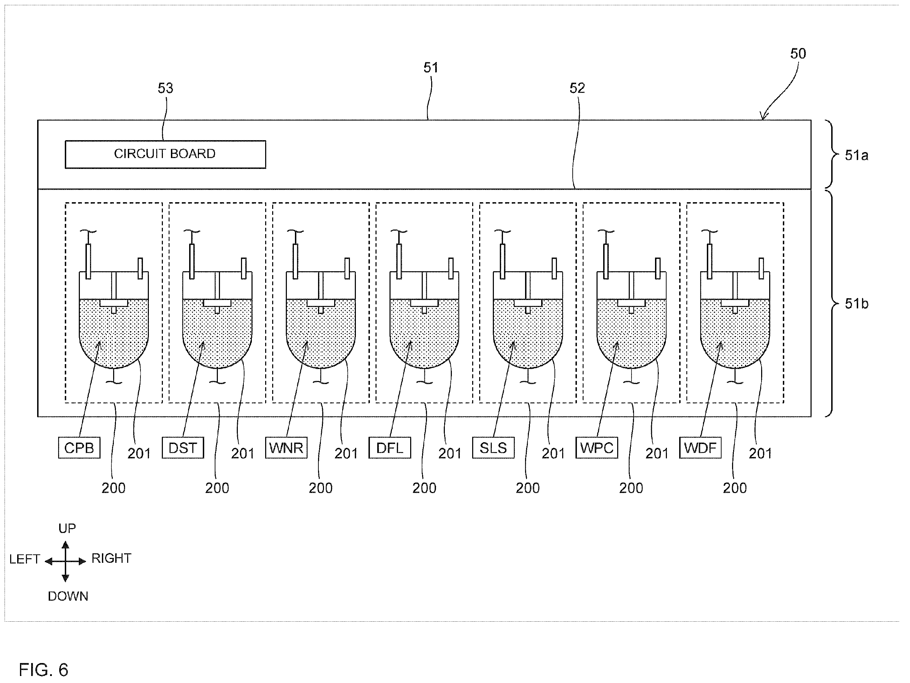

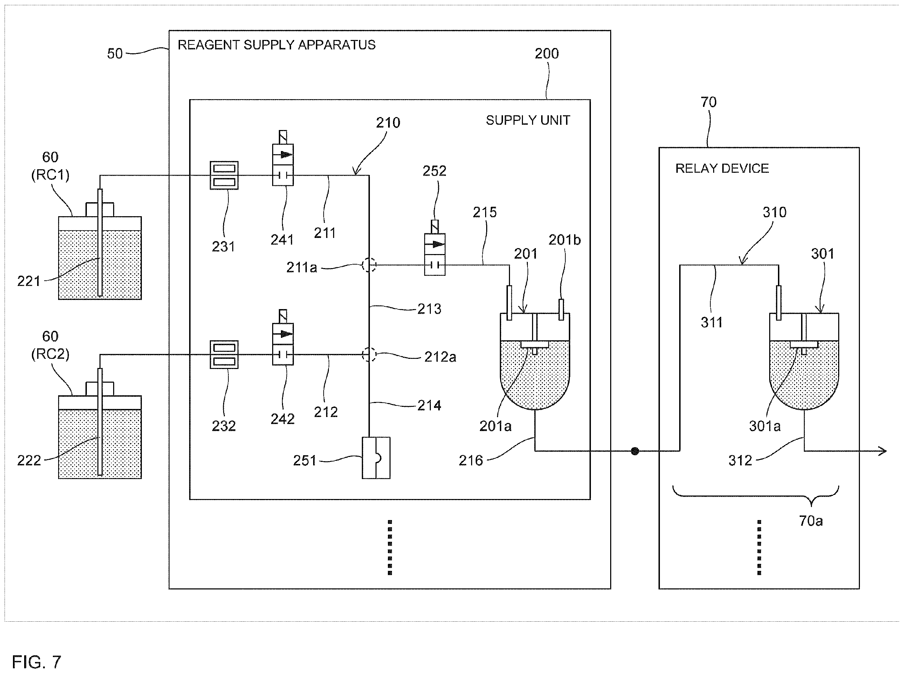

In FIG. 5, the flow paths through which the reagents and pure water pass are shown as solid lines, and the areas where the flow paths intersect are marked with black circles. The location of the reagent supply apparatus 50 in relation to the flow paths is indicated by dashed lines. The configuration of the reagent supply apparatus 50 will be explained later with reference to FIGS. 6 and 7.

One relay device 70 is connected to each sample measurement device 32-L, and one relay device 70 is connected to each sample measurement device 32-R. One dilution device 80 is connected to the two pairs of sample measurement devices 32-L and 32-R, and one dilution device 80 is connected to the two smear preparing device 41.

The relay device 70 is a device for facilitating the transfer of fluid between two devices separated by a distance. The configuration of the relay device 70 will be explained later with reference to FIG. 7. Each relay device 70 connected to the sample measurement devices 32-L and 32-R is connected via the reagent supply apparatus 50 to two reagent containers 60 containing the WNR reagent, two reagent containers 60 containing the DFL reagent, two reagent containers 60 containing the SLS reagent, two reagent containers 60 containing the WPC reagents, and two reagent containers 60 containing the WDF reagents. Samples 32-L and 32-R suctions in the WNR reagent, the DFL reagent, the SLS reagent, the WPC reagent, and the WDF reagent via the relay device 70. Each of the 70 relay devices connected to the smear preparing device 41 is connected to the pure water device 27. The smear preparing device 41 suctions in pure water from the pure water device 27.

The dilution device 80 is a device for diluting the DST reagent using pure water. Each dilution device 80 is connected to two reagent containers 60 containing the DST reagents via a reagent supply apparatus 50, which is further connected to a pure water device 27. The sample measurement devices 32-L, 32-R and smear preparing device 41 suctions in the diluted DST reagent via the dilution device 80.

Each smear preparing device 41 is connected to two reagent containers 60 containing the DPB reagent via a reagent supply apparatus 50, which suctions in the DPB reagent via the reagent supply apparatus 50.

FIG. 6 shows a schematic front view of the reagent supply apparatus 50. For convenience, the inside of the reagent supply apparatus 50 is shown in perspective in FIG. 6.

The reagent supply apparatus 50 includes a chassis 51, a partition member 52, a circuit board 53, and seven supply units 200. The inside of the chassis 51 is divided into an upper area 51a and a lower area 51b by a partition member 52 parallel to the horizontal plane. The circuit board 53 is located in the upper area 51a, and the seven supply units 200 are located in the lower area 51b. The supply unit 200 has a reagent reservoir 201 for storing the corresponding reagent. Two reagent containers 60 containing the same type of reagent are connected to each reagent reservoir 201, which are common to two reagent containers 60 containing the same type of reagent.

In the example shown in FIG. 6, the leftmost reagent reservoir 201 is connected to two reagent container 60 containing the DPB reagent and stores the DPB reagent. The second reagent reservoir 201 from the left is connected to two reagent containers 60 containing the DST reagents and stores the DST reagents. The third reagent reservoir 201 from the left is connected to two reagent containers 60 containing the WNR reagents and stores the WNR reagents. The fourth reagent reservoir 201 from the left is connected to the two reagent containers 60 containing the DFL reagents and stores the DFL reagents. The fifth reagent reservoir 201 from the left is connected to two reagent container 60 containing the SLS reagent and stores the SLS reagent. The sixth reagent reservoir 201 from the left is connected to two reagent containers 60 containing the WPC reagents and stores the WPC reagents. The rightmost reagent reservoir 201 is connected to the two reagent container 60 containing the WDF reagent and stores the WDF reagent.

The configuration and operation of the fluid circuit of the reagent supply apparatus 50 and the relay device 70 are described using FIGS. 7 through 13.

As shown in FIGS. 5 and 6, the five supply units 200, which supply the WNR reagent, the DFL reagent, the SLS reagent, the WPC reagent, and the WDF reagent respectively, are all connected to the eight relay devices 70. The relay device 70 includes five relay configurations 70a inside the relay device 70 to handle the five types of reagents. For simplicity of explanation, FIG. 7 schematically shows the connection between the supply unit 200, which supplies the WNR reagents, and one relay device 70, which relays the WNR reagents. The relationship between the supply unit 200 and the relay device 70, which handles other reagents, is substantially the same as that for the WNR reagents, so the explanation is omitted.

As shown in FIGS. 5 and 6, the supply unit 200 that supplies the DST reagent is connected to five dilution device 80. The supply unit 200 that supplies the DPB reagent is connected to two smear preparing devices 41. These supply units 200 may also be configured in the same way as the supply unit 200 that supplies the WNR reagent shown in FIG. 7, so the description is omitted.

The two reagent containers 60 of the same type connected to the supply unit 200 will hereinafter be referred to as "reagent container RC1" and "reagent container RC2".

The supply unit 200 includes a reagent reservoir 201, piping 210, tubes 221 and 222, bubble monitoring sensors 231 and 232, flow switches 241 and 242, liquid pump 251, and flow switch 252.

The reagent reservoir 201 is a chamber with a sealed inside that temporarily stores reagents. The reagent reservoir 201 includes a float sensor 201a and a vent 201b. The float sensor 201a is a sensor for detecting whether the reagent stored in the reagent reservoir 201 is full or not. The vent 201b is a hole for releasing air inside the reagent reservoir 201 to the outside.

The capacity of the reagent reservoir 201 of the first embodiment is about 240 ML to 300 ML. According to the first embodiment, for example, in the reagent reservoir 201 where the DST reagent is stored, if there is no refilling of the DST reagent from the reagent container 60, the minimum time from the full to empty state is about 8 minutes.

The piping 210 is composed of flow paths 211-216. Tubes 221 and 222, for example, are tubes made of a hard resin material, and flow paths 211-216 are tubes made of a soft resin material. The diameter of tubes 221 and 222 (e.g., 4 MM inner diameter) is relatively large and the diameter of flow paths 211-216 (e.g., 2.4 MM inner diameter) is relatively small.

One end of flow path 211 is connected to tube 221, and the other end of flow path 211 is connected to flow paths 213 and 215 at intersection 211a. One end of flow path 212 is connected to tube 222, and the other end of flow path 212 is connected to flow paths 213 and 214 at intersection 212a. One and the other ends of flow path 213 are connected to intersections 211a and 212a, respectively. One end of flow path 214 is connected to liquid pump 251, and the other end of flow path 214 is connected to intersection 212a. One end of flow path 215 is connected to intersection 211a, and the other end of flow path 215 is connected from the top end of reagent reservoir 201 to the inside of reagent reservoir 201. One end of flow path 216 is connected to the inside of reagent reservoir 201 at the lower end of reagent reservoir 201, and the other end of flow path 216 is connected to flow path 311 of relay device 70.

When replacing reagent container RC1, tube 221 is pulled out of reagent container RC1, which is out of reagent, and inserted from the top of the new reagent container RC1. This positions the lower end of tube 221 near the bottom of the inside of reagent container RC1. The bubble monitoring sensor 231 and the flow switch 241 are positioned in the flow paths 211. The bubble monitoring sensor 231 is equipped with a transmissive photoelectric sensor and a prism to monitor bubbles in the flow path 211 by receiving light from the flow path 211 using the prism. The bubble monitoring sensor 231 detects the presence or absence of reagents passing through the flow path 211 and outputs a detection signal as a detection result. The flow switch 241 switches the flow path 211 to either a state in which reagents can pass through (open state) or a state in which reagents cannot pass through (closed state). The flow switch 241 is, for example, a solenoid valve.

Similarly, when replacing reagent container RC2, tube 222 is pulled out of reagent container RC2, which is out of reagent, and inserted from the top of new reagent container RC2. This positions the lower end of the tube 222 near the bottom of the inside of the reagent container RC2. The bubble monitoring sensor 232 and the flow switch 242 are positioned in the flow path 212. The bubble monitoring sensor 232 is equipped with a transmissive photoelectric sensor and a prism and uses the prism to receive light from the flow path 212 to monitor bubbles in the flow path 212. The bubble monitoring sensor 232 detects the presence or absence of reagents passing through the flow path 212 and outputs a detection signal as a detection result. The flow switch 242 switches the flow path 212 to either the open or closed state. The flow switch 242 is, for example, a solenoid valve.

The liquid pump 251 transfers reagents in the piping 210. The liquid pump 251 is, for example, a diaphragm pump, which transfers reagent in the piping 210 by switching the positive and negative pressure generated by the pneumatic pressure source to perform a suction operation to suction in reagent in the piping 210 and a discharge operation to discharge reagent into the piping 210. The flow switch 252 switches the flow path 215 to either the open or closed state. The flow switch 252 is, for example, a solenoid valve.

The flow switches 241, 242, and 252 may be other configurations, not limited to solenoid valves, as long as it is possible to switch the flow path to either the open or closed state. For example, the flow switches 241, 242, and 252 may be electrically switchable valves. The liquid pump 251 may be a diaphragm pump or any other configuration, as long as it is capable of transferring reagents in the piping. For example, the liquid pump 251 may be a syringe pump, peristaltic pump, air pump, or other pumps.

The relay device 70 includes a reagent reservoir 301 and piping 310.

The reagent reservoir 301 is a chamber with a sealed inside. The reagent reservoir 301 includes a float sensor 301a. The float sensor 301a is a sensor for detecting whether the reagent stored in the reagent reservoir 301 is full or not.

Piping 310 consists of flow paths 311 and 312. One end of flow path 311 is connected to flow path 216 of the corresponding supply unit 200 of the reagent supply apparatus 50, and the other end of flow path 311 is connected from the top end of reagent reservoir 301 to the inside of reagent reservoir 301. One end of flow path 312 is connected to the inside of reagent reservoir 301 at the lower end of reagent reservoir 301, and the other end of flow path 312 is connected to the corresponding sample measurement device 32-L or 32-R.

The dilution device 80 connected to the sample measurement devices 32-L, 32-R and smear preparing device 41 also includes a relay configuration 70a for drawing in reagents and pure water, as in FIG. 7.

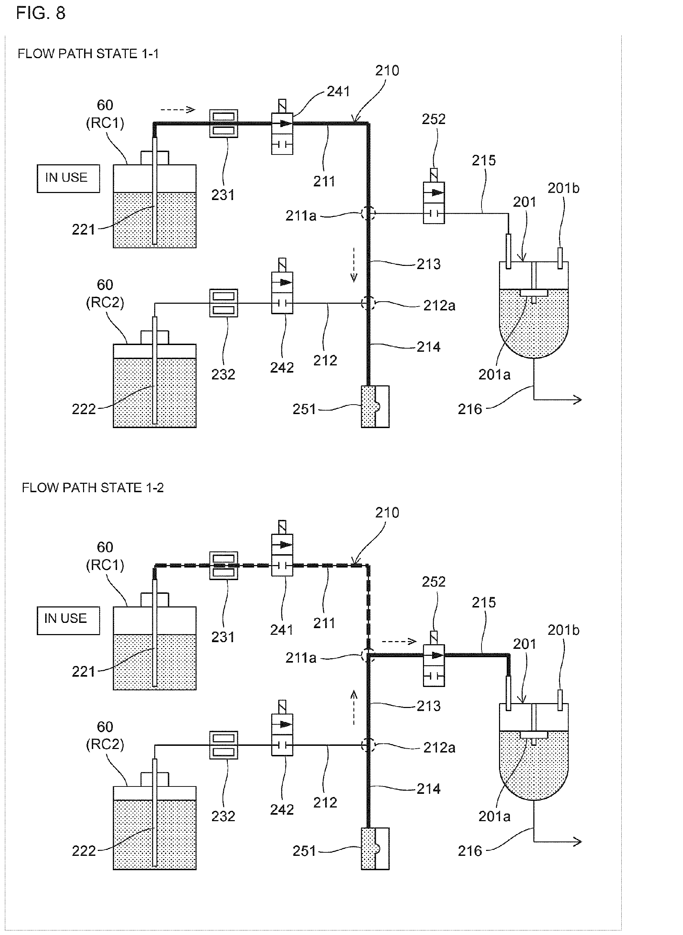

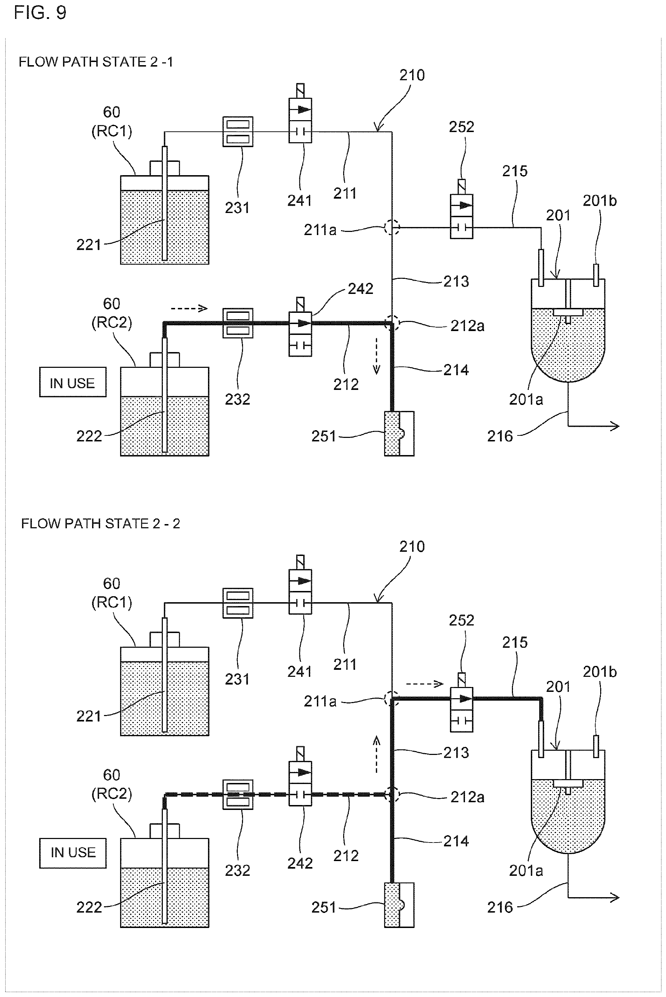

Referring to FIGS. 8 and 9, the operation of transferring reagent from the reagent container 60 to the reagent reservoir 201 is described.

FIG. 8 illustrates the operation of transferring reagent from reagent container RC1 to reagent reservoir 201. Here, reagent container RC1 is set in use.

As shown in the upper flow path state 1-1 in FIG. 8, the flow switch 241 is set to the open state, and the liquid pump 251 performs suction operation. As a result, the reagent in reagent container RC1 is drawn to the liquid pump 251 and the flow paths 211, 213, and 214 are filled with reagent. Then, as shown in the lower flow path state 1-2 in FIG. 8, the flow switch 241 is closed, the flow switch 252 is opened, and the discharge operation is performed by the liquid pump 251. As a result, the reagent drawn into the liquid pump 251 is transferred to the reagent reservoir 201 via the flow path 215. In this case, the reagent is stored in the flow path 211 as illustrated by the thick dashed line.

FIG. 9 illustrates the operation of transferring reagent from reagent container RC2 to reagent reservoir 201. Here, reagent container RC2 is set in use.

As shown in the upper flow path state 2-1 in FIG. 9, the flow switch 242 is set to the open state, and the liquid pump 251 performs suction operation. As a result, the reagent in reagent container RC2 is drawn to the liquid pump 251, and the flow paths 212 and 214 are filled with reagent. Then, as shown in the lower flow path state 2-2 in FIG. 9, the flow switch 242 is closed, the flow switch 252 is opened, and the liquid pump 251 performs discharge operation. As a result, the reagent drawn into the liquid pump 251 is transferred to the reagent reservoir 201 via the flow path 215. In this case, the reagent is stored in the flow path 212 as illustrated by the thick dashed line.

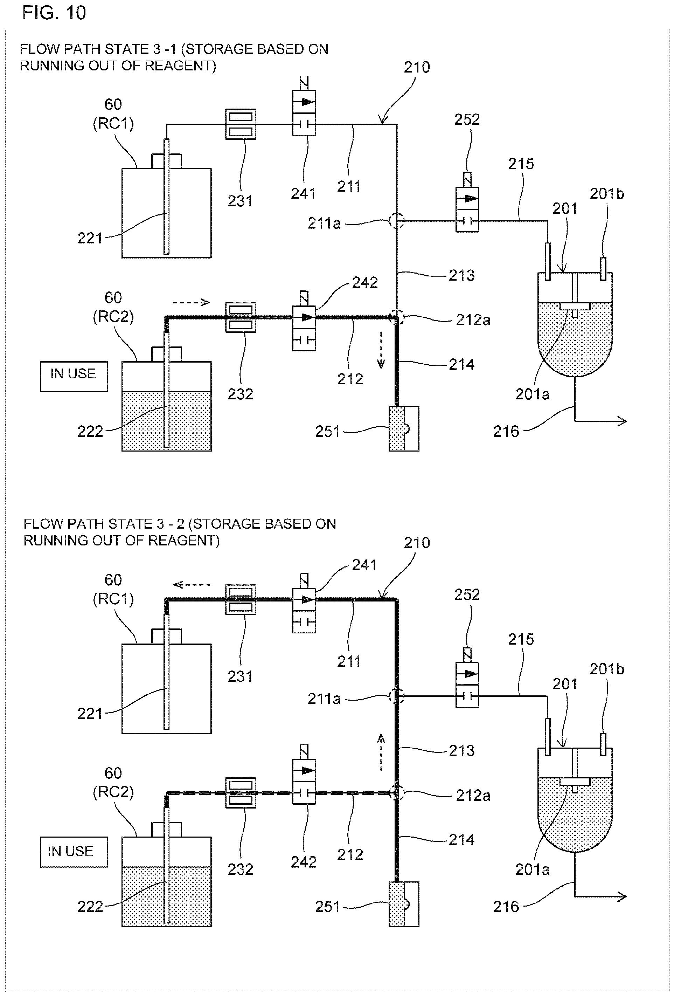

FIGS. 10-12 illustrate the reagent storage operation.

Generally, if a reagent container runs out of reagent and is left in such a state for a long period of time, the inside of the piping leading to the reagent container may dry out, and compositional material from the reagent remaining in the piping may precipitate, causing a clog or other problem when the reagent supply is restarted. In contrast, according to one or more embodiments, when one of the reagent containers 60 runs out of reagent, reagent from the other reagent containers 60 is stored in the flow path leading to the reagent containers 60. This prevents precipitation and clogging of the composition in the flow path leading to the empty reagent container 60. This operation of filling a predetermined area of the piping 210 with reagent to prevent precipitation or clogging of the composition is hereinafter referred to as a "storage operation".

FIG. 10 illustrates the storage operation when reagent container RC1 runs out of reagent. In this example, reagent container RC2 is set to be in use.

As shown in the upper flow path state 3-1 in FIG. 10, the flow switch 242 is set to the open state, and the liquid pump 251 performs suction operation. As a result, the reagent in reagent container RC2 is drawn to the liquid pump 251 and the flow paths 212 and 214 are filled with reagent. Then, as shown in the lower flow path state 3-2 in FIG. 10, the flow switch 242 is closed, the flow switch 241 is opened, and the discharge operation is performed by the liquid pump 251. As a result, the reagent drawn into the liquid pump 251 is transferred to the reagent container RC1 via the flow path 211. The flow switch 241 is then made closed, and the flow path 211 from the tube 221 to the flow switch 241 is filled with reagent, completing the storage operation.

Since reagent is stored in the flow path 211 from the flow switch 241 to the intersection 211a in the transfer of reagent from the reagent container RC2 to the reagent reservoir 201, precipitation or clogging of the composition in this section is prevented as long as the reagent is transferred.

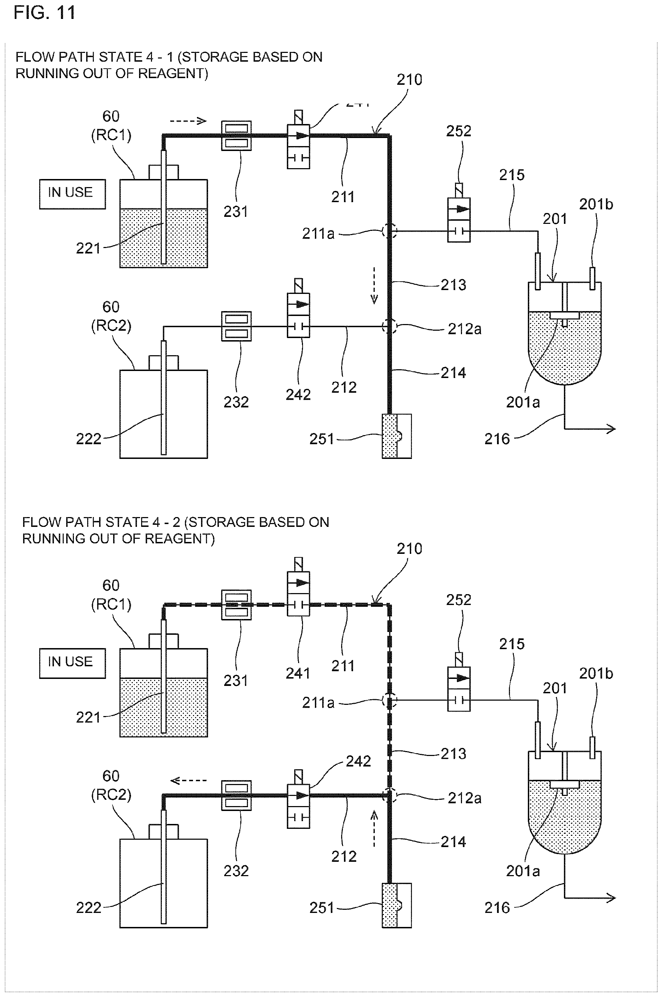

FIG. 11 illustrates the storage operation when reagent container RC2 runs out of reagent. In this example, reagent container RC1 is set to be in use.

As shown in the upper flow path state 4-1 in FIG. 11, the flow switch 241 is set to the open state, and the liquid pump 251 performs suction operation. As a result, the reagent in reagent container RC1 is drawn to the liquid pump 251, and the flow paths 211, 213, and 214 are filled with reagent. Then, as shown in the lower flow path state 4-2 in FIG. 11, the flow switch 241 is closed and the flow switch 242 is opened, and the discharge operation is performed by the liquid pump 251. As a result, the reagent drawn into the liquid pump 251 is transferred to the reagent container RC2 via the flow path 212. The flow switch 242 is then closed, and the flow path 212 from the tube 222 to the flow switch 242 is filled with reagent, completing the storage operation.

Since reagent is stored in the flow path 212 from the flow switch 242 to the intersection 212a in the transfer of reagent from the reagent container RC1 to the reagent reservoir 201, precipitation or clogging of the composition in this section is prevented as long as the reagent is transferred.

According to the first embodiment, the inner diameters of tubes 221 and 222 are relatively large (4 MM), so that even if the reagent container 60 in which tubes 221 and 222 are installed runs out of reagent, there is little possibility of reagent remaining in tubes 221 and 222. Therefore, in the storage operation of the first embodiment, as described above, the flow path 211 from tube 221 to the flow switch 241 should be filled with reagent, and the flow path 212 from tube 222 to the flow switch 242 should be filled with reagent. On the other hand, if the inner diameters of tubes 221 and 222 are relatively small (about 2.4 MM), reagent will easily remain in tubes 221 and 222, and in this case, the storage operation will also fill tubes 221 and 222 with reagent.

The storage operation shown in FIGS. 10 and 11 is executed at the timing when the reagent container 60 runs out of reagent, as well as at the timing of the termination and startup of the sample measurement system 1. In this case, the storage operation is performed on the entire piping 210.

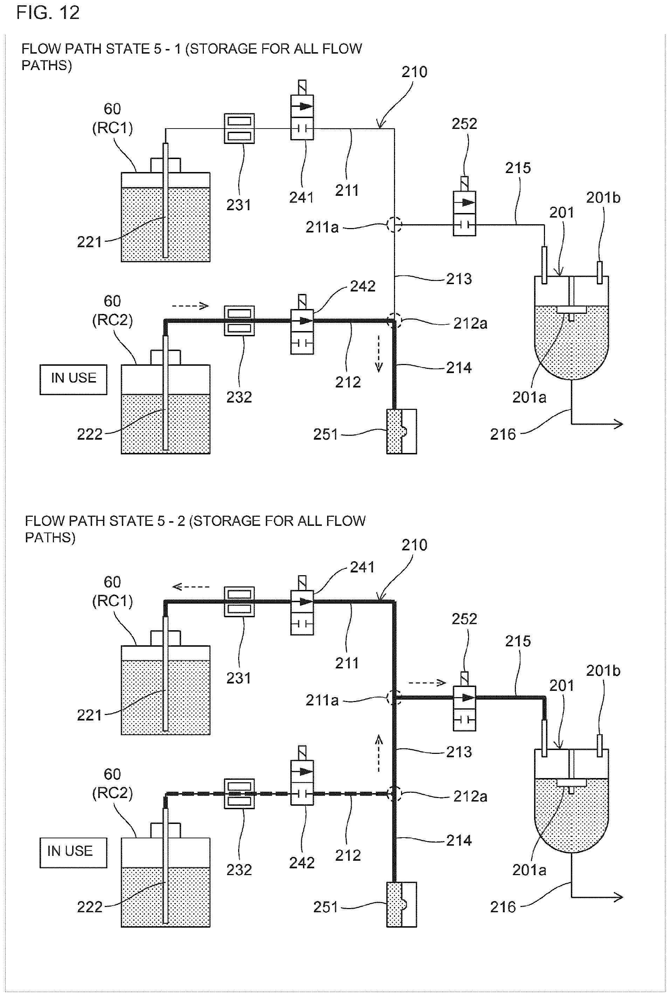

FIG. 12 shows the storage operation performed for the entire piping 210 system. In this example, reagent container RC2 is set to be in use.

As shown in the upper flow path state 5-1 in FIG. 12, the flow switch 242 is set to the open state, and the liquid pump 251 performs suction operation. As a result, the reagent in reagent container RC2 is drawn to the liquid pump 251, and the flow paths 212 and 214 are filled with reagent. Then, as shown in the lower flow path state 5-2 in FIG. 12, the flow switch 242 is closed, the flow switches 241 and 252 are opened, and the liquid pump 251 performs discharge operation. As a result, the reagent drawn into the liquid pump 251 also fills the flow paths 211, 213, and 215. The flow switches 241 and 252 are then closed, and the storage operation is completed. Since the flow path 216 is directly connected to the reagent reservoir 201, the reagent is always stored.

When the storage operation is performed for the entire piping 210, the precipitation and clogging of the composition of the entire piping 210 may be prevented, especially when the piping 210 is not used for a long time after the sample measurement system 1 is terminated.

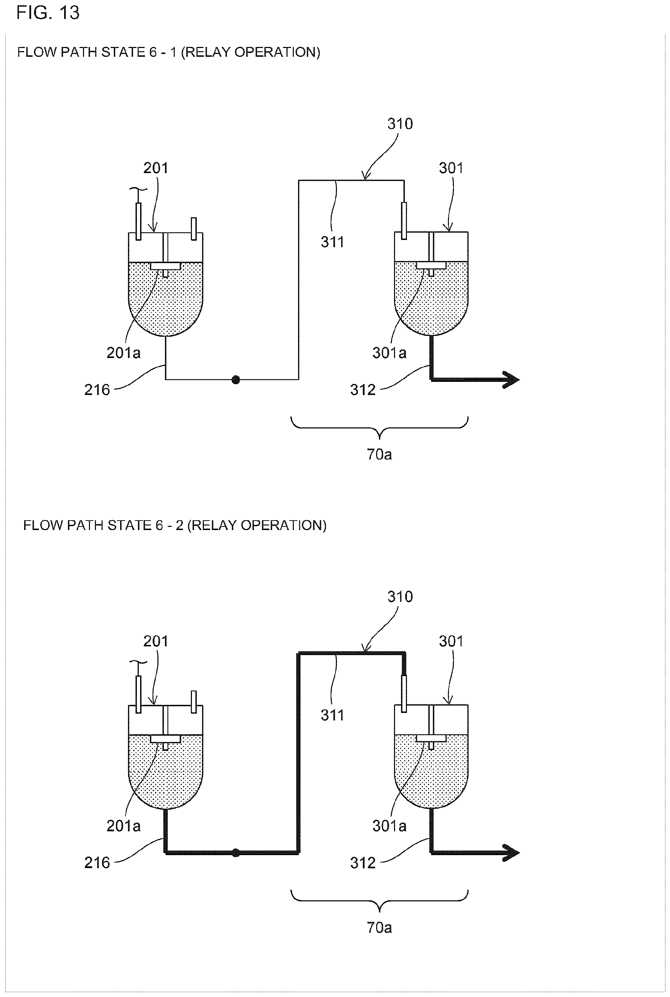

Referring to FIG. 13, the operation of transferring reagents by the relay configuration 70a of the relay device 70 is described.

When the sample measurement device 32-L or 32-R connected to the relay device 70 suctions in the reagent, as shown in the upper flow path state 6-1 in FIG. 13, the reagent contained in the reagent reservoir 301 is transferred to sample measurement device 32-L or 32-R. As a result, the air inside the reagent reservoir 301 is stretched, and as the stretched air tries to return to its original state, the reagent is automatically transferred from the reagent reservoir 201 of the reagent supply apparatus 50 to the reagent reservoir 201 of the relay device 70, as shown in the lower flow path state 6-2 in FIG. 13. Therefore, even when the distance between the reagent supply apparatus 50 and the sample measurement device 32-L or 32-R is far, as shown in FIG. 13, the reagent may be smoothly transferred from the reagent supply apparatus 50 to the sample measurement device 32-L or 32-R via the relay device 70.

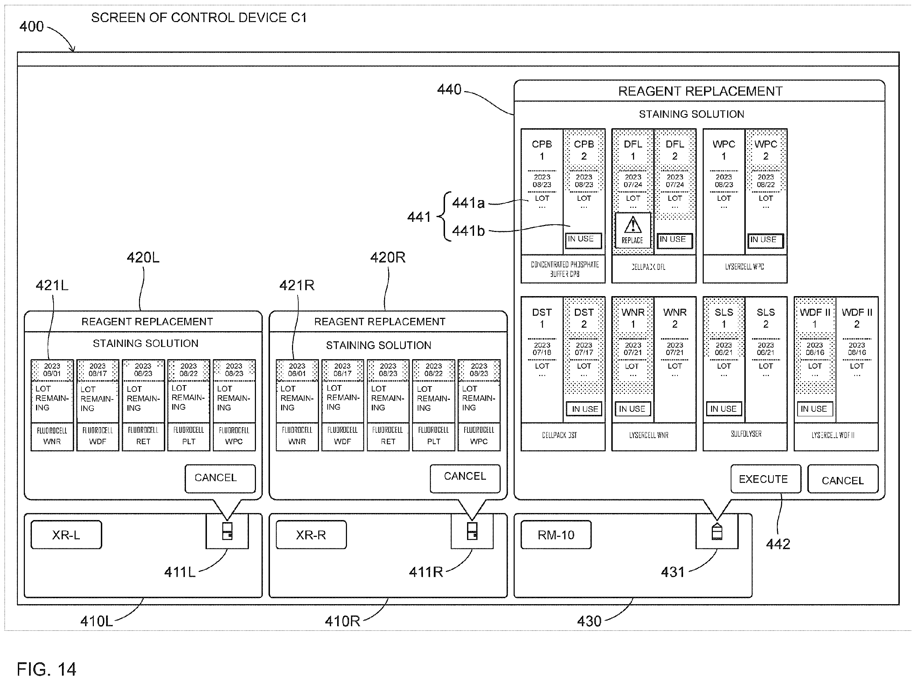

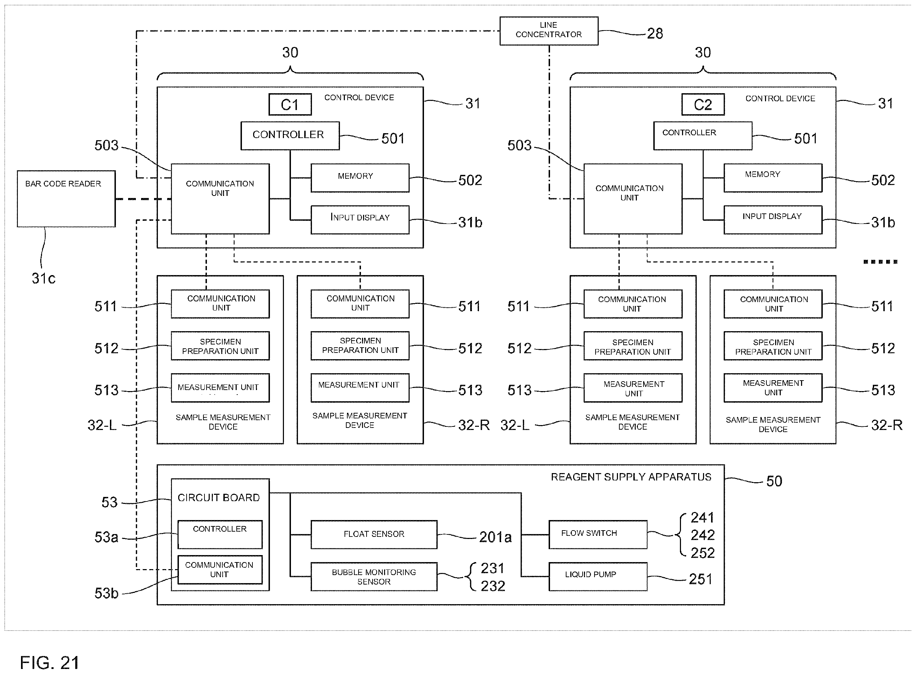

Next, with reference to FIGS. 14-20, screens 400 for managing reagents on the input display 31b of control device 31 will be described. The display of the screen 400 shown below is controlled by the controller 501 (see FIG. 21) of the corresponding control device 31.

FIG. 14 schematically shows a screen 400 displayed on the input display 31b of the control device 31 (C1) to which the reagent supply apparatus 50 is connected.

The screen 400 displayed on the input display 31b of the control device C1 includes two device information areas 410L and 410R and a device information area 430.

The two device information areas 410L and 410R are lined up adjacent to each other on the left and right sides of the screen 400 and correspond to the two actual sample measurement devices 32-L and 32-R, respectively, as shown in FIG. 2. In the device information area 410L, a button 411L is displayed to turn the display of the reagent window 420L on and off. In addition, the name of the sample measurement device 32-L, "XR-L," etc., is displayed in the device information area 410L. Similarly, in the device information area 410R, a button 411R is displayed to turn on and off the display of the reagent window 420R. In addition, the name "XR-R", etc. of the sample measurement device 32-R is displayed in the device information area 410R.

When the left button 411L is operated by the user, a reagent window 420L is displayed above the left device information area 410L, indicating the reagents installed in the sample measurement device 32-L. The reagent window 420L includes five reagent information areas 421L, each corresponding to one of the five staining solutions contained inside the sample measurement device 32-L. The reagent information areas 421L display the name, expiration date, lot number, and number of remaining uses of the corresponding staining solutions.

When the right button 411R is operated by the user, the reagent window 420R is displayed above the right device information area 410R, indicating the reagents installed in the sample measurement device 32-R. The reagent window 420R includes five reagent information areas 421R, each corresponding to one of the five staining solutions contained inside the sample measurement device 32-R. The reagent information areas 421R display the name, expiration date, lot number, and number of remaining uses of the corresponding staining solutions.

The device information area 430 corresponds to the reagent supply apparatus 50. In the device information area 430, a button 431 is displayed to turn on and off the display of the reagent window 440. In addition, the name of the reagent supply apparatus 50, "RM-10," etc., is displayed in the device information area 430.

When button 431 is operated by the user, a reagent window 440 is displayed on the upper side of the device information area 430, showing the reagents that are controlled for supply by the reagent supply apparatus 50. Specifically, the reagent window 440 includes seven reagent information areas 441 corresponding to each of the 14, seven types of reagents (DPB reagent, DST reagent, the WNR reagent, the DFL reagent, the SLS reagent, the WPC reagent, the WDF reagent) connected to the reagent supply apparatus 50, an execute button 442, a cancel button. The reagent information area 441 displays the name of the corresponding reagent at the lower end and the reagent information 441a and 441b are displayed in upper part of the reagent information area 441.

The reagent information 441a and 441b display the expiration date and lot number of reagent containers RC1 and RC2 (see FIG. 7), respectively. In addition, as reagent information, information indicating which of the reagent containers RC1 and RC2 is in use, information indicating that the reagent has run out, and information indicating the amount of reagent remaining will also be displayed.

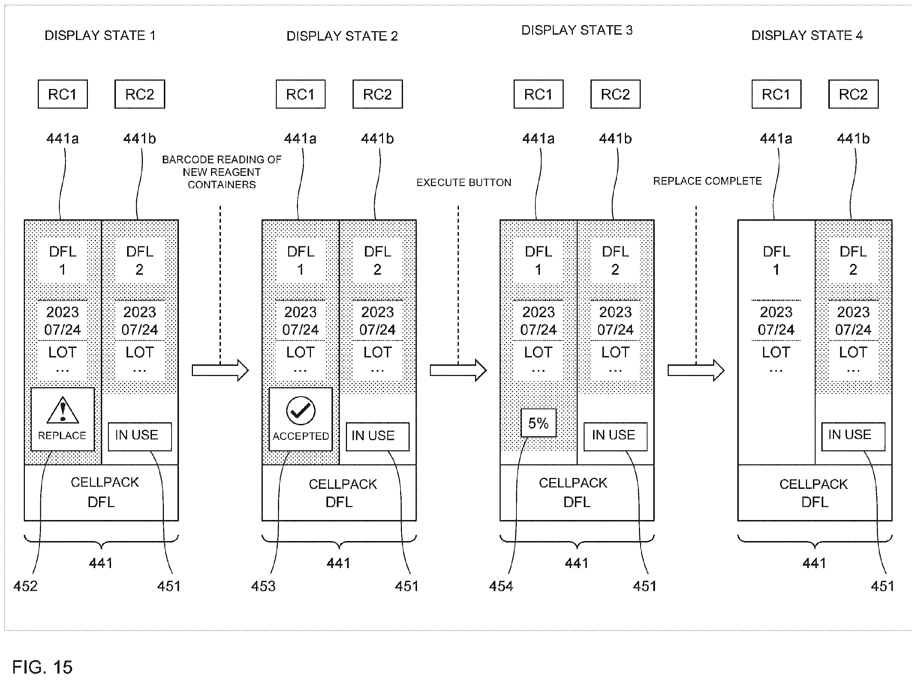

FIG. 15 schematically illustrates the contents of the display in the reagent information area 441 during the replacement of the reagent containers 60.

In the example shown in FIG. 15, as an initial state, in the two reagent containers RC1 and RC2 that hold the DFL reagents, reagent container RC1 is out of reagent and reagent container RC2 is in use. As shown in FIG. 15, display state 1, the reagent information 441a displays an icon 452 indicating that reagent container RC1 needs to be replaced, and the reagent information 441b displays an icon 451 indicating that reagent container RC2 is in use.

To indicate that the amount of reagent remaining in reagent container RC1 is 0, all vertical areas of the background of reagent information 441a are displayed in gray. In FIG. 15, the gray indication is shown as shaded dots for convenience. To indicate that the amount of reagent remaining in reagent container RC2 is about 30%, about 30% of the vertical area of the background of reagent information 441b is displayed in white, and about 70% of the vertical area of the background of reagent information 441b is displayed in gray. Thus, by referring to the percentage of white areas in the vertical direction of the background of the reagent information 441a and 441b, the user may visually grasp the amount of reagent remaining in the reagent container 60.

As shown in display state 1 in FIG. 15, when reagent runs out in reagent container RC1, the user uses barcode reader 31c (see FIG. 21) connected to control device C1 to read the barcode from the barcode label on a new reagent container 60 that contains the same type of reagent. As a result, an icon 453 indicating that a new reagent container 60 has been accepted is displayed in the reagent information 441a, instead of the icon 452, as shown in display state 2 in FIG. 15.

The user then removes the tube 221 (see FIG. 7) from the reagent container RC1 that has run out of reagent, and removes the reagent container RC1 from the storage 12. The user then places a new reagent container 60 with the barcode read as reagent container RC1 in the storage 12, and places the tube 221 in the reagent container 60.

When the user then operates the execute button 442 (see FIG. 14), as shown in display state 3 in FIG. 15, the reagent information 441a displays an icon 454 indicating the progress rate of the bubble removal operation in real time, instead of the icon 453. The bubble removal operation is an operation in which the reagent supply apparatus 50 suctions in reagent from the newly installed reagent container 60 and transfers to the reagent reservoir 201, so that no air bubbles remain in the flow path leading to the reagent container 60.

When the bubble removal operation for the newly installed reagent container RC1 is completed, the icon 454 disappears from the reagent information 441a, as shown in display state 4 in FIG. 15. Then, all vertical areas of the background of the reagent information 441a are displayed in white, because the remaining volume of reagent container RC1 is at its maximum. Thus, the replacement of the reagent containers 60 is completed.

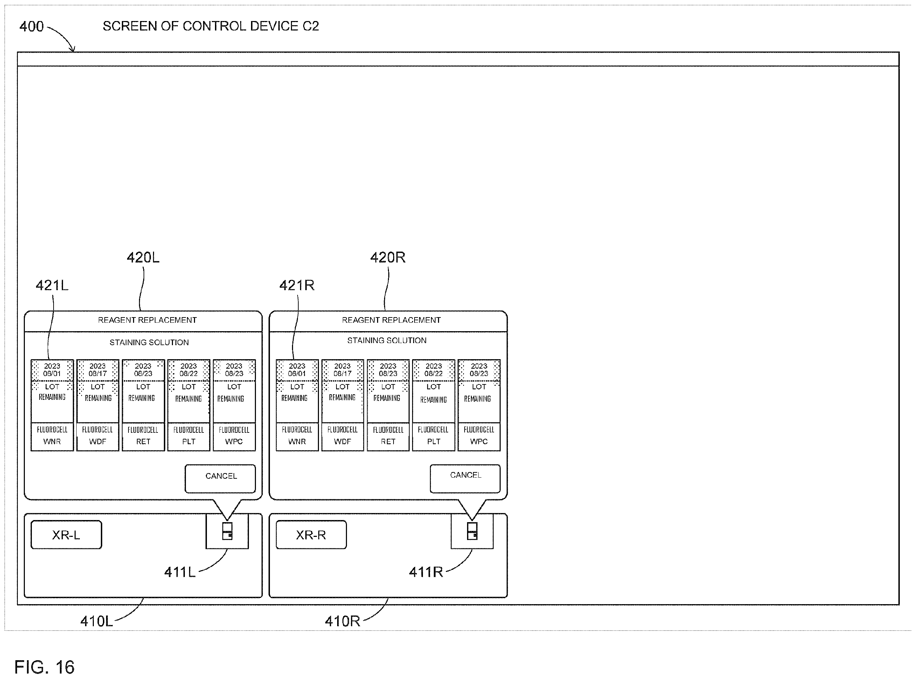

FIG. 16 schematically shows a screen 400 displayed on the input display 31b of the control device 31 (C2), to which the reagent supply apparatus 50 are not connected.

Compared to control device C1, control device C2 does not have a reagent supply apparatus 50 connected. In the screen 400 of control device C2, compared to FIG. 14, the device information area 430 related to the reagent supply apparatus 50 is omitted, and therefore, the reagent window 440 indicating reagents to be supplied and controlled by the reagent supply apparatus 50 is also omitted.

As shown in Figs. 14 and 16, information on the reagents in the reagent supply apparatus 50 is displayed only on the input display 31b of the control device C1 and not on the input display 31b of the control device C2. This may allow the user to centrally manage the reagent supply apparatus 50 and the 14 reagent containers 60 by referring to and operating the screen 400 displayed on the input display 31b of control device C1.

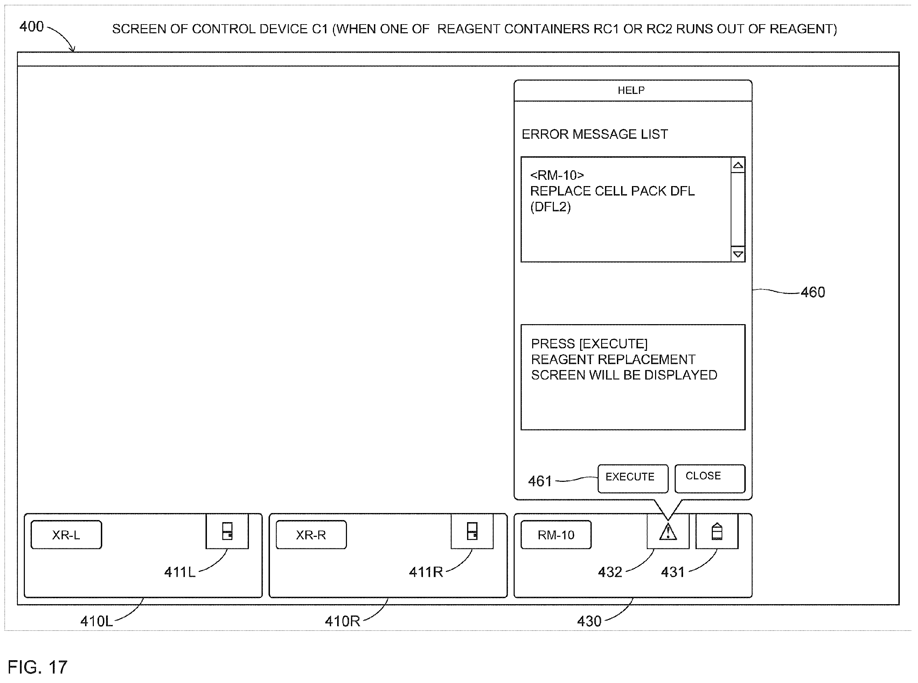

FIG. 17 schematically shows the screen 400 displayed on the input display 31b of the control device C1 when one of the two pairs of reagent containers RC1 and RC2 runs out of reagent.

When a reagent runs out in one of the two reagent containers RC1 and RC2, an error window 460 is displayed above the device information area 430 on the screen 400 of the input display 31b of the control device C1. In the example shown in FIG. 17, because the reagent ran out in one of the two reagent containers RC1 and RC2 corresponding to the DFL reagent, the error window 460 displays a message encouraging the user to replace one of the reagent containers 60 that ran out with a new reagent container 60 and the procedure to cancel the error.

When the error window 460 is displayed, a button 432 is added to the device information area 430 to turn the display of the error window 460 on and off. When the execute button 461 in the error window 460 or button 431 in the device information area 430 is operated by the user, the reagent window 440 shown in FIG. 14 is displayed instead of the error window 460. In this case, in the corresponding reagent information area 441, an icon 452 (see FIG. 15) indicating out of reagent is displayed on one of the reagent information 441a and 441b. With the reagent window 440 displayed, the user replaces the reagent containers 60 that are out of reagent according to the procedure described with reference to FIG. 15.

When a reagent runs out in one of the two reagent containers RC1 or RC2, the screen 400 of control device C2 does not indicate that one of the reagent containers RC1 or RC2 has run out of reagent, as in FIG. 16.

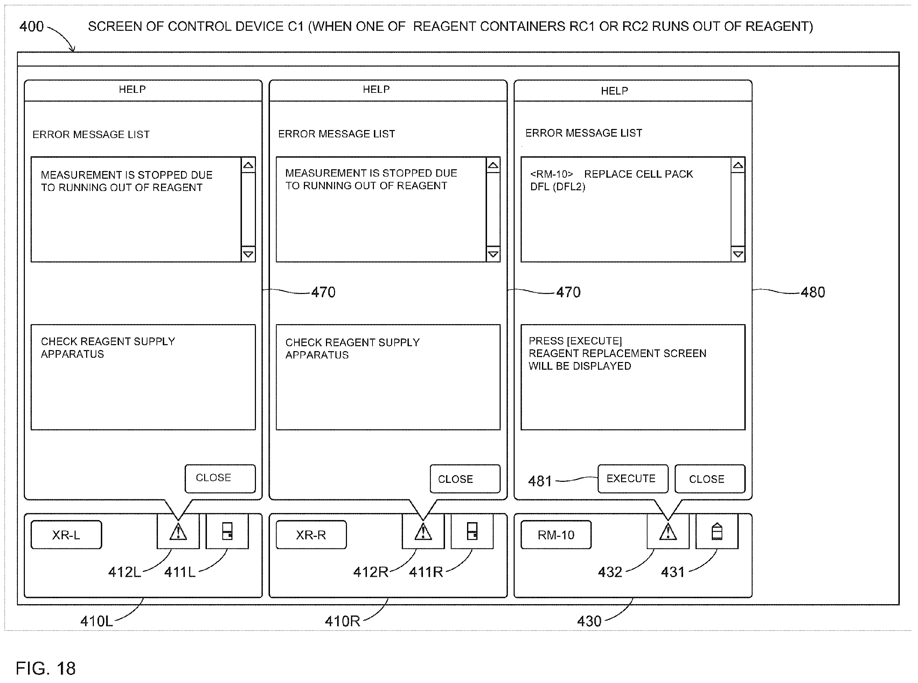

FIG. 18 schematically illustrates the screen 400 displayed on the input display 31b of the control device C1 when the reagent runs out in both of the two pairs of reagent containers RC1 and RC2.

If reagent runs out in both of the two reagent containers RC1 and RC2, there is a risk that it will not be possible to properly perform measurements and smear preparing in the eight sample measurement devices 32-L and 32-R and the two smear preparing device 41. Therefore, in this case, control device C1 performs a process to stop the measurement of all sample measurement devices 32-L and 32-R and the preparation of smears by all smear preparing devices 41. As a result, the measurements of the two sample measurement devices 32-L and 32-R corresponding to control device C1 are stopped, and as shown in FIG. 18, on screen 400 of control device C1, the error window 470 is displayed in the upper part of the two device information areas 410L and 410R. The error window 470 displays a message indicating that the measurement of the sample measurement devices 32-L and 32-R has been stopped due to running out of reagent. The error window 470 may also display the message "The reagent supply from the reagent supply apparatus has been stopped".

When the error window 470 is displayed, buttons 412L and 412R are added to the device information areas 410L and 410R, respectively, to turn the display of the error window 470 on and off. This may allow the user to easily switch the display between the error window 470 shown in FIG. 18 and the reagent windows 420L and 420R shown in FIG. 14.

Furthermore, as shown in FIG. 18, an error window 480 is displayed above the device information area 430 on the screen 400 of the control device C1. In the example shown in FIG. 18, a message is displayed urging the user to replace the reagent container 60 with a new reagent container 60 containing DFL, because both of the two reagent containers RC1 and RC2 corresponding to the DFL reagent have run out of reagent.

When the error window 480 is displayed, a button 432 is added to the device information area 430 to turn the display of the error window 480 on and off. This may allow the user to easily switch the display between the error window 480 shown in FIG. 18 and the reagent window 440 shown in FIG. 14. When the execute button 481 in the error window 480 or button 431 in the device information area 430 is operated by the user, the reagent window 440 shown in FIG. 14 is displayed.

When a reagent runs out in both reagent containers RC1 and RC2, an icon 452 (see FIG. 15) is displayed in both reagent information areas 441a and 441b in the corresponding reagent information area 441, indicating that the reagent is out. With the reagent window 440 displayed, the user replaces the reagent containers 60 that have run out of reagent according to the procedure described with reference to FIG. 15.

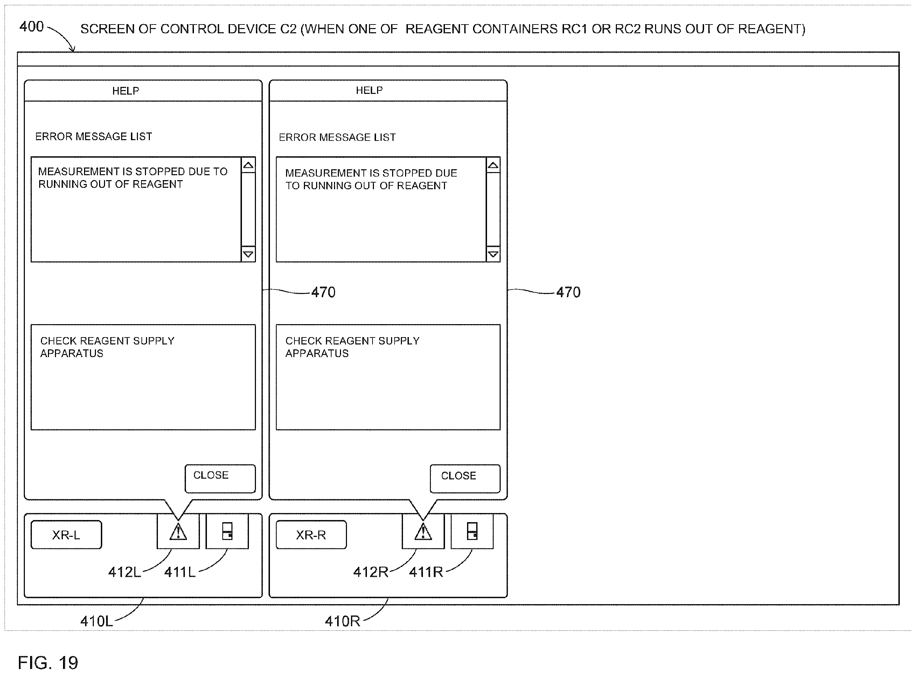

FIG. 19 schematically illustrates the screen 400 displayed on the input display 31b of the control device C2 when the reagent runs out in both of the two pairs of reagent containers RC1 and RC2.

If both of the two reagent containers RC1 and RC2 run out of reagent, the screen 400 of control device C2 will display the error window 470 and buttons 412L and 412R shown in FIG. 18, compared to FIG. 16.

The information about the reagent supply apparatus 50 running out of reagent is displayed only on control device C1 as shown in FIGS. 17 and 18, and not on control device C2 as shown in FIG. 19. This may allow the user to centrally manage the reagent supply apparatus 50 and the 14 reagent containers 60 by referring to and operating screen 400 on control device C1.

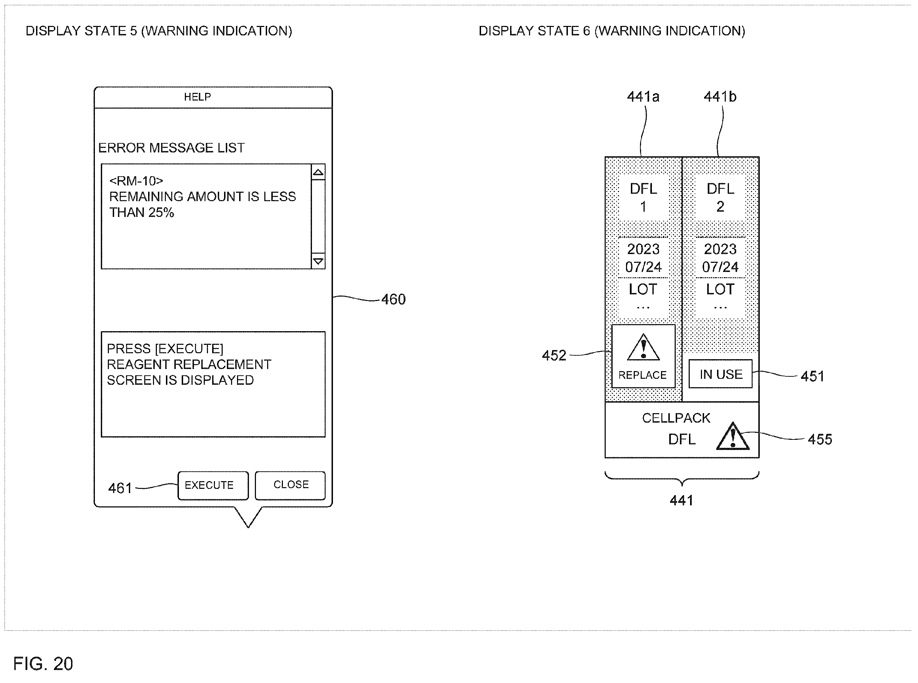

FIG. 20 schematically shows the contents of the screen 400 displayed on the input display 31b of the control device C1 when the remaining amount of reagent in the two paired reagent containers RC1 and RC2 is low.

After the icon 452 indicating replacement is displayed in one of the reagent containers RC1 and RC2 on screen 400 of control device C1, as shown in display state 1 of FIG. 15, if the remaining amount of this reagent falls below a predetermined value in the other reagent container 60 in use, the amount of this reagent will soon reach zero and the sample measurement devices 32 -L, 32-R and smear preparing device 41 are expected to stop processing. Therefore, the reagent containers 60 that are out of reagent need to be replaced quickly.

In contrast, according to the first embodiment, as shown in display state 5 of FIG. 20, a message indicating that the amount of reagent remaining is low is displayed in the error window 460 displayed on screen 400 of control device C1. As shown in display state 6 of FIG. 20, an icon 455 indicating that the reagent level is low is displayed in the corresponding reagent information area 441 displayed on screen 400 of control device C1. The warning indication for the remaining reagent level, as shown in display states 5 and 6 in FIG. 20, is made, for example, when the remaining reagent level in the reagent container 60 in use is below 25% and the other reagent container 60 is out of reagent.

The warning about the amount of reagent remaining, as shown in FIG. 20, may allow the user to know that the reagent container 60 needs to be replaced quickly before the amount of reagent remaining reaches zero.

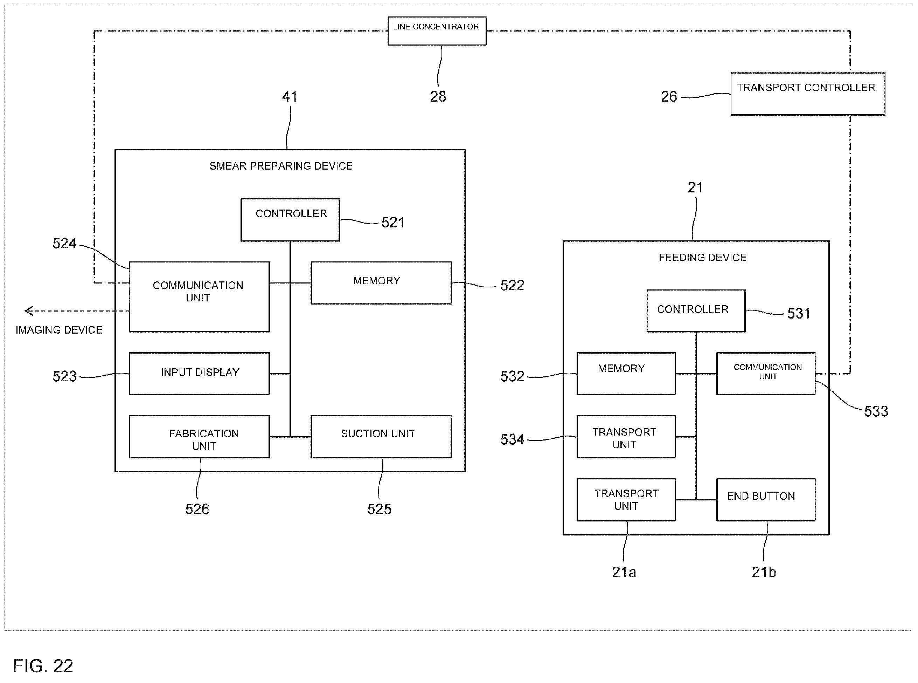

Next, referring to FIGS. 21 and 22, the functional configuration of each part of the sample measurement system 1 is explained.

FIG. 21 is a block diagram showing the functional configuration of sample analyzer 30 and reagent supply apparatus 50.

The control device C1 includes a controller 501, a memory 502, an input display 31b, a communication unit 503, and a barcode reader 31c. The controller 501, memory 502, and the communication unit 503 are housed in the main unit 31a (see FIG. 4).

The controller 501 includes, for example, a CPU. The controller 501 executes various types of processing by executing computer programs stored in the memory 502, and controls the corresponding two sample measurement devices 32-L and 32-R, as well as the reagent supply apparatus 50. The memory 502 includes, for example, SSD, HDD, RAM, and the like. The input display 31b includes, for example, a touch panel display. The input display 31b may be divided into a display device, such as an LCD or OLED display, and an input device, such as a mouse or keyboard.

The communication unit 503 may include a connection terminal based on the Ethernet standard, a connection terminal based on the USB standard, and a communication adapter based on Bluetooth (registered trademark). The communication unit 503 and the line concentrator 28 are connected by a cable based on the Ethernet standard. The line concentrator 28 is, for example, a network hub. The communication unit 503 is connected to the communication units 511 of the two corresponding sample measurement devices 32-L and 32-R and the communication unit 53b of the reagent supply apparatus 50 by a cable based on the USB standard. The barcode reader 31c is configured to communicate with the communication unit 503, and the communication unit 503 and barcode reader 31c are connected by wireless communication.

In control device C2, compared to control device C1, barcode reader 31c is omitted and the communication unit 503 is not connected to reagent supply apparatus 50.

The sample measurement devices 32-L and 32-R both include a communication unit 511, a specimen preparation unit 512, and a measurement unit 513. The communication unit 511 includes a connection terminal based on the USB standard.

The specimen preparation unit 512 suctions in samples from the sample container 110 (see FIG. 2), suctions in reagents from the relay device 70, and suctions in diluted DST reagents from the dilution device 80, as described with reference to FIG. 5. The specimen preparation unit 512 mixes the sample and reagent to prepare a measurement specimen. The measurement unit 513 measures blood cells using the sheath flow DC detection method based on the measurement specimen prepared by the specimen preparation unit 512. The measurement unit 513 measures hemoglobin by the SLS-hemoglobin method and measures blood cells by the flow cytometry method. The measurement data acquired by the measurement unit 513 is transmitted to the corresponding control device 31. The controller 501 of the control device 31 analyzes the samples based on the received measurement data and generates analysis results.

The reagent supply apparatus 50 includes a circuit board 53, a float sensor 201a, bubble monitoring sensors 231 and 232, flow switches 241, 242, and 252, and a liquid pump 251. The float sensor 201a, bubble monitoring sensors 231, 232, flow switches 241, 242, 252, and liquid pump 251 are located in each of the seven supply units 200 (see FIG. 7).

Circuit board 53 includes a controller 53a and a communication unit 53b. The controller 53a includes, for example, a Field Programmable Gate Array (FPGA). The communication unit 53b includes a connection terminal based on the USB standard. The controller 53a transmits the detection signals of the float sensor 201a and the bubble monitoring sensors 231 and 232 as detection results to the controller 501 of the control device C1. Based on the detection results received from the controller 53a, the controller 501 of the control device C1 sends drive signals to the controller 53a of the reagent supply apparatus 50 to drive the flow switches 241, 242, 252 and the liquid pump 251. The controller 53a drives the flow switches 241, 242, 252 and the liquid pump 251 based on the drive signal received from the controller 501 of the control device C1.

FIG. 22 is a block diagram showing the functional configuration of smear preparing device 41 and feeding device 21.

The smear preparing device 41 includes a controller 521, a memory 522, an input display 523, a communication unit 524, a suction unit 525, and a fabrication unit 526.

The controller 521 includes, for example, a Central Processing Unit (CPU). The controller 521 executes various processes by executing computer programs stored in the memory 522. The memory 522 includes, for example, a Solid State Drive (SSD), a Hard Disk Drive (HDD), Random Access Memory (RAM), and the like. the input display 523 includes, for example, a touch panel display. The input display 523 may be divided into a display device, such as an LCD or OLED display, and an input device, such as a mouse or keyboard.

The communication unit 524 includes, for example, a connection terminal based on the Ethernet standard and a connection terminal based on the USB standard. The communication unit 524 and the line concentrator 28 are connected by a cable based on the Ethernet standard. The communication unit 524 and the corresponding one imaging device 42 are connected by a cable based on the USB standard.

The suction unit 525 suctions in samples from the sample container 110 (see FIG. 2), pure water from the relay device 70, and diluted DST reagent from the dilution device 80, as described with reference to FIG. 5. The fabrication unit 526 prepares smears on glass slides based on the samples suctioned in by the suction unit 525.

The feeding device 21 includes a controller 531, a memory 532, a communication unit 533, a transport unit 534, an activation button 21a, and an end button 21b.

The controller 531 includes, for example, a CPU. The controller 531 executes various processes by executing computer programs stored in the memory 532. The memory 532 includes, for example, SSD, HDD, RAM, and the like. The communication unit 533 includes, for example, a connection terminal based on the Ethernet standard. The communication unit 533 and the transport controller 26 are connected by a cable based on the Ethernet standard. The transport unit 534 includes a mechanism to transport the rack 100 placed in the feeding device 21 by the user to the adjacent transport device 22 (see FIG. 1).

The activation button 21a and the end button 21b are provided at the front end of the feeding device 21, as shown in FIG. 1. When the activation button 21a is pressed by the user, the controller 531 sends activation instructions to the transport controller 26 to start up the various parts of the sample measurement system 1. This activates the sample measurement system 1. When the end button 21b is pressed by the user, controller 531 sends a termination instruction to the transport controller 26 to shut down each part of the sample measurement system 1. This shuts down the sample measurement system 1.

The transport device 22 and collection device 25 are configured in the same way as the feeding device 21, except for the activation button 21a and end button 21b. The transport controller 26 and the line concentrator 28 are also connected by a cable based on the Ethernet standard.

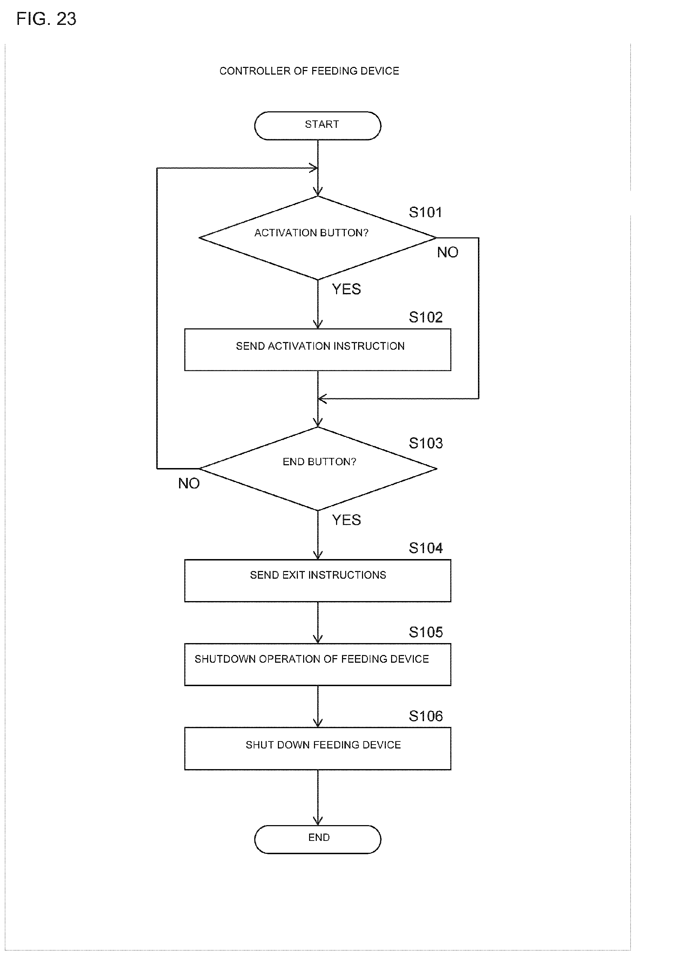

The flowcharts shown in FIGS. 23-31 are then referred to explain the controls performed by the sample measurement system 1.

FIG. 23 is a flowchart showing the processes related to activation and termination by the 531 control device of the 21 input device.

When the activation button 21a is pressed by the user (step S101: YES), the controller 531 of the feeding device 21 sends an activation instruction to the transport controller 26 in step S102. The activation instruction is, for example, a packet based on Wake-on-LAN.

When the transport controller 26 receives the activation instruction, the transport controller 26 is turned on. The transport controller 26 then sends activation instructions to four transport devices 22, two transport devices 23, two transport devices 24, a collection device 25, four control devices 31, and two smear preparing device 41. The activation instructions are, for example, packets based on Wake-on-LAN. When each device receives the activation instruction, the power of each of the device is turned on. At this time, control device C2 activates the two corresponding sample measurement devices 32-L and 32-R, and control device C1 activates the reagent supply apparatus 50 and the two corresponding sample measurement devices 32-L and 32-R. The smear preparing device 41 activates the corresponding imaging device 42. Thus, the sample measurement system 1 is activated.

When the controller 531 detects that the end button 21b is pressed (step S103: YES), a termination instruction is sent to the transport controller 26 in step S104.

Upon receipt of the termination instructions, the transport controller 26 sends the termination instructions to the four transport devices 22, the two transport devices 23, the two transport devices 24, the collection device 25, the four control devices 31, and the two smear preparing device 41. Upon receipt of the termination instructions from the transport controller 26, the equipment is shut down. At this time, control device C2 shuts down the corresponding two sample measurement devices 32-L and 32-R, and control device C1 shuts down the reagent supply apparatus 50 and the corresponding two sample measurement devices 32-L and 32 -R. The smear preparing device 41 shuts down the corresponding imaging device 42. And the transport controller 26 shuts down the transport controller 26 itself.

The controller 531 causes the feeding device 21 to execute the shutdown operation in step S105 and shuts down the feeding device 21 in step S106. Thus, the sample measurement system 1 is shut down.

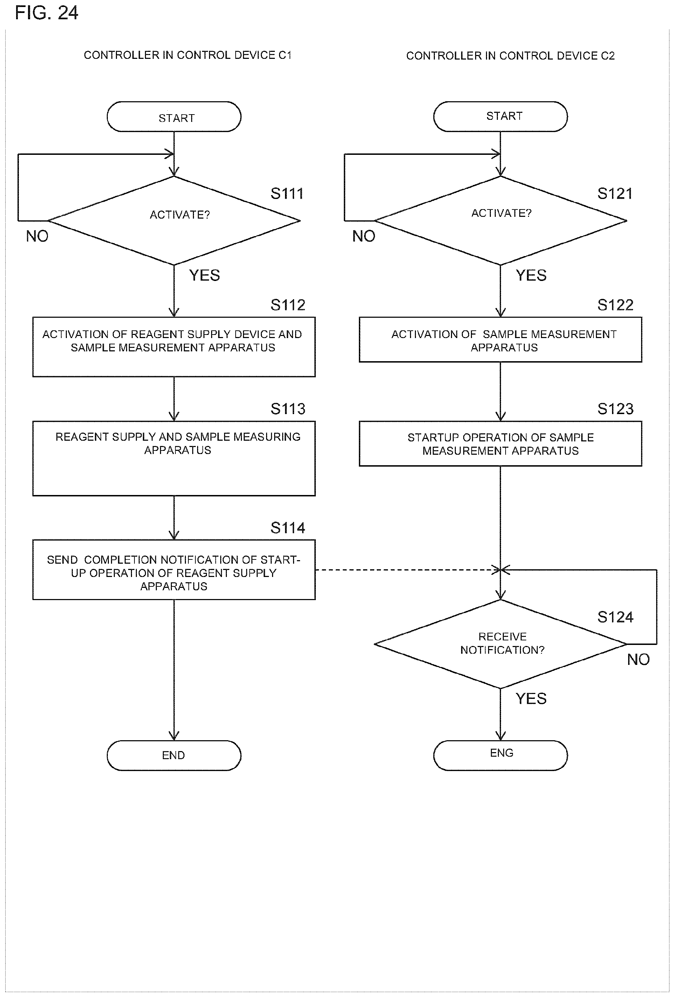

FIG. 24 is a flowchart showing the process related to activation by the controller 501 of control devices C1 and C2.

When control device C1 is activated (step S111: YES), in step S112, the controller 501 of control device C1 activates reagent supply apparatus 50 and two sample measurement devices 32-L and 32-R connected to the control device C1. In step S113, the controller 501 of control device C1 causes the reagent supply apparatus 50 and the two sample measurement devices 32-L and 32-R connected to the control device C1 to execute the start-up operation.

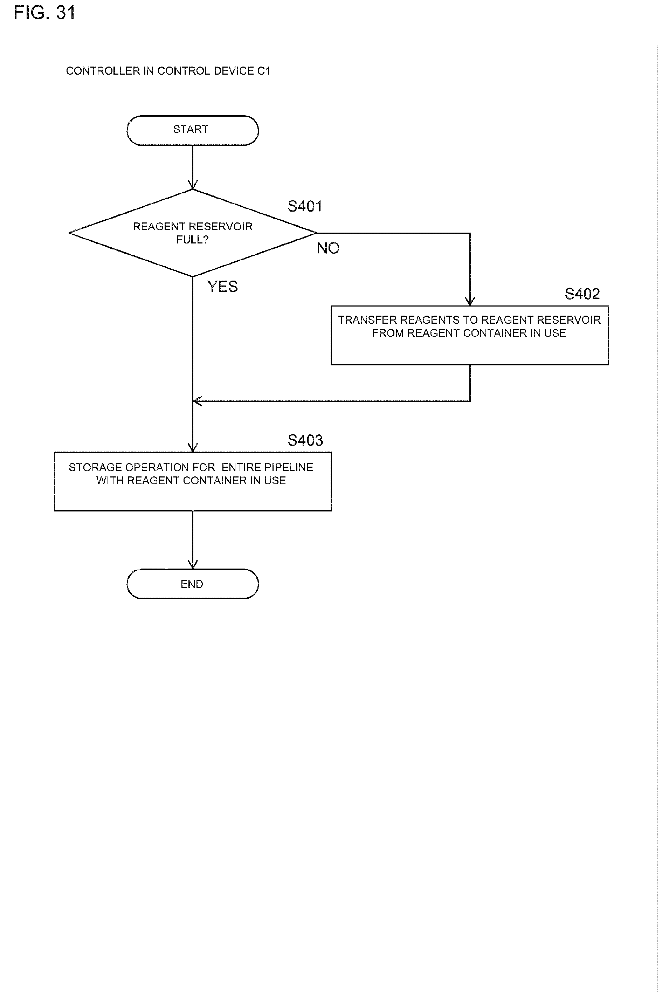

After the start-up operation of the reagent supply apparatus 50 is completed, the reagent supply apparatus 50 is ready for operation. The start-up operation of the reagent supply apparatus 50 is explained later with reference to FIG. 31. In the start-up operation, the sample measurement devices 32-L and 32-R suctions in a predetermined amount of all reagents from the relay device 70 and dilution device 80, and perform a test measurement using the suctioned in reagents. When the test measurement is completed, the sample measurement devices 32-L and 32-R are ready for measurement.

Then, in step S114, the controller 501 of control device C1 sends a notification of the completion of the start-up operation of the reagent supply apparatus 50 to the three control device C2 and the two smear preparing devices 41. The controller 501 of control device C1 then drives the two sample measurement devices 32-L and 32-R connected to the control device C1 to measure samples.

When control device C2 is activated (step S121: YES), in step S122, the controller 501 of control device C2 activates two sample measurement devices 32-L and 32-R connected to the control device C2. In step S123, the controller 501 of control device C2 causes the two sample measurement devices 32-L and 32-R connected to the control device C2 to execute the start-up operation.

Then, in step S124, the controller 501 of the control device C2 waits for processing until receiving a completion notification of the start-up operation of the reagent supply apparatus 50. When the controller 501 of control device C2 receives the completion notification from control device C1 (step S124: YES), the two sample measurement devices 32-L and 32-R connected to the control device C2 start measuring samples.

The controller 521 of the smear preparing device 41 also performs almost the same process as in steps S121-S124. That is, when smear preparing device 41 is activated, controller 521 activates imaging device 42 connected to the smear preparing device 41 and causes the smear preparing device 41 and imaging device 42 connected to the smear preparing device 41 to execute a start-up operation. The controller 521 waits for the process until the controller 521 receives notification of the completion of the start-up operation of the reagent supply apparatus 50. Upon receipt of the completion notification from the control device C1, the controller 521 drives the smear preparing device 41 and the imaging device 42 connected to the smear preparing device 41 to perform the smear preparation and imaging.

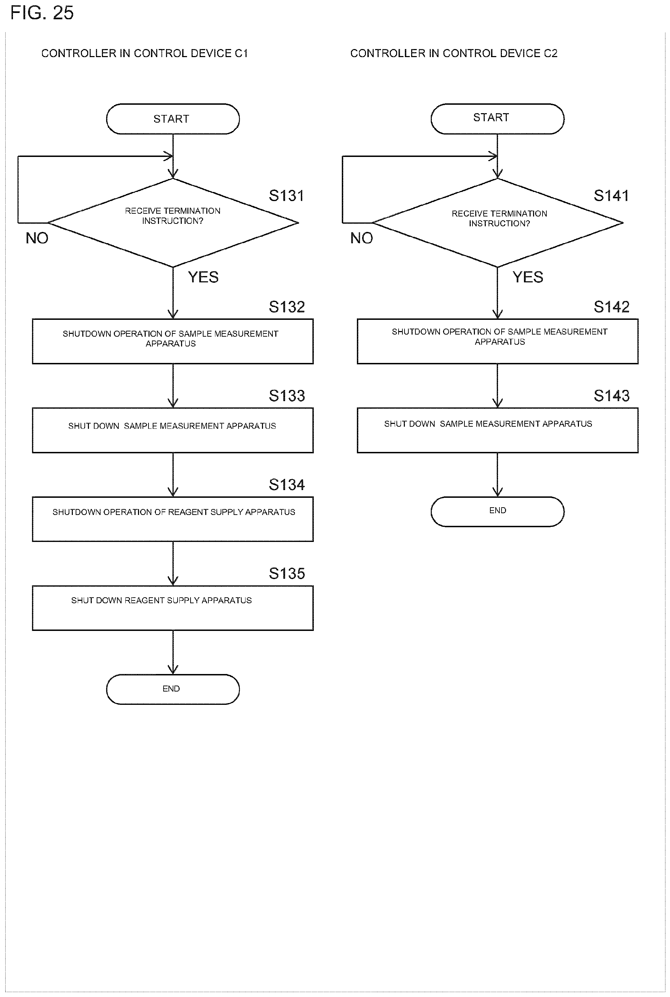

FIG. 25 is a flowchart showing the process related to termination by the controller 501 of control devices C1 and C2.

When the controller 501 of control device C1 receives the termination instruction transmitted based on step S104 of FIG. 23 (step S131: YES), in step S132, it causes the two sample measurement devices 32-L and 32-R connected to the control device C1 to execute the shutdown operation, and in step S133, these two sample measurement devices 32-L and 32-R are shut down. Then, the controller 501 of control device C1 causes the shutdown operation of the reagent supply apparatus 50 to be executed in step S134. The shutdown operation of the reagent supply apparatus 50 is described later with reference to FIG. 31. When the shutdown operation of the reagent supply apparatus 50 is completed, the controller 501 of the control device C1 shuts down the reagent supply apparatus 50 in step S135.

When the controller 501 of control device C2 receives the termination instruction transmitted based on step S104 of FIG. 23 (step S141: YES), in step S142, it causes the two sample measurement devices 32-L and 32-R connected to the control device C2 R to execute the shutdown operation, and in step S143, these two sample measurement devices 32-L and 32-R are shut down.

The controller 521 of the smear preparing device 41 also performs almost the same process as in steps S141-S143. That is, when the controller 521 of the smear preparing device 41 receives a termination instruction, it causes the smear preparing device 41 and the corresponding imaging device 42 to execute a shutdown operation to shut down the smear preparing device 41 and the imaging device 42.

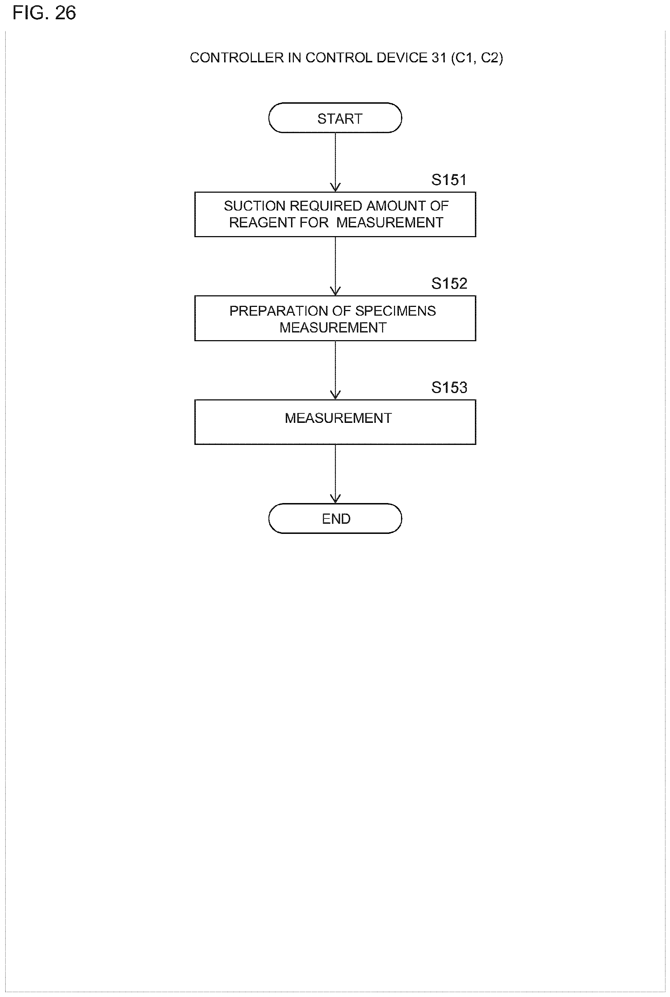

FIG. 26 is a flowchart showing the process related to measurements by the controller 501 of the control device 31 (C1, C2). The process in FIG. 26 is repeatedly executed for each sample measurement.

When measuring a sample in the sample measurement device 32-L or 32-R connected to the control device 31, the controller 501 of the control device 31 controls the corresponding specimen preparation unit 512 to suction in a predetermined amount of reagent according to the type of measurement in step S151. In step S152, the controller 501 controls the corresponding specimen preparation unit 512 to prepare a measurement specimen by mixing the sample and the reagent suctioned in in step S151. In step S153, the controller 501 controls corresponding measurement unit 513 to measure the measurement specimen prepared in step S152.

The controller 521 of the smear preparing device 41 also performs almost the same process as in steps S151-S153. That is, controller 521 controls suction unit 525 to suction in a predetermined amount of the DST reagent, the DPB reagent, and pure water. Controller 521 controls the fabrication unit 526 so that the sample is applied on a glass slide, and controls the imaging device 42 so that the prepared smear is transferred to the imaging device 42 for imaging the smear.

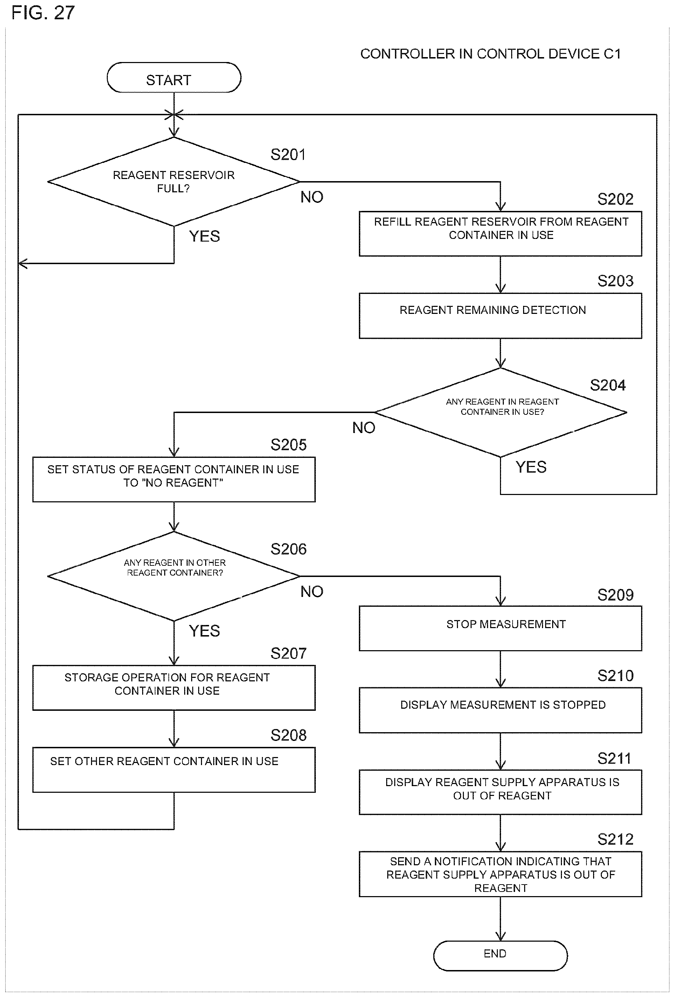

FIG. 27 is a flowchart showing the processing related to the reagent supply apparatus 50 by the controller 501 of the control device C1. The process in FIG. 27 is repeatedly executed in parallel for each of the 200 supply units of the 50 reagent supply apparatus.

In step S201, the controller 501 of the control device C1 determines whether the reagent reservoir 201 of the supply unit 200 is full based on the detection result of the float sensor 201a installed in the reagent reservoir 201 of the supply unit 200. If the reagent reservoir 201 is not full (step S201: NO), in step S202, the controller 501 of the control device C1 replenishes the reagent in the reagent reservoir 201 from the reagent container 60 in use among the two reagent containers 60 connected to the supply unit 200, as shown in FIGS. 8 and 9. Here, the memory 502 of the control device C1 stores information indicating which of the two reagent containers 60 connected to each supply unit 200 is in use. The controller 501 of the control device C1 refers to the information to perform the process of step S202.

In step S203, the controller 501 of the control device C1 determines whether there is reagent in the reagent container 60 in use based on the detection results of the bubble monitoring sensors 231 or 232 in the replenishment of reagent in step S202. The detection results of the bubble monitoring sensors 231 and 232 reflect whether the reagent is properly flowing through the flow path at the location of the bubble monitoring sensor, respectively. Therefore, the controller 501 of the control device C1 may determine the presence or absence of reagent in the reagent container 60 in use based on the detection results of the bubble monitoring sensors 231 or 232 on the side of the reagent container 60 in use when replenishing the reagent from the reagent container 60 in use to the reagent reservoir 201.

In step S203, the controller 501 of the control device C1 may determine the presence or absence of reagent in the reagent container 60 in use by determining whether the reagent reservoir 201 has been filled during a predetermined time period by the replenishing operation of step S202 based on the detection result of the float sensor 201a. In step S203, the controller 501 of the control device C1 may determine that there is reagent in the reagent container 60 in use only when both the detection results of the bubble monitoring sensor 231 or 232 and the detection result of the float sensor 201a indicate a situation where reagent is present in the reagent container 60.

If the controller 501 of the control device C1 determines in step S203 that there is reagent in the reagent container 60 in use (step S204: YES), the process returns to step S201. On the other hand, if the controller 501 of control device C1 determines that there is no reagent in the reagent container 60 in use in step S203 (step S204: NO), the status of the reagent container 60 in use is set to "no reagent" in step S205.

Here, the memory 502 of the control device C1 stores the status of each reagent container 60 for all reagent containers 60 connected to the reagent supply apparatus 50. The status of a reagent container 60 is either "with reagent", "no reagent", and "waiting for reagent replacement".

Then, in step S206, the controller 501 of control device C1 refers to the status of the other reagent container 60 that is not in use to determine if there is reagent in the other reagent container 60.

When the controller 501 of control device C1 determines that the other reagent container 60 has reagent (step S206: YES), in step S207, the storage operation is performed on the reagent container 60 in use, that is, the reagent container 60 that was determined to have no reagent in the previous step S203. For example, as shown in FIG. 10, when reagent runs out in reagent container RC1, the storage operation transfers reagent from reagent container RC2 to reagent container RC1, and reagent is stored in the flow path 211 leading to reagent container RC1. As shown in FIG. 11, when the reagent runs out in reagent container RC2, the storage operation transfers the reagent from reagent container RC1 to reagent container RC2, and the reagent is stored in flow path 212 leading to reagent container RC2.

In step S208, the controller 501 of control device C1 sets the other reagent container 60, i.e., the reagent container 60 from which the reagent was transferred in step S207, in use, displays an icon 451 (see FIG. 15) indicating in use in the corresponding reagent information 441a or 441b, and then the process return to S201.

If the controller 501 of control device C1 determines that there is no reagent in the other reagent container 60 (step S206: NO), the process proceeds to step S209. In other words, if there is no more reagent in both of the two reagent containers 60 for the target reagent, there is a fear that the required reagent will not be supplied properly, so the processing of all devices that perform processing using reagents provided by the reagent supply apparatus 50 is stopped, as shown below.

In step S209, the controller 501 of control device C1 stops the measurement of the two sample measurement devices 32-L and 32-R connected to control device C1, and in step S210, displays on the input display 31b of the control device C1 that the measurement of these two sample measurement devices 32-L and 32-R has been stopped. Specifically, as shown in FIG. 18, an error window 470 is displayed above the device information area 410L and 410R, respectively, containing a message that the measurement is stopped due to running out of reagent.

Then, in step S211, the controller 501 of the control device C1 displays on the input display 31b of the control device C1 that a reagent has run out in both of the two reagent containers 60 that are paired in the reagent supply apparatus 50. Specifically, as shown in FIG. 18, an error window 480 containing a message that the name of the type of reagent that has been run out is displayed. Then, in step S212, the controller 501 of control device C1 sends a notification indicating that the reagent supply apparatus 50 is out of reagent to the three control devices C2 and the two smear preparing devices 41.

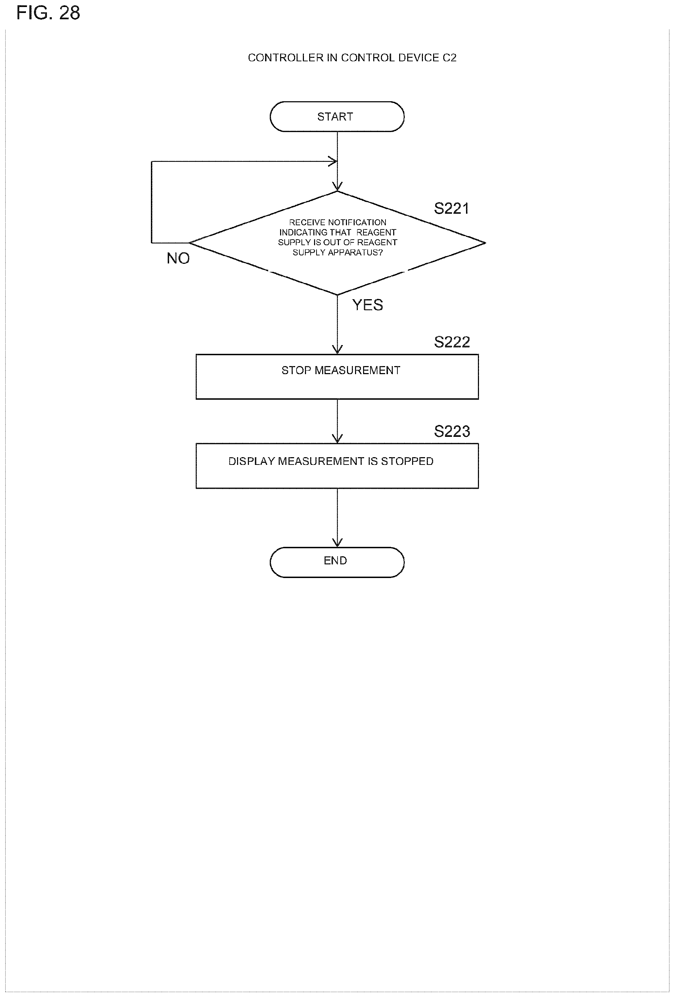

FIG. 28 is a flowchart showing the process of stopping process based on running out of reagent by the controller 501 of control device C2. The process in FIG. 25 is repeatedly executed in each control device C2.

When the controller 501 of control device C2 receives a notification indicating that the reagent supply apparatus 50 is out of reagent sent from control device C1 in step S212 of FIG. 27 (step S221: YES), the process proceeds to step S222.

The controller 501 of control device C2 stops the measurement of the two sample measurement devices 32-L and 32-R connected to the control device C2 in step S222, and in step S223, displays on the input display 31b of the control device C2 that the measurement of these two sample measurement devices 32-L and 32-R has been stopped. Specifically, as shown in FIG. 19, an error window 470 containing a message that measurement is stopped due to running out of reagent is displayed above the device information areas 410L and 410R.

The controller 521 of the smear preparing device 41 also performs almost the same process as in steps S221-S223. That is, when the controller 521 receives a notification indicating that the reagent supply apparatus 50 is out of reagent, the smear preparation by the corresponding smear preparing device 41 is stopped and displays on the input display 523 of the smear preparing device 41 that the smear preparation is stopped.

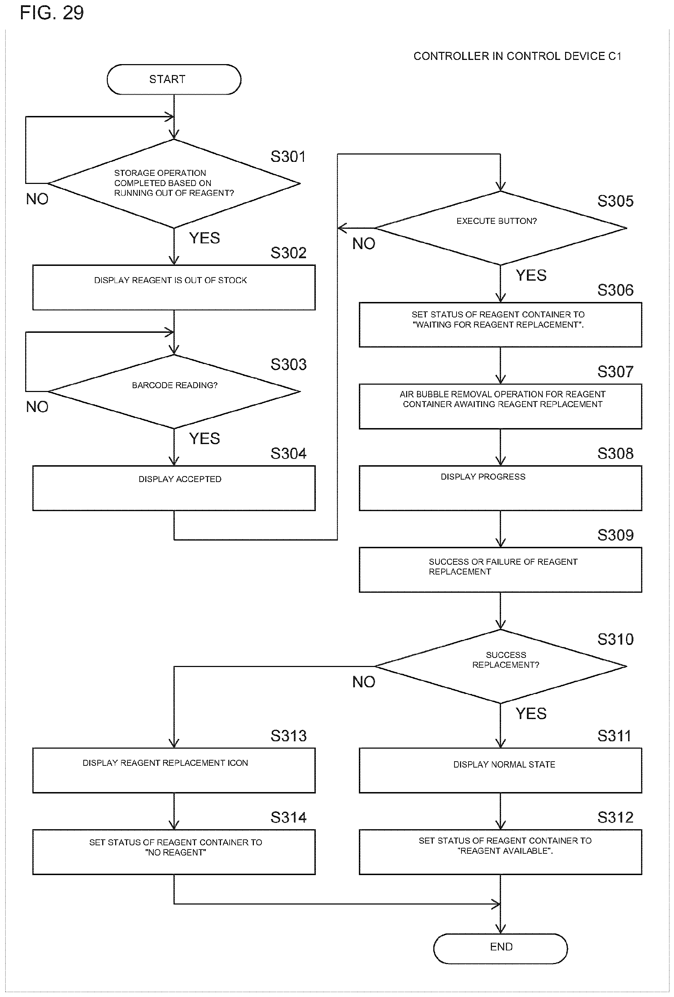

FIG. 29 is a flowchart showing the display process for reagent replacement by the controller 501 of control device C1. The process in FIG. 29 is executed repeatedly in parallel for each of the reagent containers 60.

In step S301, the controller 501 of control device C1 determines whether the storage operation based on running out of reagent has been completed. Specifically, in FIG. 27, when there is no reagent in the reagent container 60 in use is detected (step S204: NO) and the storage operation (step S207) for this reagent container 60 is completed, the completion of the storage operation based on running out of reagent is determined in step S301.

When the storage operation based on a reagent run-out is completed (step S301: YES), in step S302, the controller 501 of control device C1 displays an icon 452 indicating that the reagent container 60 needs to be replaced in the corresponding reagent information 441a or 441b, as shown in display state 1 in FIG. 15 and, as shown in FIG. 17, the error window 460 displays that one of the reagent containers 60 is out of reagent. After confirming the display of the icon 452 and the error window 460, the user sets a new reagent container 60 in place of the reagent container 60 that is out of reagent, and operates the barcode reader 31c to have the barcode of the new reagent container 60 read.

When the controller 501 of control device C1 reads the barcode of reagent container 60 by barcode reader 31c (step S303: YES), in step S304, as shown in display state 2 in FIG. 15, the icon 453 indicating that the reagent replacement has been accepted is displayed in the corresponding reagent information 441a or 441b. After confirming the icon 453, the user operates the execute button 442 (see FIG. 14).

When the controller 501 of control device C1 detects that the execute button 442 has been operated (step S305: YES), the barcode information of the new reagent container 60 that has been accepted for replacement is stored in the memory 502, and in step S306, the status of the reagent container 60 that has been accepted for replacement is set to "waiting for reagent replacement". Then, in step S307, the controller 501 of the control device C1 performs an air bubble removal operation on the reagent container 60 awaiting reagent replacement. Specifically, reagent is transferred from the reagent container 60 awaiting reagent replacement to the reagent reservoir 201 for a predetermined time, as in FIGS. 8 and 9. This eliminates air bubbles present in the piping 210 leading from the reagent container 60 awaiting reagent replacement to the reagent reservoir 201, allowing for smooth transfer of the reagent thereafter.

In step S308, the controller 501 of the control device C1 displays an icon 454 in the corresponding reagent information 441a or 441b, as shown in display state 3 in FIG. 15, indicating the progress status of the bubble removal operation that was started in step S307. The progress status is generated, for example, based on the percentage of time since the bubble removal operation was started relative to the predetermined time for the bubble removal operation set in advance.

When the predetermined time for the bubble removal operation elapses, in step S309, the controller 501 of the control device C1 determines the success or failure of the reagent replacement for the reagent containers 60 waiting for the reagent replacement. Specifically, the controller 501 of the control device C1 determines whether the reagent is flowing properly in the flow path at the position of the bubble monitoring sensor 231 or 232 based on the results detected by the bubble monitoring sensor 231 or 232 during the bubble removal operation, and determines whether the reagent replacement is successful.

In step S309, the controller 501 of control device C1 may determine whether the reagent reservoir 201 has been filled by transferring reagent for a predetermined time based on the results detected by the float sensor 201a during the air bubble removal operation, and determine the success or failure of the reagent replacement.

When the controller 501 of control device C1 determines that the reagent replacement was successful (step S310: YES), in step S311, the icon 454 indicating the progress of the bubble removal operation is erased and the reagent container 60 is in a normal state, as shown for example in the reagent information 441a in display state 4 in FIG. 15 Display. Then, in step S312, the controller 501 of the control device C1 sets the status of the reagent container 60 waiting for reagent replacement to "with reagent".

On the other hand, if the controller 501 of control device C1 determines that the reagent replacement is a failure (step S310: NO), in step S313, the icon 454 indicating the progress of the bubble removal operation is erased and the reagent container 60 needs to be replaced again, as shown in reagent information 441a in display state 1 in FIG. 15. Then, in step S314, the controller 501 of control device C1 sets the status of the reagent container 60 waiting for reagent replacement to "no reagent".

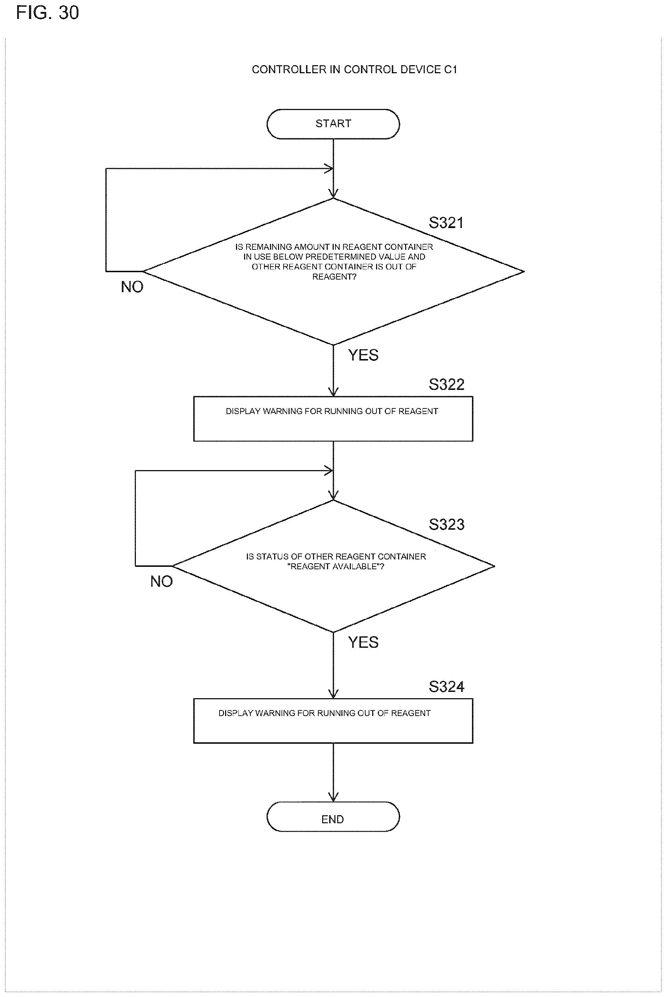

FIG. 30 is a flowchart showing the process of displaying warnings about reagent replacement by the controller 501 of the control device C1. The process in FIG. 30 is executed repeatedly in parallel for each of the two pairs of reagent containers 60.

In step S321, the controller 501 of the control device C1 determines whether, in the two reagent containers 60 of the pair, the remaining amount in the reagent container 60 in use is below a predetermined value and the status of the other reagent container 60 is "no reagent". The predetermined value for determining the remaining amount is, for example, 25%. Here, the remaining reagent amount of all reagent containers 60 is stored in the memory 502 of the control device C1. The remaining reagent volume is updated in real time based on the known remaining reagent volume of the reagent containers 60 when new and the amount of reagent transferred from the reagent containers 60 to the reagent reservoir 201. The amount of reagent transferred is obtained, for example, based on the number of times the reagent is transferred from the reagent container 60 to the reagent reservoir 201.

The amount of reagent transferred may be obtained based on the time the reagent passes through the bubble monitoring sensors 231 and 232, or based on the number of times the liquid pump 251 is driven. The amount of reagent transferred may be obtained based on the number of measurements by the eight sample measurement devices 32-L and 32-R and the number of preparation times by the two smear preparing device 41.

If the remaining amount in the two pairs of reagent containers 60 as described above has become low (step S321: YES), in step S322, the controller 501 of control device C1 displays in the error window 460, as shown in display states 5 and 6 in FIG. 20, that the remaining amount is below a predetermined value, and displays the reagent information icon 455 indicating that the remaining amount of the reagent is low in the reagent information area 441.

Then, in step S323, the controller 501 of the control device C1 determines whether the other reagent container 60 has been replaced with a new reagent container 60 and the status of the other reagent container 60 is now "with reagent" or not. If the status of the other reagent container 60 becomes "with reagent" (step S323: YES), in step S324, the controller 501 of control device C1 removes the out-of-reagent warning that was displayed in step S322. As a result, the prompt to replace the reagent disappears from the error window 460, and the icon 455 disappears from the reagent information area 441.

FIG. 31 is a flowchart showing the process of startup and shutdown operations of the reagent supply apparatus 50 by the controller 501 of the control device C1. The process in FIG. 31 is executed repeatedly in parallel for each of the supply units 200 of the reagent supply apparatus 50.

In step S401, the controller 501 of the control device C1 determines whether the reagent reservoir 201 is full based on the detection result of the float sensor 201a. If the reagent reservoir 201 is not full (step S401: NO), in step S402, the controller 501 of the control device C1 drives the supply unit 200 so that reagents are transferred from the reagent container 60 in use among the two pairs of reagent containers 60 to the reagent reservoir 201 to fill up the reagent reservoir. On the other hand, if the reagent reservoir 201 is full (step S401: YES), the process of step S402 is omitted.

In step S403, the controller 501 of control device C1 drives the supply unit 200 to transfer reagent throughout the entire piping 210 using the reagent container 60 in use, as illustrated in FIG. 12.

### <Effects of the sample measurement system and reagent supply apparatus according to the first embodiment>

One of the DPB, DST, WNR, DFL, SLS, WPC, and the WDF reagents will hereinafter be referred to as "Reagent 1", and the other of the DPB, DST, WNR, DFL, SLS, WPC, and the WDF reagents of a different type from Reagent 1 will be referred to as "Reagent 2". Other reagents among DPB, DST, WNR, DFL, SLS, WPC, and the WDF reagents that are different from the first and second reagents are referred to as "third reagents".

The sample measurement system 1 includes a plurality of sample measurement devices 32-L, 32-R, and a reagent supply apparatus 50. The sample measurement devices 32-L, 32-R measure samples using a first reagent and a second reagent. The reagent supply apparatus 50 includes a piping 210 (first piping) connected to each of a plurality of reagent containers 60 (first reagent containers) in which the first reagent is stored, a reagent reservoir 201 (first reagent reservoir) that stores the first reagent transferred via the piping 210 (first piping), the piping 210 (second piping connected to each of a plurality of reagent containers 60 (second reagent containers) in which the second reagent is stored, and the reagent reservoir 201 (second reagent reservoir) that stores the second reagent transferred via the piping 210 (second piping). The first reagent stored in the reagent reservoir 201 (first reagent reservoir) is supplied to each of the plurality of sample measurement devices 32-L and 32-R, and the second reagent stored in the reagent reservoir 201 (second reagent reservoir) is supplied to the plurality of sample measurement devices 32-L and 32-R.

Large-scale facilities may have multiple sample analyzers that measure samples using multiple types of reagents. Generally, if any of the reagents run out, the sample analyzers stop measuring. In addition, when reagents are consumed by multiple sample measurement devices, each type of reagent is likely to run out. Therefore, the user needs to monitor the status of each type of reagent and frequently change the reagent for each type of reagent to avoid running out of reagent.

In contrast, according to the above configuration, the reagent supply apparatus 50 includes a reagent reservoir 201 that stores reagents from a plurality of reagent containers 60 in each supply unit 200, and the reagents in each reagent reservoir 201 are supplied to a plurality of sample measurement devices 32-L, 32-R. This may allow reagents to be supplied from the reagent reservoir 201 in each of the supply units 200 for a while when the respective type of reagent container 60 runs out of reagent, so that the user does not have to replace the reagent immediately and may replace the reagent container 60 that has run out with a new reagent container 60 at a time convenient to the user. This may reduce the user's monitoring burden for reagent replacement and the frequency of reagent replacement. Thus, the user burden of reagent replacement in large facilities may be reduced.

The reagent supply apparatus 50 includes switches 241, 242, 252 and liquid pump 251 (first reagent transfer section) that transfer each of the first reagents contained in a plurality of reagent containers 60 (first reagent containers) to the reagent reservoir 201 (first reagent reservoir) through the piping 210 (first piping) corresponding to the first reagent, and flow switch 241, 242, 252 and liquid pump 251 (first reagent transfer section) that transfer each of the second reagents contained in a plurality of reagent containers 60 (second reagent containers) to the reagent reservoir 201 (second reagent reservoir) through the piping 210 (second piping) corresponding to the second reagent.

According to this configuration, the transfer of each reagent to the reagent reservoir 201 may be executed independently.

The above first reagent transfer section corresponding to the first reagent includes flow switches 241 and 242 (first flow switch) that switch the flow path of piping 210 (first piping) from one reagent container 60 (first reagent container) to another reagent container 60 (first reagent container), a liquid pump 251 (first pumping section) that pumps a first reagent into the flow path of the piping 210 (first piping) that has been switched by the flow switches 241, 242 (first flow switch). The above second reagent transfer section corresponding to the second reagent includes flow switches 241 and 242 (second flow switch) that switch the flow path of piping 210 (second piping) from one reagent container 60 (second reagent container) to another reagent container 60 (second reagent container) containing the second reagent, a liquid pump 251 (second pumping section) that pumps the second reagent into the flow path of the piping 210 (second piping) that is switched by the flow switches 241 and 242 (second flow switches).

According to this configuration, if a reagent container 60 in use runs out of reagent, the flow path of the piping 210 may be smoothly switched to another reagent container 60 to transfer reagent to the reagent reservoir 201.

The reagent supply apparatus 50 further includes bubble monitoring sensors 231, 232 and float sensor 201a (first detector) that detect the supply status of the first reagent contained in each of the plurality of reagent containers 60 (first reagent containers), bubble Monitoring sensors 231, 232 and float sensor 201a (second detector) that detect the supply status of the second reagent contained in each of the plurality of reagent containers 60 (second reagent containers), and the controller 501 of control device C1. The controller 501 of the control device C1 switches the reagent containers 60 in use, as shown in FIG. 27. That is, based on the detection results (first detection results) of the bubble monitoring sensors 231, 232 and the float sensor 201a (first detector), the controller 501 of the control device C1 controls the flow switch 241, 242 and the liquid pump 251 (first reagent transfer section) to switch the flow path from one reagent container 60 (first reagent container) containing the first reagent to the other reagent container 60 (first reagent container) and the flow switch 241, 242 and the liquid pump 251 (second reagent transfer section) are controlled to switch the flow path of the piping 210 (second piping) from the reagent container 60 (second reagent container) to the other reagent container 60 (second reagent container).

According to this configuration, the state of reagent supply may be detected based on the above detection results, thus ensuring that the necessary flow paths are switched.

The controller 501 of control device C1 controls flow switches 241 and 242 to transfer the first reagent through the flow path of piping 210 (first piping) switched by flow switches 241 and 242 (first flow switch) based on the detection results (first detection results) of bubble monitoring sensors 231 and 232 and float sensor 201a and liquid pump 251 (first reagent transfer section), and controls flow switches 241 and 242 to transfer the second reagent through the flow path of piping 210 (second piping) switched by flow switches 241 and 242 (second flow switch) based on the detection results of bubble monitoring sensors 231 and 232 and float sensor 201a (second detection results).

According to this configuration, reagents may be smoothly transferred to the reagent reservoir 201 because transfer of reagents is performed along with switching of flow paths based on the detection results at each of the 200 supply units.

The float sensor 201a (first detector) is located in the reagent reservoir 201 (first reagent reservoir) corresponding to the first reagent, and the float sensor 201a (second detector) is located in the reagent reservoir 201 (second reagent reservoir) corresponding to the second reagent.

According to this configuration, in each of the 200 supply units, a float sensor 201a is provided in the reagent reservoir 201, so that the state of reagent supply to the reagent reservoir 201 as well as the state of the reagent storage in the reagent reservoir 201 may be detected.

Bubble monitoring sensors 231 and 232 (first detector) are installed in the piping 210 (first piping) corresponding to the first reagent, and bubble monitoring sensors 231 and 232 (second detector) are installed in the piping 210 (second piping) corresponding to the second reagent.

According to this configuration, since the bubble monitoring sensors 231 and 232 are installed in the piping 210 in each of the supply units 200, the supply state of the reagent may be directly detected from the state of the reagent flowing through the piping 210. Therefore, the supply status of the reagent contained in each of the reagent container 60 connected to each of the supply units 200 and the supply status of the reagent contained in each of these reagent containers 60 may be reliably determined.

The float sensor 201a may be the first detector that detects the supply state of the first reagent contained in each of the plurality of first reagent containers, and the bubble monitoring sensors 231 and 232 may be the second detector that detects the supply state of the second reagent contained in each of the plurality of second reagent containers.

The piping 210 (first piping) corresponding to the first reagent includes a plurality of flow paths 211-215 (first flow paths), and the piping 210 (second piping) corresponding to the second reagent includes a plurality of flow paths 211-215 (second flow paths). The controller 501 of the control device C1 controls the flow switches 241, 242, 252 and the liquid pump 251 (first reagent transfer section) to transfer the first reagent to the flow path that are used to transfer the first reagent from one reagent container 60 (first reagent container) which is empty, and to the flow path not used to transfer the first reagent from another reagent container 60 (first reagent container) that is not empty (step S207 in FIG. 27). In addition, the controller 501 of the control device controls the flow switches 241, 242, 252 and the liquid pump 251 (second reagent transfer section) to transfer the second reagent to the flow path that are used to transfer the second reagent from one reagent container 60 (second reagent container) which is empty, and to the flow path not used to transfer the second reagent from another reagent container 60 (second reagent container) that is not empty (step S207 in FIG. 27).

In general, if a reagent container 60 runs out of reagent and is left in this state for a long period of time, the inside of the piping 210 leading to the reagent container 60 may dry out, and compositional material from the reagent remaining in the piping 210 may precipitate, causing a clog or other problem when the reagent supply is restarted. In contrast, according to the above configuration, the flow paths leading to the empty reagent container 60, for example, the flow path 211 leading to reagent container RC1 shown in FIG. 10 or the flow path 212 leading to reagent container RC2 shown in FIG. 11, store the reagent, thereby preventing compositional precipitation and blockages in the piping 210.

In the above control to store the first reagent, the controller 501 of the control device C1 causes the flow switch 241, 242, 252 and the liquid pump 251 (first reagent transfer section) to transfer the first reagent from the other reagent container 60 (first reagent container) to one reagent container 60 (first reagent container). In the above control to store the second reagent, the controller 501 of the control device C1 causes the flow switch 241, 242, 252 and the liquid pump 251 (second reagent transfer section) to transfer the second reagent from the other reagent container 60 (second reagent container) to one reagent container 60 (second reagent container).

According to this configuration, as shown in FIGS. 10 and 11, in storing reagents, reagents in the reagent reservoir 201 are not used, but those in the other reagent containers 60 are used. This may allow the remaining amount of reagent in the reagent reservoir 201 to be maintained, so that the sample measurement devices 32-L, 32-R and smear preparing device 41 on the latter side may continue stable operation.

The controller 501 of control device C1 executes the above control for storing the first reagent and the above control for storing the second reagent as shown in step S403 of FIG. 12 and FIG. 31 at the timing of termination and startup of the sample measurement system 1.

According to this configuration, the storage operation is unlikely to interfere with the measurement operation. Therefore, the measurement operation may proceed smoothly. When the sample measurement system 1 is not used for a long period of time after the end of the system, composition precipitation and clogging due are likely to occur in the 210 piping. In contrast, if the control for storing reagent is executed at the timing of the termination of the sample measurement system 1, the inside of the piping 210 is filled with reagent before the piping 210 is not used for a long time, thus preventing precipitation and clogging of the composition.

According to one or more embodiment, the storage operation was performed at the timing of both the end and the startup of the sample measurement system 1. However, the storage operation may be performed at the timing of at least one of the end and the startup of the sample measurement system 1. However, as mentioned above, it may be preferable that the storage operation is performed at the timing of the end of the sample measurement system 1 because precipitation and clogging of the composition occur when the piping 210 is not used for a long period of time.

The reagent supply apparatus 50 further includes bubble monitoring sensors 231, 232 and float sensor 201a (first detector) that detect a reagent run-out of the first reagent for each of the plurality of reagent containers 60 (first reagent containers), bubble monitoring sensors 231, 232 and float sensor 201a (second detector), that detect a reagent run-out of the second reagent for each of the plurality of reagent containers 60 (second reagent containers). The controller 501 of the control device C1 executes the above control for storing the first reagent as shown in step S207 of FIGS. 10, 11 and 27, in response to having determined from the detection results of the bubble monitoring sensors 231 and 232 and the float sensor 201a (first detector) that the reagent of the first reagent has run out in one reagent container 60 (first reagent container). In addition, the controller 501 of the control device C1, in response to having determined from the detection results of the bubble monitoring sensors 231 and 232 and the float sensor 201a (second detector) that one reagent container 60 (second reagent container) that the reagent of the second reagent has run out in one reagent container 60 (second reagent container), as shown in FIGS. 10, 11 and step S207 of FIG. 27.

This configuration may ensure that the empty piping 210 is filled with reagent in response to one reagent container 60 running out of reagent, thus preventing precipitation and clogging of the composition.

After the controller 501 of control device C1 determines from the detection results of the bubble monitoring sensors 231 and 232 and the float sensor 201a (first detector) that one reagent container 60 (first reagent container) has run out of reagent (step S204: NO in FIG. 27), the above control for storing the first reagent (step S207 in FIG. 27) is executed before the process of reporting that the reagent has run out (step S302 in FIG. 29) is performed. After the controller 501 of the control device C1 determines from the detection results of the bubble monitoring sensors 231 and 232 and the float sensor 201a (second detector) that one reagent containers 60 (second reagent container) has run out of the second reagent (step S204: NO of FIG. 27), the above control (step S207 in FIG. 27) for storing the second reagent is executed before the process of reporting that the reagent has run out (step S302 in FIG. 29) is performed.

When a reagent container 60 is reported to be out of reagent, the reagent container 60 may be immediately replaced by the user. During this replacement, there is a risk of reagent leakage if reagent is transferred from another reagent container 60 to one reagent container 60. According to the above configuration, the reagent storage is performed before notification is made, thus avoiding reagent leakage.

The reagent supply apparatus 50 includes a reagent reservoir 201 (third reagent reservoir) that stores the third reagent transferred via piping 210 (third piping) connected to each of a plurality of reagent containers 60 (third reagent containers) in which the third reagent is contained. The third reagent stored in the reagent reservoir 201 (third reagent reservoir) is supplied to each of the plurality of sample measurement devices 32-L and 32-R.

Generally, when measuring samples using three types of reagents, the user needs to change reagents more frequently. Even when three types of reagents are used, the above configuration may reduce the user's burden of reagent replacement.

The sample measurement system 1 further includes a smear preparing device 41 for preparing smears of samples and sample transport devices 22 and 23 for transporting racks 100 capable of holding a plurality of sample containers 110 containing samples. The transport devices 22 and 23 are configured to transport the rack 100 to each of the plurality of sample measurement device 32-L, 32-R and smear preparing device 41.

This configuration may allow automatic transport of samples to the sample measurement devices 32-L, 32-R and the smear preparing device 41, eliminating the need for the user to manually transport the samples and increasing the speed of sample processing.

The reagent supply apparatus 50 further includes bubble monitoring sensors 231, 232 and float sensor 201a (first detector), which detect out-of-reagent of the first reagent for each of a plurality of reagent containers 60 (first reagent containers), bubble monitoring sensors 231, 232 and float sensor 201a (second detector), which detect out-of-reagent of the second reagent for each of a plurality of reagent containers 60 (second reagent containers), the controller 501 of control device C1, and input display 31b (display device) of control device C1. The controller 501 of the control device C1 determines from the detection results of the bubble monitoring sensors 231 and 232 and the float sensor 201a (first detector) that the reagent container 60 (first reagent container) has run out of the first reagent (step S301: YES in FIG. 29), displays information indicating the reagent has run out (the icon 452 in FIG. 15 and error window 460 in FIG. 17) on the input display 31b (display device) of the control device C1. In addition, the controller 501 of the control device C1 determines from the detection results of the bubble monitoring sensors 231 and 232 and the float sensor 201a (second detector) that the reagent container 60 (second reagent container) has run out of the second reagent (step S301: YES in FIG. 29), displays information indicating the reagent has run out (the icon 452 in FIG. 15 and error window 460 in FIG. 17) on the input display 31b (display device) of the control device C1

This configuration may allow the user to quickly determine if the reagent has run out.

When the controller 501 of control device C1 determines that the reagent of the first reagent has run out in all reagent containers 60 (first reagent container) (step S206 in FIG. 27: NO) or that the reagent of the second reagent has run out in all reagent containers 60 (second reagent container) (step S206 in FIG. 27: NO), a process (steps S209 and S212 in FIG. 27) is executed to stop the measurement operation by the multiple sample measurement devices 32-L and 32-R, and the input display 31b (display device) of control device C1 displays information indicating that the measurement operation has stopped (error window 470 in Figs. 18 and 19) (step S210 in FIG. 27 and step S223 in FIG. 28).

If reagent runs out in all reagent containers 60 of a given type, there is a risk for not being able to make proper measurements. According to the above configuration, improper measurements may be prevented and the user may quickly understand that the measurement operation has stopped.

The sample measurement system 1 includes a plurality of input displays 31b and 523 (display devices). The controller 501 of the control device C1 displays information indicating that a reagent has run out (the icon 452 in FIG. 15 and error window 460 in FIG. 17) on one of the multiple input display 31b and 523 (display device), for example, on the input display 31b (display device) of the control device C1.

According to this configuration, the user may easily determine that the reagent has run out by referring to only one of the multiple input displays 31b and 523.

Information indicating that a reagent run-out may be displayed on all input displays 31B and 523. However, if the information indicating that the reagent has run out is displayed on only one input display, the user may smoothly grasp other information (e.g., measurement status) on the other input display.

As shown in FIG. 6, the reagent supply apparatus 50 further includes a chassis 51 whose inside is divided into an upper area 51a and a lower area 51b by a partition member 52. In the upper area 51a, a circuit board 53 (a substrate containing electrical circuits) is provided. The lower area 51b includes, as shown in FIG. 7, the piping 210 (first piping) corresponding to the first reagent, a reagent reservoir 201 (first reagent reservoir), and bubble monitoring sensors 231 and 232 and a float sensor 201a (first detector), and the piping 210 (second piping) corresponding to the second reagent, a reagent reservoir 201 (second reagent reservoir), and bubble monitoring sensors 231, 232 and float sensor 201a (second detector) are provided.

According to this configuration, the circuit board 53 is placed in the upper area 51a, and the fluid circuit for transferring reagents is placed in the lower area 51b. This prevents a situation in which the circuit board 53 malfunctions due to leakage of reagent into the circuitry.

### <Second embodiment>

In the first embodiment, as shown in FIG. 7, in each of the supply units 200, the lower end of the reagent reservoir 201 is connected to the relay device 70, smear preparing device 41, or dilution device 80 by flow path 216. In contrast, in the second embodiment, the lower end of the reagent reservoir 201 is connected to the relay device 70, smear preparing device 41 or dilution device 80, and the flow path on the liquid pump 251 side of the supply unit 200, via flow paths 216, 217 and 218. The following is a description of the differences from the first embodiment shown in FIG. 7.

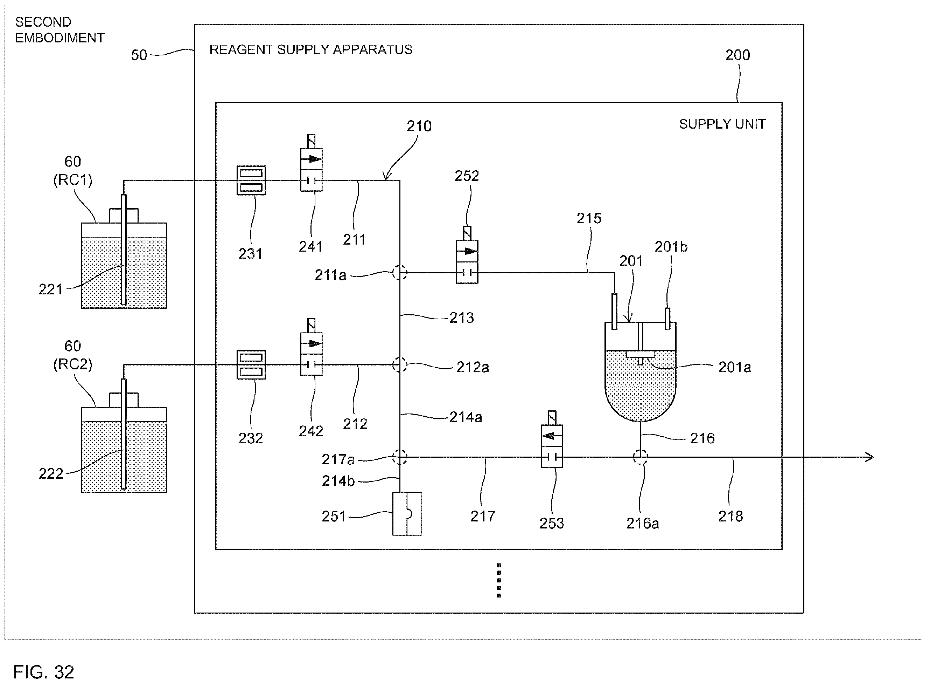

FIG. 32 schematically illustrates the fluid circuit of the reagent supply apparatus 50, according to the second embodiment.

The lower end of flow path 216 is connected to flow paths 217 and 218 at intersection 216a. The opposite end of flow path 217 is connected to flow paths 214a and 214b at intersection 217a. The end of flow path 218 opposite intersection 216a is connected to relay device 70, smear preparing device 41 or dilution device 80. One end of flow path 214a is connected to flow paths 212 and 213 at intersection 212a, and the other end of flow path 214a is connected to intersection 217a. One end of flow path 214b is connected to liquid pump 251, and the other end of flow path 214b is connected to intersection 217a. The flow switch 253 switches the flow path 217 to either the open or closed state.

The flow switch 253 may be a solenoid valve or other configuration as long as the flow switch 253 is capable of switching the flow path 217 to either the open or closed state. For example, the flow switch 253 may be an electrically switchable valve.

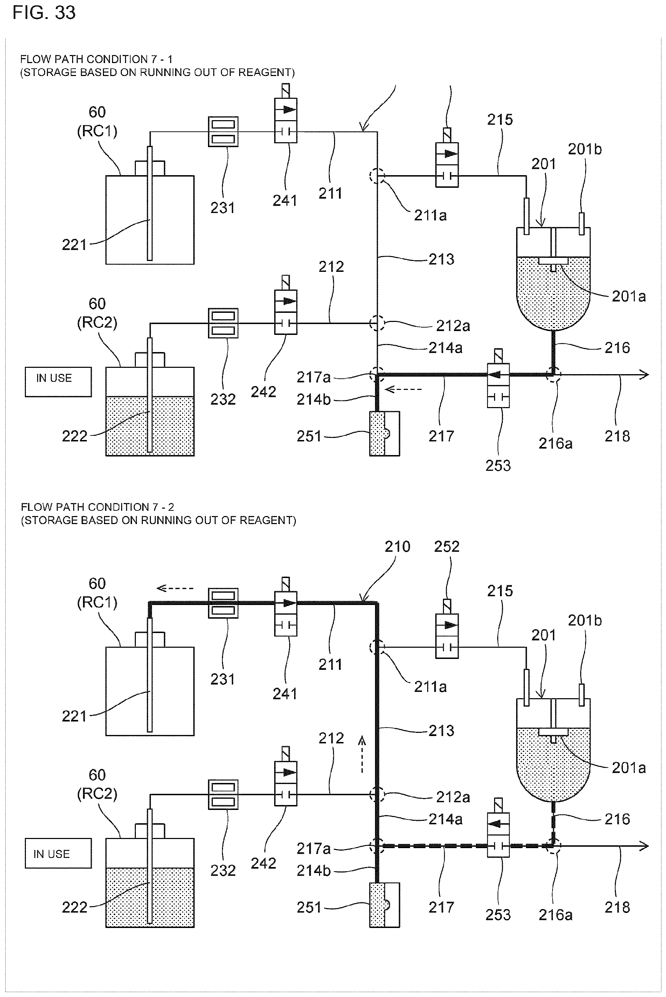

FIG. 33 illustrates the storage operation when reagent container RC1 runs out of reagent. In this example, reagent container RC2 is set to be in use.

As shown in the upper flow path state 7-1 in FIG. 33, the flow switch 253 is set to the open state, and the liquid pump 251 performs suction operation. As a result, the reagent in the reagent reservoir 201 is drawn to the liquid pump 251, and the flow paths 216, 217, and 214b are filled with reagent. Then, as shown in the lower flow path state 7-2 in FIG. 33, the flow switch 253 is closed, the flow switch 241 is opened, and the discharge operation is performed by the liquid pump 251. As a result, the reagent drawn into the liquid pump 251 is transferred to the reagent container RC1 via the flow paths 214b, 214a, 213, and 211. The flow switch 241 is then closed, and the flow paths 211 from tube 221 to the flow switch 241 is filled with reagent, completing the storage operation.

In the second embodiment, in step S207 of FIG. 27, the controller 501 of control device C1 performs the storage operation by controlling flow switches 241, 242, 252, 253 and liquid pump 251 to transfer reagent in reagent reservoir 201 to the empty reagent container 60, as shown in FIG. 33.

In the case of a storage operation in which the reagent is stored in the entire piping 210, the controller 501 of control device C1 also performs the storage operation in step S403 of FIG. 31 by controlling the flow switches 241, 242, 252, 253 and liquid pump 251 to transfer the reagent in the reagent reservoir 201 to the entire piping 210.

The upper end of the flow path 216 may be connected from the lowest part of the reagent reservoir 201 (lower end of the inside) to a position about 1/4 to 1/5 of the height width of the inside of the reagent reservoir 201. In this case, the reagent in the reagent reservoir 201 may still be smoothly transferred via flow paths 216 and 217 to the flow path on the 251 side of the pumping section of the supply unit 200. However, as shown in FIG. 32, the upper end of flow path 216 should be connected to the lowest part of reagent reservoir 201. This may allow the reagent in the reagent reservoir 201 to be transferred even more smoothly to the flow path 216.

According to the second embodiment, the end of the flow path 215 on the reagent reservoir 201 side may extend to near the bottom of the inside of the reagent reservoir 201. In this case, the controller 501 of the control device C1 may control the flow switches 241, 242, 252 and the liquid pump 251 to transfer the reagent in the reagent reservoir 201 through the flow paths 215 for the storage operation.

### <Effects of the sample measurement system and reagent supply apparatus according to the second embodiment>

The piping 210 (first piping) corresponding to the first reagent includes a plurality of flow paths 211-213, 214a, 214b, 215-218 (first flow paths), and the piping 210 (second piping) corresponding to the second reagent includes a plurality of flow paths 211-213, 214a, 214b, 215-218 (second flow paths). The controller 501 of the control device C1 controls the flow switch 241, 242, 252, 253 and the liquid pump 251 (first reagent transfer section) so as to transfer and store the first reagent in the follow path that is used to transfer from an empty reagent container 60 (the first reagent container) and the flow path not used to transfer the first reagent from non-empty reagent container 60 (the first reagent container) among the plurality of flow channels 211-213, 214a, 214b, and 215-218 (first flow paths). The controller 501 of the control device C1 controls the flow switch 241, 242, 252, 253 and the liquid pump 251 (second reagent transfer section) so as to transfer and store the second reagent in the follow path that is used to transfer from one empty reagent container 60 (the second reagent container) and the flow path not used to transfer the second reagent from another non-empty reagent container 60 (the second reagent container) among the plurality of flow channels 211-213, 214a, 214b, and 215-218 (second flow paths).

In this configuration, reagents are also stored in the flow path leading to the empty reagent container 60, for example, in flow path 211 leading to reagent container RC1 in FIG. 33, which prevents precipitation and clogging of the composition in the piping 210.

When the storage operation is performed using reagents in the reagent reservoir 201, according to the second embodiment, the amount of reagent in the reagent reservoir 201 temporarily decreases during the storage operation. Therefore, depending on the capacity of the reagent reservoir 201, there is a risk that the reagent may not be supplied stably to the sample measurement devices 32-L, 32-R, and smear preparing device 41 at the latter stage. Therefore, if such a problem arises, it may be preferable to perform the storage operation using the non-empty reagent container 60, as in the first embodiment.

### <Third embodiment>

According to the third embodiment, warning lights 91 and 92 are placed at each sample measurement devices 32-L and 32-R and each smear preparing device 41. The following is a description of the differences from the first embodiment shown in FIG. 1.

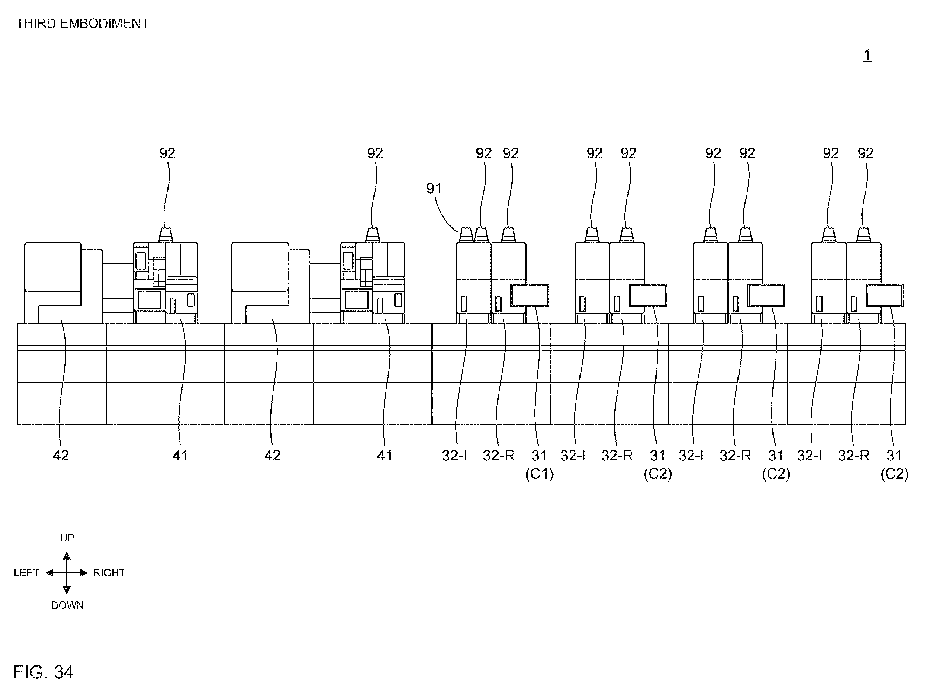

FIG. 34 is a front view of the third embodiment, schematically showing the configuration of the sample measurement system 1.

Of the two sample measurement devices 32-L and 32-R corresponding to control device C1, a warning light 91 is installed on the top of the left side sample measurement device 32-L. The warning light 91 is connected to the control device C1 and is directly controlled by the control device C1. Warning lights 92 are installed on the top surface of each of the sample measurement devices 32-L and 32-R and each of the smear preparing device 41. The warning lights 92 installed on each of the sample measurement devices 32-L and 32-R are connected to the corresponding control device 31 and are directly controlled by the control device 31. The warning lights 92 installed in each smear preparing device 41 are connected to the corresponding smear preparing device 41 and are directly controlled by the smear preparing device 41.

The controller 501 of control device C1 controls the lighting of all warning lights 91 and 92. The controller 501 of control device C1 directly controls the lighting of warning lights 91 and 92 connected to control device C1. When the controller 501 of control device C1 controls the lighting of warning lights 92 connected to control device C2, the lighting instruction is sent to control device C2 and causes the controller 501 of control device C2 to perform lighting control. When controlling the lighting of warning light 92 connected to smear preparing device 41, the controller 501 of control device C1 sends lighting instruction to smear preparing device 41 and causes controller 521 of smear preparing device 41 to control the lighting.

The warning lights 91 and 92 are configured to emit light in an upward direction and illuminate the ceiling of the room in which the sample measurement system 1 is installed.

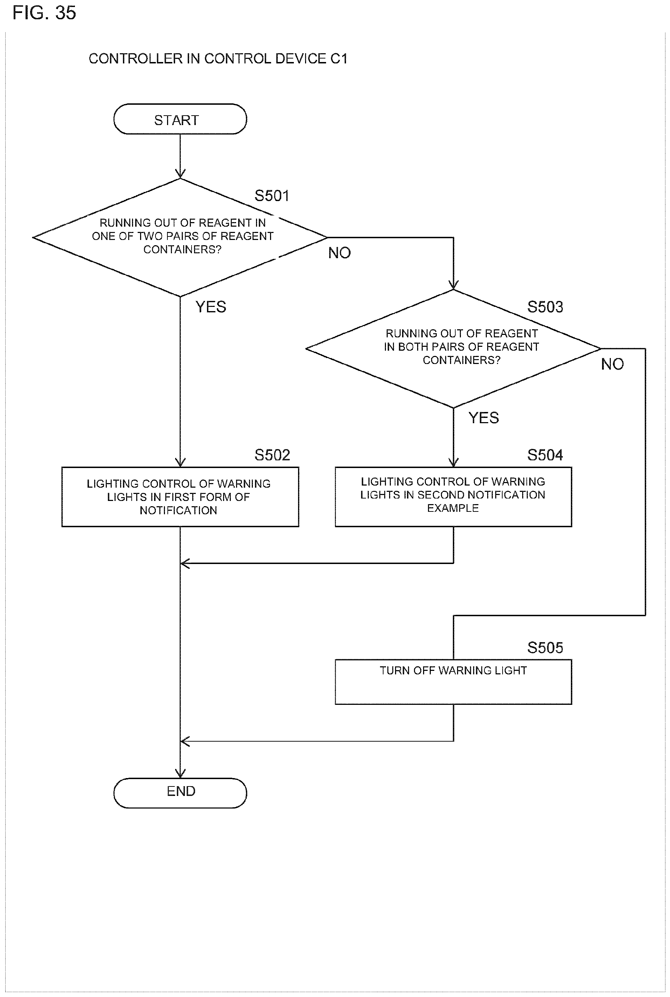

FIG. 35 is a flowchart showing the process of turning on warning lights 91 and 92 by the controller 501 of control device C1. The process in FIG. 35 is executed repeatedly.

In step S501, the controller 501 of control device C1 refers to the status of each reagent container 60 to determine if one reagent container 60 is out of reagent in any set of two reagent containers 60, and if both reagent containers 60 are out of reagent in all sets of two reagent containers 60. In step S501 and step S503 below, if the status of reagent container 60 is "no reagent" or "waiting for reagent replacement", the reagent container 60 is determined to be out of reagent. If the status is determined to be YES in step S501, all measurements and all smear preparations have not stopped and are continuing, as described in the first embodiment.

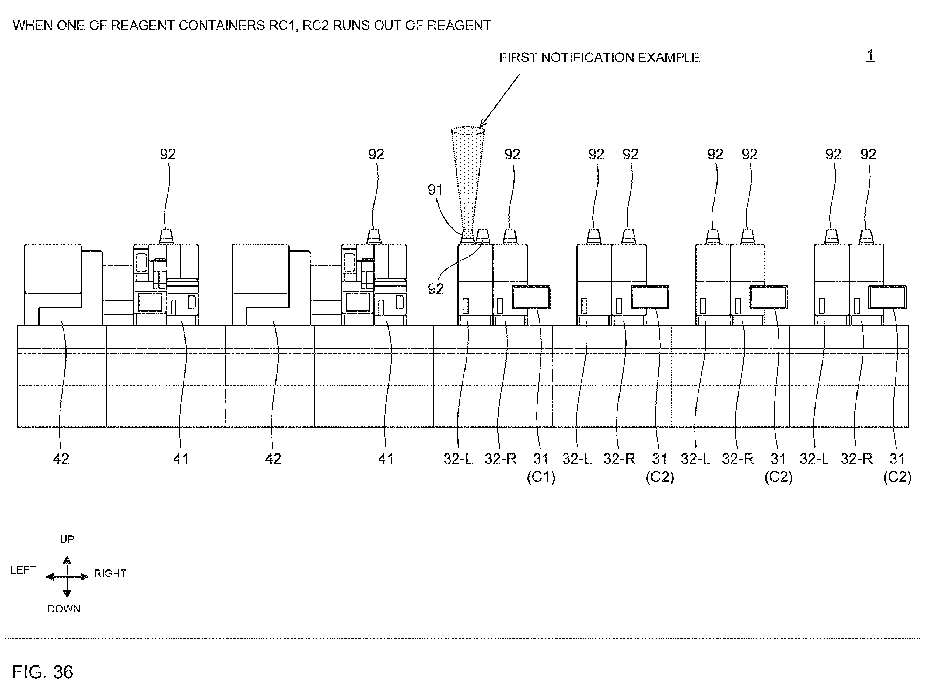

If the controller 501 of control device C1 determines YES in step S501,the controller 501 controls the warning light 91 to light up in a first notification example in step S502. The first notification example is, for example, green lighting. As shown in FIG. 36, this causes only warning light 91 to be lit in the first notification example and all warning lights 92 to be turned off. By referring to the lighting status as shown in FIG. 36, the user may know that the measurement and smear preparation have not stopped and that it may be preferable to replace the reagent container 60 that has run out of reagent as soon as possible.

In step S502, together with or instead of controlling the lighting of the warning light 91, an alarm sound corresponding to the first notification example may be output from the speaker provided in the control device C1.

In step S503, the controller 501 of the control device C1 refers to the status of each reagent container 60 to determine whether both reagent containers 60 are out of reagent in any set of two reagent containers 60. If determined YES in step S503, all measurements and all smear preparations have stopped, as described in the first embodiment.

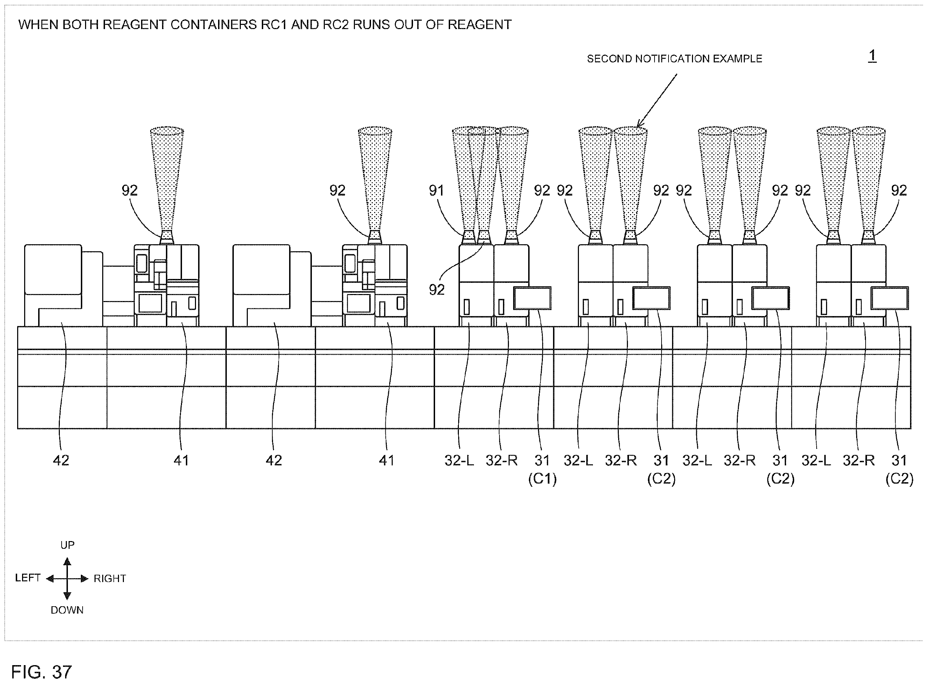

If the controller 501 of control device C1 determines YES in step S503, it controls all warning lights 91 and 92 to light up in a second notification example in step S504. The second notification example is, for example, red lighting. As a result, all warning lights 91 and 92 are lit in the second notification example, as shown in FIG. 37. By referring to the lighting status as shown in FIG. 37, the user may know that measurement and smear preparation have stopped and that the reagent container 60, which is out of reagent, needs to be replaced quickly.

In step S504, together with or instead of controlling the lighting of warning lights 91 and 92, an alarm sound corresponding to the second notification example may be output from the speakers provided in all control devices 31 and all smear preparing device 41, respectively.

If the controller 501 of control device C1 determines NO in both steps S501 and S503, all warning lights 91 and 92 are controlled to be turned off in step S505 because the status of all reagent containers 60 is "with reagent". As a result, all warning lights 91 and 92 are turned off, as shown in FIG. 34.

The first and second notification examples may be other form of notifications as long as the user may distinguish and recognize both forms. For example, the first and second notification examples may be lights of colors other than those listed above, or flashing lights that turn on and off repeatedly at predetermined time intervals. The warning lights 91 and 92 are not limited to warning lights, but may be other devices that emit light. For example, rotating lights or pilot lights may be used instead of warning lights.

In the event that the two sample measurement devices 32-L and 32-R connected to the control device 31 run out of reagent in the staining solution contained inside, the control device 31 may control the lighting of warning lights 92 located on the top surface of the sample measurement devices 32-L and 32-R that have run out of reagent in another notification mode.

### <Effects of the sample measurement system and reagent supply apparatus according to the third embodiment>

In response to the determination from the detection results of the bubble monitoring sensors 231, 232 and the float sensor 201a (first detector) that the reagent container 60 (first reagent container) is out of reagent of the first reagent (step S501: YES in FIG. 35), or that the bubble monitoring sensors 231, 232 and float sensor 201a (second detector) (step S501 of FIG. 35: YES), the controller 501 of control device C1 controls the warning light 91 to turn on in the first notification example as shown in FIG. 36 (step S502 of FIG. 35).

According to this configuration, the user may quickly ascertain that a reagent has run out by referring to the lighting of warning light 91. In addition, since the warning light 91 is lit on the ceiling, the user may quickly know that a reagent has run out even if he or she is at a distance from the location of the sample measurement system 1.

When the controller 501 of control device C1 determines that the reagent of the first reagent has run out in all reagent containers 60 (first reagent containers) (step S503: YES in FIG. 35) or the reagent of the second reagent has run out in all reagent containers 60 (second reagent containers) (step S503 : YES), the process of stopping the measurement operation by the plurality of sample measurement devices 32-L and 32-R is executed (steps S209 and S212 in FIG. 27), and the warning lights 91 and 92 are controlled to turn on in the second notification example as shown in FIG. 37 (step S504 in FIG. 35).

If reagent runs out in all reagent containers 60 of a given type, it will not be possible to perform proper measurements. According to the above configuration, improper measurements may be prevented and the user may quickly understand that the measurement operation has stopped.

### <Fourth embodiment>

In the first embodiment, as shown in FIG. 4, all reagent containers 60 were arranged in the four storages 12. In contrast, in the fourth embodiment, all reagent containers 60 are arranged in the reagent supply apparatus 50. The configuration that differs from the first embodiment will be described below.

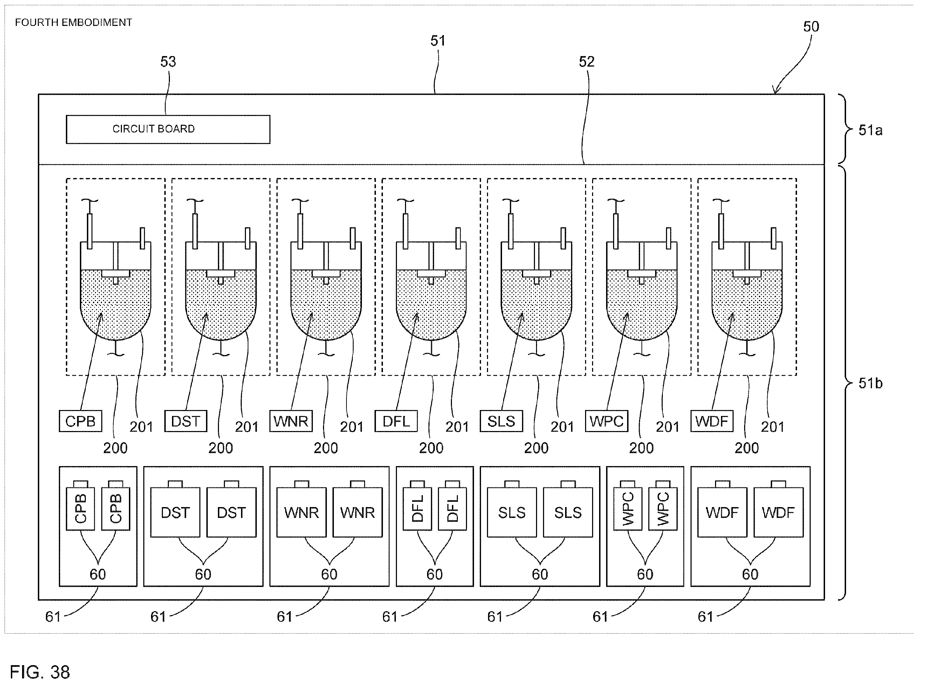

FIG. 38 is a front view of the fourth embodiment, schematically showing the configuration of the reagent supply apparatus 50. In FIG. 38, the inside of the reagent supply apparatus 50 is shown in perspective for convenience.

According to the fourth embodiment, compared to the first embodiment shown in FIG. 6, all reagent containers 60 are located in the lower area 51b of the reagent supply apparatus 50, rather than in the storage 12. In the lower area 51b, seven reagent storages 61 are provided. The seven reagent storages 61 include two reagent containers 60 each containing the DPB reagent, two reagent containers 60 each containing the DST reagent, two reagent containers 60 each containing the WNR reagent, two reagent containers 60 each containing the DFL reagent container 60, two reagent containers 60 containing the SLS reagent, two reagent containers 60 containing the WPC reagent, and two reagent containers 60 containing the WDF reagent.

### <Effects of the sample measurement system and reagent supply apparatus according to the fourth embodiment>

As shown in FIG. 1, the sample measurement system 1 includes a plurality of sample measurement devices 32-L, 32-R, and a reagent supply apparatus 50 that supplies reagents to the plurality of sample measurement devices 32-L, 32-R. As shown in FIG. 38, the reagent supply apparatus 50 includes the reagent storage 61 (first reagent reservoir) that holds a plurality of reagent containers 60 (first reagent containers) in which a first reagent is stored, the reagent storage 61 (second reagent containers) that holds a plurality of reagent containers 60 (second reagent containers) in which a second reagent is stored, a reagent reservoir 201 (first reagent reservoir) that temporarily stores a first reagent, the reagent reservoir 201 (second reagent reservoir) temporarily stores the second reagent, the flow switches 241, 242, 252, and liquid pump 251 (see FIG. 7) (first reagent transfer section) that transfer the first reagent in the plurality of reagent containers 60 (first reagent containers) stored in the reagent reservoir 201 (first reagent reservoir) to the reagent reservoir 201 (first reagent reservoir) respectively, the flow switches 241, 242, 252, and liquid pump 251 (see FIG. 7) (second reagent transfer section) that transfer the second reagent in the plurality of reagent containers 60 (second reagent containers) stored in the reagent reservoir 201 (second reagent reservoir) to the reagent reservoir 201 (second reagent reservoir) respectively. The plurality of sample measurement devices 32-L and 32-R each have a measurement unit 513 that measures samples using a first reagent supplied from the reagent reservoir 201 (first reagent reservoir) of the reagent supply apparatus 50 and a second reagent supplied from the reagent reservoir 201 (second reagent reservoir) (see FIG. 21).

According to this configuration, as in the first embodiment, the user burden of reagent replacement may be reduced in a large-scale facility where a large number of multiple types of reagents are consumed. Furthermore, according to this configuration, since the reagent storage 61 that holds multiple reagent containers 60 is provided in the reagent supply apparatus 50, the distance between the reagent storage 61 and the reagent reservoir 201 may be shortened, so the piping 210 between the reagent containers 60 and the reagent reservoir 201 may be simplified. In addition, because the reagent container 60 is concentrated in the reagent supply apparatus 50, the user may smoothly exchange reagents.

### <Fifth embodiment>

In the first embodiment, as shown in FIG. 1, the reagent supply apparatus 50 is placed in a sample measurement system 1 that includes a plurality of sample measurement devices 32-L and 32-R. In contrast, in the fifth embodiment, the reagent supply apparatus 50 is placed in a sample processing system 2 that includes a plurality of sample processing devices.

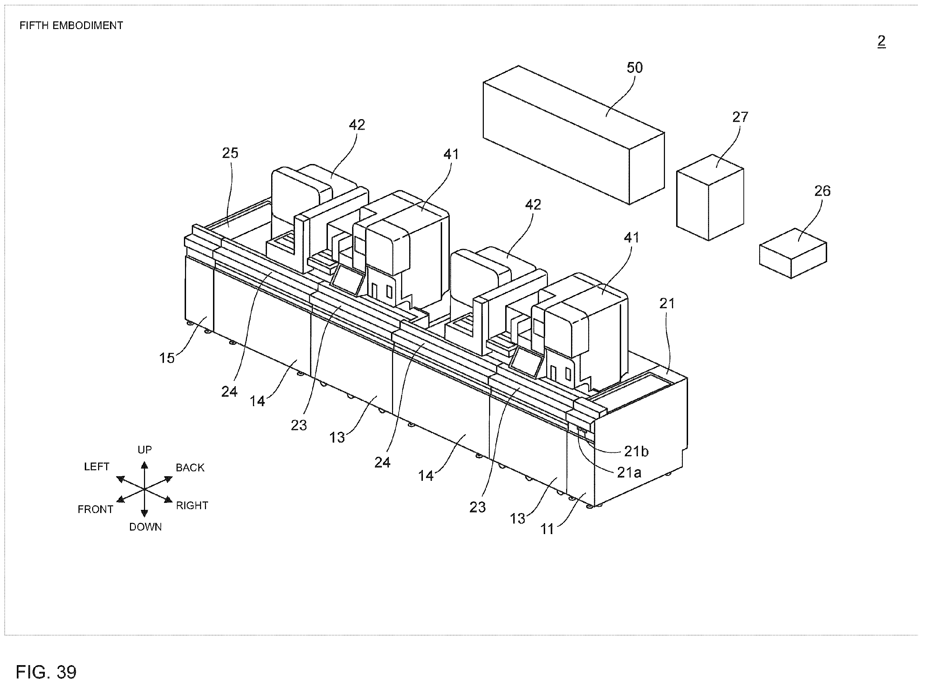

FIG. 39 is a schematic diagram of the fifth embodiment of the sample processing system 2.

Sample processing system 2 includes configuration except for the four storages 12, the four transport devices 22, and the four sample analyzers 30 from the sample measurement system 1 of the first embodiment shown in FIG. 1. The smear preparing device 41 included in the sample processing system 2 are sample processing apparatuses for processing samples. The sample processing apparatuses included in sample processing system 2 are not limited to smear preparing device 41.

The reagent supply apparatus 50 of the fifth embodiment is communicatively connected to one of the two smear preparing device 41 based on the USB standard. The control and display processes of the reagent supply apparatus 50 performed in the first embodiment are performed by the controller 521 of the smear preparing device 41 to which the reagent supply apparatus 50 is connected.

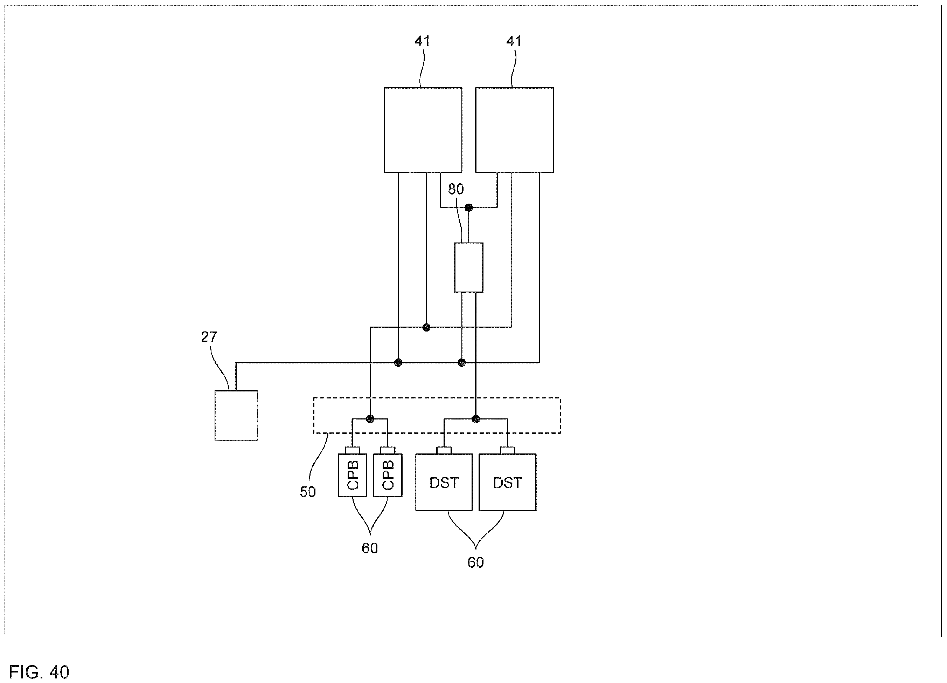

FIG. 40 is a fluid circuit diagram schematically showing the transfer paths of reagents and pure water according to the fifth embodiment.

In the fifth embodiment, compared to the first embodiment shown in FIG. 5, there are eight sample measurement devices 32-L, 32-R, a relay device 70 connected to the eight sample measurement devices 32-L, 32-R, dilution device 80 connected to four sets of 32-L, 32-R, two reagent containers 60 containing the WNR reagent, two reagent containers 60 containing the DFL reagent, two reagent containers 60 containing the SLS reagent, two reagent containers 60 containing the WPC reagent, and two reagent containers 60 containing the WDF reagents are omitted. Two reagent containers 60 containing the DPB reagent s and two reagent containers 60 containing the DST reagents are stored in two storages 13 (see FIG. 39).

### <Effects of the sample measurement system and reagent supply apparatus according to the fifth embodiment>

Sample processing system 2 includes a plurality of smear preparing device 41 (sample processing apparatus) and a reagent supply apparatus 50. The plurality of smear preparing device 41 (sample processing apparatus) prepare smears of samples as sample processing using the DPB reagent (first reagent) and the DST reagent (second reagent) of a different type from The DPB reagent (first reagent).

The reagent supply apparatus 50 include the reagent reservoir 201 (first reagent reservoir) stores the DST reagent (first reagent) transferred via the piping 210 (first piping) connected to each of the plurality of reagent containers 60 (first reagent containers) in which the DST reagent (first reagent) is contained, the reagent reservoir 201 (second reagent reservoir) stores the DST reagent (second reagent) transferred via the piping 210 (second piping) connected to each of the plurality of reagent containers 60 (second reagent containers) in which the DST reagent (second reagent) is contained. The DST reagent (first reagent) stored in the reagent reservoir 201 (first reagent reservoir) is supplied to each of the multiple smear preparation devices 41 (sample processing devices).

This configuration may also reduce the user's monitoring burden for reagent replacement and the frequency of reagent replacement. Thus, the user's burden of reagent replacement may be reduced in large-scale facilities that consume large quantities of multiple types of reagents.

### <Example of modification>

In the first through fifth embodiments, two reagent containers 60 containing the same type of reagent were placed, but three or more may be placed. This may reduce the user's monitoring burden for reagent replacement and the frequency of reagent replacement.

In the first through fourth embodiments, as shown in FIG. 1, the reagent supply apparatus 50, the pure water device 27, and the transport controller 26 were located rearwardly away from the configuration of the sample measurement system 1 other than these apparatuses, but they may be located integrally with the configuration of the sample measurement system 1 other than these apparatuses. Similarly, in the fifth embodiment above, as shown in FIG. 39, the reagent supply apparatus 50, the pure water device 27, and the transport controller 26 were located rearwardly away from the configurations of the sample processing system 2 other than these devices, but they may be located integrally with the configurations of the sample processing system 2 other than these devices.

According to the first through fourth embodiments, if a reagent ran out in both of the two paired reagent containers 60 in any reagent, the measurement of all sample measurement devices 32-L and 32-R and the preparation of smears in all smear preparing device 41 were stopped. However, not only this, but even in the above cases, all apparatuses may not be stopped, but only those that perform measurements and smear preparing device using reagents that has run-out may be stopped. For example, if the reagent runs out in the two reagent containers 60 corresponding to the DPB reagent, measurements by the eight sample measurement devices 32-L and 32-R may not be stopped, and only the two smear preparing devices 41 may be stopped.

According to the first to fourth embodiments, the reagent supply apparatus 50 was connected to the control device C1 included in one of the four sample analyzers 30, and control and display processing related to the reagent supply apparatus 50 was performed by the control device C1. In other words, control device C1 was used for both control and display processing related to reagent supply apparatus 50. However, not limited to this, control and display processing related to the reagent supply apparatus 50 may be performed by other control devices separately provided in the sample processing system 1. Similarly, in the fifth embodiment, control and display processing related to the reagent supply apparatus 50 may be performed by other control devices separately installed in the sample processing system 2.

According to the first to fifth embodiments, the presence or absence of reagent through the flow paths 211 and 212 was detected by the bubble monitoring sensors 231 and 232, but not limited to this, and may be detected by other detectors such as flow sensors. Whether or not the reagent stored in the reagent reservoir 201 is full was detected by the float sensor 201a, but may be detected by other detectors, such as a camera that images the liquid level in the reagent reservoir 201. Similarly, whether the reagent stored in the reagent reservoir 301 is full or not was detected by the float sensor 301a, but not limited to this, and may be detected by other detectors, such as a camera that takes images of the liquid level in the reagent reservoir 301.

According to the first to fifth embodiments, a float sensor for detecting the amount of reagent in the reagent container 60 may be installed in the reagent container 60 in advance. In this case, the float sensor installed in each reagent container 60 is connected to the control device C1 or the reagent supply apparatus 50. This may allow the amount of reagent in each reagent container 60 to be accurately detected. However, it may be preferred that the float sensors are not installed in the reagent containers 60, as in the first to fifth embodiments. In this case, since electrical circuits are not installed in the reagent containers 60, which are external components of the sample measurement system 1 and the sample processing system 2, the configuration of the reagent containers 60 may be simplified, the labor to connect the float sensors in the reagent containers 60 may be omitted, and the circuit configuration of the sample measurement system 1 and the sample processing system 2 may be simplified.

In the storage operation of the first to fifth embodiments, the liquid pump 251 may transfer the reagent to a predetermined area of the piping 210 after repeatedly performing the suctioning and draining operations to store the reagent in that predetermined area. This may ensure that the reagent is stored in the predetermined area.

According to the first to fourth embodiments, one sample analyzer 30 was equipped with two sample measurement devices 32-L and 32-R, but may be equipped with one or three or more sample measurement devices. The sample analysis system 1 was equipped with four sample analyzers 30, but may be equipped with one to three or five or more sample analyzers 30. According to the first to fifth embodiments, the sample measurement system 1 and the sample processing system 2 were each equipped with two smear preparing device 41, but may be equipped with one or three or more smear preparing device 41.

The embodiments of the invention may be modified in various ways as appropriate within the scope of the technical ideas indicated in the claims.

As a supplementary note, a sample measuring apparatus, an information reading apparatus, and an information reading method are summarized.

A sample measurement system comprising:
sample measurement devices for measuring samples using a first reagent and a second reagent that is different type from the first reagent; and
a reagent supply apparatus comprising:
   a first piping connected to each of reagent containers of a first reagent container group;
   a first reagent reservoir for storing the first reagent transferred through the first piping;
   a second piping connected to each of reagent containers of a second reagent container group; and
   a second reagent reservoir for storing the second reagent transferred through the second piping, wherein
the first reagent stored in the first reagent reservoir is supplied to each of the sample measurement devices, and
the second reagent stored in the second reagent reservoir is supplied to each of the sample measurement devices.

In the sample measurement system, the system further comprises:
a first reagent transfer section for transferring each of the first reagent contained in a reagent container of the first reagent container group to the first reagent reservoir through the first piping; and
a second reagent transfer section for transferring each of the second reagent contained in a reagent container of the second reagent container group to the second reagent reservoir through the second piping.

In the sample measurement system, the first reagent transfer section comprises:
a first flow switch for switching a flow path of the first piping from a first reagent container of the first reagent container group to a second reagent container of the first reagent container group; and
a first pumping section for pumping the first reagent into the flow path of the first piping switched by the first flow switch;
   the second reagent transfer section comprises:
   a second flow switch for switching a flow path of the second piping from a first reagent container of the second reagent container group to a second reagent container of the second reagent container group; and
   a second pumping section for pumping a second reagent into the flow path of the second piping switched by the second flow switch.

In the sample measurement system, the system further comprises:
a first detector for detecting a supply status of the first reagent contained in the reagent container of the first reagent container group;
a second detector for detecting a supply status of the second reagent contained in the reagent container of the second reagent container group; and
a controller for performing operations comprising:
   controlling the first reagent transfer section to switch the flow path of the first piping from a first reagent container of the first reagent container group to a second reagent container of the first reagent container group based on a first detection result of the first detector,
   controlling the second reagent transfer section to switch the flow path of the second piping from a first reagent container of the second reagent container group to a second reagent container of the second reagent container group based on a second detection result of the second detector.

In the sample measurement system, the controller performs operations comprising:
causing the first reagent transfer section to transfer the first reagent through the flow path of the first piping switched by the first flow switch based on the first detection result; and
causing the second reagent transfer section to transfer the second reagent through the flow path of the second piping switched by the second flow switch based on the second detection result.

In the sample measurement system, the first detector is arranged in the first reagent reservoir and the second detector is arranged in the second reagent reservoir.

In the sample measurement system, the first detector is arranged in the first piping, and the second detector is arranged in the second piping.

In the sample measurement system, the first piping comprises first flow paths,
the second piping comprises second flow paths, and
the sample measurement system further comprises a controller for performing operations comprising:
   causing the first reagent transfer section to transfer the first reagent so the first reagent is stored in the first flow paths that are used to transfer the first reagent from a first reagent container of the first reagent container group that is empty and is not used to transfer the first reagent from a second reagent container of the first reagent container group that is not empty, and
   causing the second reagent transfer section to transfer the second reagent so that the second reagent is stored in the second flow paths that are used to transfer the second reagent from a second reagent container of the second reagent container group that is empty and is not used to transfer the second reagent from a second reagent container of the second reagent container group that is not empty.

In the sample measurement system, the causing the first reagent transfer section comprises causing the first reagent transfer section to transfer the first reagent from the second reagent container of the first reagent container group to the first reagent container of the first reagent container group, and
the causing the second reagent transfer section comprises causing the second reagent transfer section to transfer the second reagent from the second reagent container of the second reagent container group to the first reagent container of the second reagent container group.

In the sample measurement system, the controller performs operations comprising:
storing the first reagent at least one of end and startup of the sample measurement system; and
storing the second reagent at least one of end and startup of the sample measurement system.

In the sample measurement system, the system further comprises:
a first detector for detecting a reagent run out of reagent containers of the first reagent container group; and
a second detector for detecting a reagent run out of reagent containers of the second reagent container group, wherein
the controller performs operations comprising:
   storing the first reagent in response to determining from a detection result of the first detector that the first reagent container of the first reagent container group is out of reagent, and
   storing the second reagent in response to determining from a detection result of the second detector that the first reagent container of the second reagent container group is out of reagent.

In the sample measurement system, after determining from the detection result of the first detector that the first reagent container of the first reagent container group is out of reagent, the controller performs operations comprising storing the first reagent before reporting that the first reagent container of the first reagent container group is out of reagent, and
after determining from the detection result of the second detector that the first reagent container of the second reagent container group is run out of reagent, the controller performs operations comprising storing the second reagent reporting that the first reagent container of the second reagent container group is run out of reagent.

In the sample measurement system, the reagent supply apparatus further comprises a third reagent reservoir, wherein a third reagent is transferred through a third piping connected to a plurality of third reagent containers, each of which contains a third reagent of a different type than the first reagent and the second reagent, wherein

the third reagent stored in the third reagent reservoir is supplied to each of the sample measurement devices.

In the sample measurement system, the system further comprises:
a smear preparing device for preparing a smear of a sample, wherein
each of the sample measurement devices comprises a blood cell measurement device for measures a blood cell component in the sample,
the blood cell measurement device measures blood cell components in the sample using each of the first and second reagents, and the smear preparing device uses the third reagent to prepare a smear of the sample.

In the sample measurement system, the system further comprises:
a smear preparing device for preparing a smear of a sample; and
a transport device for transporting a rack capable of holding a plurality of sample containers containing samples, wherein
   the transport device transports the racks to each of the sample measurement devices and the smear preparing device.

In the sample measurement system, the system further comprises:
a first detector for detecting a reagent run out for each of the reagent containers of the first reagent container group;
a second detector for detecting a reagent run out for each of the reagent containers of the second reagent container group;
a display; and
a controller for performing operations comprising:
   in response to determining that a reagent container of the first reagent container group runs out of reagent from a detection result of the first detector, causing the display to show information indicating that the reagent container of the first reagent container group runs out of reagent, and
   in response to determining that a reagent container of the second reagent container group runs out of reagent from a detection result of the second detector, causing the display to show information indicating that the second reagent container runs out of reagent.

In the sample measurement system, the controller performs operations comprising:
stopping measurement operation of the sample measurement devices in response to determining that the reagent runs out in all of the reagent containers of the first reagent container group or all of the reagent container of the second reagent container group; and
causing the display to display information indicating that the measurement operation is stopped.

In the sample measurement system, the display comprises a plurality of display devices; and
the controller causes one of the display devices to display information indicating that the reagent runs out.

In the sample measurement system, the system further comprises:
a first detector for detecting reagent run out for each of the reagent containers of the first reagent container group;
a second detector for detecting reagent run out for each of the reagent containers of the second reagent container group;
a warning light; and,
a controller for performing operations comprising turning on the warning light in a first notification manner in response to determining that a reagent container of the first reagent container group runs out of reagent based on a detection result of the first detector, or the determination that the second reagent container runs out of reagent based on a detection result of the second detector.

In the sample measurement system, the controller performs operations comprising:
stopping measurement operation by the sample measurement devices in response to determining that the reagent runs out all of the reagent containers of the first reagent container group, or all of the reagent container of the second reagent container group; and
turning on the warning light in a second notification manner.

In the sample measurement system, the system further comprises:
a chassis comprising:
   an upper area; and
   a lower area that is divided from the upper area by a partition member,
wherein,
   the upper area stores a substrate comprising an electrical circuit, and the lower area stores the first piping, the first reagent reservoir, the second piping, the second reagent reservoir, the first detector, and the second detector.

A sample measurement system comprising:
a sample measurement device for measuring a sample using a reagent;
a piping comprising flow paths, connected to each of reagent containers in which the reagent is contained;
a reagent reservoir for storing the reagent transferred through the piping and contained in each of the reagent containers; and
a reagent transfer section for transferring the reagent to store the reagent in a flow path of the flow paths that is used for transferring used for transferring the reagent from an empty reagent container and is not used for transferring the reagent from a reagent container that is not empty, wherein
the reagent stored in the reagent reservoir is supplied to the sample measurement device.

A reagent supply apparatus comprising:
a first piping connected to each of reagent containers of a first reagent container group in which the first reagent is contained;
a first reagent reservoir for storing the first reagent transferred through the first piping and stored in each of the reagent containers of the first reagent container group;
a second piping connected to each of reagent containers of a second reagent container group in which a second reagent that is different type from the first reagent is contained; and
a second reagent reservoir for storing the second reagent transferred through the second piping and stored in each of the reagent containers of the second reagent container group, wherein
the first reagent stored in the first reagent reservoir is supplied to each of sample measurement devices, and
the second reagent stored in the second reagent reservoir is supplied to each of the sample measurement devices.

In the reagent supply apparatus, the apparatus further comprises:
a first reagent transfer section for transferring each of the first reagent contained in the reagent containers of the first reagent container group to the first reagent reservoir through the first piping; and
a second reagent transfer section for transferring each of the second reagent contained in the reagent containers of the second reagent container group to the second reagent reservoir through the second piping.

In the reagent supply apparatus, the first reagent transfer section comprises:
a first flow switch for switching a flow path of the first piping from a first reagent container of the first reagent container group to a second reagent container of the first reagent container group; and
a first pumping section for pumping a first reagent into the flow path of the first piping switched by the first flow switch;
   the second reagent transfer section comprises:
   a second flow switch for switching the flow path of the second piping from a first reagent container of the second reagent container group to a second reagent container of the second reagent container group; and
   a second pumping section for pumping the second reagent into the flow path of the second piping switched by the second flow switch.

In the reagent supply apparatus, the apparatus further comprises:
a first detector for detecting supply status of the first reagent contained in each of the reagent containers of the first reagent container group; and
a second detector for detecting supply status of the second reagent contained in each of the reagent containers of the second reagent container group, wherein
based on a first detection result of the first detector, the first reagent transfer section switches the flow path of the first piping from a first reagent container of the first reagent container group to a second reagent container of the first reagent container group,
based on a second detection result of the second detector, the second reagent transfer section switches the flow path of the second piping from a first reagent container of the second reagent container group to a second reagent container of the second reagent container group.

In the reagent supply apparatus, based on the first detection result, the first reagent transfer section transfers the first reagent through the flow path of the first piping switched by the first flow switch,
based on the second detection result, the second reagent transfer section transfers the second reagent through the flow path of the second piping switched by the second flow switch.

In the reagent supply apparatus, the first detector is arranged in the first reagent reservoir, and
the second detector is arranged in the second reagent reservoir.

In the reagent supply apparatus, the first detector is arranged in the first piping, and
the second detector is arranged in the second piping.

In the reagent supply apparatus, the first piping comprises first flow paths,
the second piping comprises second flow paths, wherein
the first reagent transfer section transfers the first reagent to store the first reagent in the first flow paths that are used to transfer the first reagent from a first reagent container of the first reagent container group that is empty and is not used to transfer the first reagent from a second reagent container of the first reagent container that is not empty, and
the second reagent transfer section transfers the second reagent to store the second reagent in the second flow paths that are used to transfer the second reagent from a first reagent container of the second reagent container group that is empty and is not used to transfer the second reagent from a second reagent container of the second reagent container group that is not empty.

In the reagent supply apparatus, the first reagent transfer section transfers the first reagent from a non-empty reagent container of the first reagent container group to an empty reagent container of the first reagent container group, and
the second reagent transfer section transfers the second reagent from a non-empty reagent container of the second reagent container group to an empty reagent container of the second reagent container.

In the reagent supply apparatus, the reagent supply apparatus performs operations comprising:
storing the first reagent at least at one of a termination and startup of the reagent supply apparatus; and
storing the second reagent at least at one of the termination and startup of the reagent supply apparatus.

In the reagent supply apparatus, the apparatus further comprises:
a first detector for detecting reagent run out of each of the reagent containers of the first reagent container group; and
a second detector for detecting reagent run out of each of the reagent containers of the second reagent container group, wherein the reagent supply apparatus performs operations comprising:
   storing the first reagent in response to determining that a reagent container of the first reagent container group is out of reagent based on a detection result of the first detector, and
   storing the second reagent in response to determining that the second reagent container is out of reagent based on a detection result of the second detector.

In the reagent supply apparatus, the apparatus further comprises:
a third reagent container group comprising reagent containers in which a third reagent is contained;
a third piping connected to each of reagent containers of a third reagent container group in which the third reagent that is different type from the first and second reagents is contained; and
a third reagent reservoir for storing the third reagent transferred through the third piping and contained in each of the reagent containers of the third reagent container group, wherein
the third reagent stored in the third reagent reservoir is supplied to each of the sample measurement devices.

In the reagent supply apparatus,
the first reagent and the second reagent each comprises reagent used in a blood cell measurement device for measuring a blood cell component in a sample,
the third reagent comprises reagent used in a smear preparing device for preparing smears of the sample.

In the reagent supply apparatus, the apparatus further comprises a chassis comprising:
an upper area; and
a lower area that is divided from the upper area by a partition member, wherein
the upper area stores a substrate containing an electrical circuit, and the lower area stores the first piping, the first reagent reservoir, the second piping, the second reagent reservoir, the first detector, and the second detector.

A reagent supply apparatus comprising:
a piping comprising flow paths, connected to each of reagent containers in which a reagent is contained;
a reagent reservoir for storing the reagent transferred through the piping and contained in each of the reagent containers; and
a reagent transfer section for transferring the reagent to store the reagent in a flow path of the flow paths that is used to transfer the reagent from a first reagent container of the reagent containers that is empty and is not used to transfer the reagent from a reagent container of the reagent containers that is not empty, wherein
the reagent stored in the reagent reservoir is supplied to a sample measurement device.

A sample measurement system comprising:
sample measurement devices; and
a reagent supply apparatus that supplies reagent to sample measurement devices, comprising:
   a first reagent storage that stores first reagent containers in which a first reagent is stored;
   a second reagent storage that stores first reagent containers in which a first reagent is stored;
   a first reagent reservoir that temporarily stores the first reagent;
   a second reagent reservoir that temporarily stores the second reagent,
   a first reagent transfer section that transfers the first reagent in the first reagent containers stored in the first reagent storage to the first reagent reservoir, respectively;
   a second reagent transfer section that transfers the second reagent in the second reagent containers stored in the second reagent storage to the second reagent reservoir, respectively, wherein
   the sample measurement devices each comprises a measurement unit that measures samples using the first reagent supplied from the first reagent reservoir of the reagent supply apparatus and the second reagent supplied from the second reagent reservoir of the reagent supply apparatus.
   In the sample measurement system,
   the first reagent transfer section comprises:
      a first flow switch that switches the flow path of the first piping from a first reagent container of the first reagent container to another first reagent container; and
      a first pumping section that pumps the first reagent into the flow path of the first piping that is switched by the first flow switch; and
   the second reagent transfer section comprises:
      a second flow switch that switches the flow path of the second piping from one of the second reagent container to another second reagent container, and
      a second pumping section that pumps the second reagent into the flow path of the second piping that is switched by the second flow switch.

In the sample measurement system, the reagent supply apparatus comprises:
a first detection unit that detects the supply status of the first reagent contained in each of the first reagent containers,
a second detecting unit that detects the supply state of the second reagent contained in each of the second reagent containers,
the sample measurement system further comprises a control unit that performs operations comprising:
controlling the first reagent transfer unit to switch the flow path of the first piping from one of the first reagent container to another first reagent container based on the first detection result of the first detection unit; and
controlling the second reagent transfer unit to switch the flow path of the second piping from one of the second reagent container to another second reagent container based on the second detection result of the second detection unit.

In the sample measurement system, the control unit controls the first reagent transfer section to transfer the first reagent through the flow path of the first piping switched by the first flow switch based on the first detection result, and
the control unit controls the second reagent transfer section to transfer the second reagent through the flow path of the second piping switched by the second flow switch based on the second detection result.

In the sample measurement system, the first detector is arranged in the first reagent reservoir and the second detector is arranged in the second reagent reservoir.

In the sample measurement system, the first detector is arranged in the first piping, and the second detector is arranged in the second piping.

In the sample measurement system, the first piping comprises first flow paths,
the second piping comprises second flow paths, and
the sample measurement system further comprises a controller that performs operations comprising:
   causing the first reagent transfer section to transfer the first reagent so that the first reagent is stored in the first flow paths that are used to transfer the first reagent from a first reagent container of the first reagent container group that is empty and is not used to transfer the first reagent from a second reagent container of the first reagent container group that is not empty, and
   causing the second reagent transfer section to transfer the second reagent so that the second reagent is stored in the second flow paths that are used to transfer the second reagent from a second reagent container of the second reagent container group that is empty and is not used to transfer the second reagent from a second reagent container of the second reagent container group that is not empty.

In the sample measurement system, the causing the first reagent transfer section comprises causing the first reagent transfer section to transfer the first reagent from the second reagent container of the first reagent container group to the first reagent container of the first reagent container group, and
the causing the second reagent transfer section comprises causing the second reagent transfer section to transfer the second reagent from the second reagent container of the second reagent container group to the first reagent container of the second reagent container group.

In the sample measurement system, the controller performs operations comprising:
storing the first reagent at least one of end and startup of the sample measurement system; and
storing the second reagent at least one of end and startup of the sample measurement system.

In the sample measurement system, the system further comprises:
a first detector that detects a reagent run out of reagent containers of the first reagent container group; and
a second detector that detects a reagent run out of reagent containers of the second reagent container group, wherein
the controller performs operations comprising:
   storing the first reagent in response to determining from a detection result of the first detector that the first reagent container of the first reagent container group is out of reagent, and
   storing the second reagent in response to determining from a detection result of the second detector that the first reagent container of the second reagent container group is out of reagent.

In the sample measurement system, after determining from the detection result of the first detector that the first reagent container of the first reagent container group is out of reagent, the controller performs operations comprising storing the first reagent before reporting that the first reagent container of the first reagent container group is out of reagent, and
after determining from the detection result of the second detector that the first reagent container of the second reagent container group is run out of reagent, the controller performs operations comprising storing the second reagent reporting that the first reagent container of the second reagent container group is run out of reagent.

In the sample measurement system, the reagent supply apparatus further comprises a third reagent reservoir, wherein a third reagent is transferred through a third piping connected to a plurality of third reagent containers, each of which contains a third reagent of a different type than the first reagent and the second reagent, wherein
the third reagent stored in the third reagent reservoir is supplied to each of sample measurement devices.

In the sample measurement system, the system further comprises:
a smear preparing device that prepares a smear of a sample, wherein
each of the sample measurement devices comprises a blood cell measurement device that measures blood cell components in the sample,
the blood cell measurement device measures a blood cell component in the sample using each of the first and second reagents, and the smear preparing device uses the third reagent to prepare a smear of the sample.

In the sample measurement system, the system further comprises:
a smear preparing device that prepares a smear of a sample; and
a transport device that transports a rack capable of holding a plurality of sample containers containing samples, wherein
   the transport device transports the racks to each of the sample measurement devices and the smear preparing device.

In the sample measurement system, the system further comprises:
a first detector that detects a reagent run out for each of the reagent containers of the first reagent container group;
a second detector that detects a reagent run out for each of the reagent containers of the second reagent container group;
a display; and
a controller that performs operations comprising:
   in response to determining that a reagent container of the first reagent container group runs out of reagent from a detection result of the first detector, causing the display to show information indicating that the reagent container of the first reagent container group runs out of reagent, and
   in response to determining that a reagent container of the second reagent container group runs out of reagent from a detection result of the second detector, causing the display to show information indicating that the second reagent container runs out of reagent.

In the sample measurement system, the controller performs operations comprising:
stopping measurement operation of the sample measurement devices in response to determining that the reagent runs out in all of the reagent containers of the first reagent container group or all of the reagent container of the second reagent container group; and
causing the display to display information indicating that the measurement operation is stopped.

In the sample measurement system, the display comprises a plurality of display devices; and
the controller causes one of the display devices to display information indicating that the reagent runs out.

In the sample measurement system, the system further comprises:
a first detector that detects reagent run out for each of the reagent containers of the first reagent container group;
a second detector that detects reagent run out for each of the reagent containers of the second reagent container group;
a warning light; and
a controller that performs operations comprising turning on the warning light in a first notification manner in response to determining that a reagent container of the first reagent container group runs out of reagent based on a detection result of the first detector, or the determination that the second reagent container runs out of reagent based on a detection result of the second detector.

In the sample measurement system, the controller performs operations comprising:
stopping measurement operation by the sample measurement devices in response to determining that the reagent runs out all of the reagent containers of the first reagent container group, or all of the reagent container of the second reagent container group; and
turning on the warning light in a second notification manner.

In the sample measurement system, the system further comprises:
a chassis comprising:
an upper area; and
a lower area that is divided from the upper area by a partition member, wherein,
the upper area stores a substrate comprising an electrical circuit, and the lower area stores the first piping, the first reagent reservoir, the second piping, the second reagent reservoir, the first detector, and the second detector.

A reagent supply apparatus comprising:
a first reagent storage that stores first reagent containers in which a first reagent is stored;
a second reagent storage that stores first reagent containers in which a first reagent is stored;
a first reagent reservoir that temporarily stores the first reagent;
a second reagent reservoir that temporarily stores the second reagent,
a first reagent transfer section that transfers the first reagent in the first reagent containers stored in the first reagent storage to the first reagent reservoir, respectively;
a second reagent transfer section that transfers the second reagent in the second reagent containers stored in the second reagent storage to the second reagent reservoir, respectively, wherein
the sample measurement devices each comprises a measurement unit that measures samples using the first reagent supplied from the first reagent reservoir of the reagent supply apparatus and the second reagent supplied from the second reagent reservoir of the reagent supply apparatus.

A sample measurement system comprising:
sample processing devices that process a sample using a first reagent and a second reagent that is different type from the first reagent; and
a reagent supply apparatus comprising:
   a first piping connected to each of reagent containers contained the first reagent;
   a first reagent reservoir that stores the first reagent transferred through the first piping;
   a second piping connected to each of reagent containers contained the second reagent; and
   a second reagent reservoir that stores the second reagent transferred through the second piping, wherein
the first reagent stored in the first reagent reservoir is supplied to the sample measurement devices, and
the second reagent stored in the second reagent reservoir is supplied to the sample measurement devices.

### Description of Signs

1 Sample measurement system
2 Sample processing system
22, 23 Transport device
31b Input display
32-L, 32-R Sample measurement device (blood cell measurement device)
41 Smear preparing device (sample processing device)
50 Reagent supply apparatus
51 Chassis
51a Upper area
51b Lower area
52 Partition member
53 Circuit boards (circuit boards)
60 Reagent containers (1st reagent container, 2nd reagent container, 3rd reagent container)
61 Reagent storage (1st reagent storage, 2nd reagent storage)
91, 92 Warning lights
100 Racks
110 Sample container
201 Reagent reservoir (1st reagent reservoir, 2nd reagent reservoir, 3rd reagent reservoir)
201a Float sensor (first and second detector)
210 Piping (Piping 1, Piping 2, Piping 3)
211, 212, 213, 214, 215 Flow paths (first and second flow paths)
216, 217, 218, 214a, 214b Flow paths (first and second flow paths)
231, 232 Bubble monitoring sensor (first and second detector)
241, 242, 252, 253 Flow switch (first reagent transfer section, second reagent transfer section, reagent transfer section, first flow switch, second flow switch)
251 Liquid pump (first reagent transfer section, second reagent transfer section, reagent transfer section, first liquid pump, second liquid pump)
501 Controller
513 Measurement unit
521 Controller
523 Input display

## Claims

1. A sample measurement system comprising:
sample measurement devices for measuring samples using a first reagent and a second reagent that is different type from the first reagent; and
a reagent supply apparatus comprising:
a first piping connected to each of reagent containers of a first reagent container group;
a first reagent reservoir for storing the first reagent transferred through the first piping;
a second piping connected to each of reagent containers of a second reagent container group; and
a second reagent reservoir for storing the second reagent transferred through the second piping, wherein
the first reagent stored in the first reagent reservoir is supplied to each of the sample measurement devices, and
the second reagent stored in the second reagent reservoir is supplied to each of the sample measurement devices.

2. The sample measurement system according to claim 1, further comprising:
a first reagent transfer section for transferring each of the first reagent contained in a reagent container of the first reagent container group to the first reagent reservoir through the first piping; and
a second reagent transfer section for transferring each of the second reagent contained in a reagent container of the second reagent container group to the second reagent reservoir through the second piping.

3. The sample measurement system according to claim 2, wherein
the first reagent transfer section comprises:
a first flow switch for switching a flow path of the first piping from a first reagent container of the first reagent container group to a second reagent container of the first reagent container group; and
a first pumping section for pumping the first reagent into the flow path of the first piping switched by the first flow switch;
the second reagent transfer section comprises:
a second flow switch for switching a flow path of the second piping from a first reagent container of the second reagent container group to a second reagent container of the second reagent container group; and
a second pumping section for pumping a second reagent into the flow path of the second piping switched by the second flow switch.

4. The sample measurement system according to claim 3, further comprising:
a first detector for detecting a supply status of the first reagent contained in the reagent container of the first reagent container group;
a second detector for detecting a supply status of the second reagent contained in the reagent container of the second reagent container group; and
a controller for performing operations comprising:
controlling the first reagent transfer section to switch the flow path of the first piping from a first reagent container of the first reagent container group to a second reagent container of the first reagent container group based on a first detection result of the first detector,
controlling the second reagent transfer section to switch the flow path of the second piping from a first reagent container of the second reagent container group to a second reagent container of the second reagent container group based on a second detection result of the second detector.

5. The sample measurement system according to claim 4, wherein
the controller performs operations comprising:
causing the first reagent transfer section to transfer the first reagent through the flow path of the first piping switched by the first flow switch based on the first detection result; and
causing the second reagent transfer section to transfer the second reagent through the flow path of the second piping switched by the second flow switch based on the second detection result.

6. The sample measurement system according to claim 4, wherein
the first detector is arranged in the first reagent reservoir and the second detector is arranged in the second reagent reservoir.

7. The sample measurement system according to claim 4, wherein
the first detector is arranged in the first piping, and the second detector is arranged in the second piping.

8. The sample measurement system according to claim 2, wherein
the first piping comprises first flow paths,
the second piping comprises second flow paths, and
the sample measurement system further comprises a controller for performing operations comprising:
causing the first reagent transfer section to transfer the first reagent so the first reagent is stored in the first flow paths that are used to transfer the first reagent from a first reagent container of the first reagent container group that is empty and is not used to transfer the first reagent from a second reagent container of the first reagent container group that is not empty, and
causing the second reagent transfer section to transfer the second reagent so that the second reagent is stored in the second flow paths that are used to transfer the second reagent from a second reagent container of the second reagent container group that is empty and is not used to transfer the second reagent from a second reagent container of the second reagent container group that is not empty.

9. The sample measurement system according to claim 8, wherein
the causing the first reagent transfer section comprises causing the first reagent transfer section to transfer the first reagent from the second reagent container of the first reagent container group to the first reagent container of the first reagent container group, and
the causing the second reagent transfer section comprises causing the second reagent transfer section to transfer the second reagent from the second reagent container of the second reagent container group to the first reagent container of the second reagent container group.

10. The sample measurement system according to claim 8, wherein
the controller performs operations comprising:
storing the first reagent at least one of end and startup of the sample measurement system; and
storing the second reagent at least one of end and startup of the sample measurement system.

11. The sample measurement system according to claim 8, further comprising:
a first detector for detecting a reagent run out of reagent containers of the first reagent container group; and
a second detector for detecting a reagent run out of reagent containers of the second reagent container group, wherein
the controller performs operations comprising:
storing the first reagent in response to determining from a detection result of the first detector that the first reagent container of the first reagent container group is out of reagent, and
storing the second reagent in response to determining from a detection result of the second detector that the first reagent container of the second reagent container group is out of reagent.

12. The sample measurement system according to claim 11, wherein
after determining from the detection result of the first detector that the first reagent container of the first reagent container group is out of reagent, the controller performs operations comprising storing the first reagent before reporting that the first reagent container of the first reagent container group is out of reagent, and
after determining from the detection result of the second detector that the first reagent container of the second reagent container group is run out of reagent, the controller performs operations comprising storing the second reagent reporting that the first reagent container of the second reagent container group is run out of reagent.

13. The sample measurement system according to claim 1, wherein
the reagent supply apparatus further comprises a third reagent reservoir,
wherein a third reagent is transferred through a third piping connected to a plurality of third reagent containers, each of which contains a third reagent of a different type than the first reagent and the second reagent, wherein
the third reagent stored in the third reagent reservoir is supplied to each of the sample measurement devices.

14. The sample measurement system according to claim 13, further comprising:
a smear preparing device for preparing a smear of a sample, wherein
each of the sample measurement devices comprises a blood cell measurement device for measures a blood cell component in the sample,
the blood cell measurement device measures blood cell components in the sample using each of the first and second reagents, and the smear preparing device uses the third reagent to prepare a smear of the sample.

15. A reagent supply apparatus comprising:
a first piping connected to each of reagent containers of a first reagent container group in which the first reagent is contained;
a first reagent reservoir for storing the first reagent transferred through the first piping and stored in each of the reagent containers of the first reagent container group;
a second piping connected to each of reagent containers of a second reagent container group in which a second reagent that is different type from the first reagent is contained; and
a second reagent reservoir for storing the second reagent transferred through the second piping and stored in each of the reagent containers of the second reagent container group, wherein
the first reagent stored in the first reagent reservoir is supplied to each of sample measurement devices, and
the second reagent stored in the second reagent reservoir is supplied to each of the sample measurement devices.
